(19) **Europäisches Patentamt**
**European Patent Office**
**Office européen des brevets**

(11) **EP 4 599 655 A1**

(12) **EUROPEAN PATENT APPLICATION**
published in accordance with Art. 153(4) EPC

(43) Date of publication:
**13.08.2025 Bulletin 2025/33**

(21) Application number: **23885747.8**

(22) Date of filing: **31.10.2023**

(51) International Patent Classification (IPC):
**A01B 69/00** (2006.01)    **G06T 7/00** (2017.01)

(52) Cooperative Patent Classification (CPC):
**A01B 69/00; G06T 7/00**

(86) International application number:
**PCT/JP2023/039198**

(87) International publication number:
**WO 2024/095993 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.11.2022   JP 2022176122
02.11.2022   JP 2022176123**

(71) Applicant: **Kubota Corporation
Osaka 556-8601 (JP)**

(72) Inventors:
• **NAGAO, Mitsuaki
Sakai-shi, Osaka 590-0908 (JP)**
• **ARAKAWA, Yuma
Sakai-shi, Osaka 590-0908 (JP)**

(74) Representative: **Müller-Boré & Partner
Patentanwälte PartG mbB
Friedenheimer Brücke 21
80639 München (DE)**

(54) **ROW DETECTION SYSTEM, AGRICULTURAL MACHINE PROVIDED WITH ROW DETECTION SYSTEM, AND ROW DETECTION METHOD**

(57)    This row detection system comprises: a first imaging device that is attached to an agricultural machine, and that captures images of a ground surface and generates a first image of a first region of the ground surface; a second imaging device that is attached to the agricultural machine, and that captures images of the ground surface and generates a second image of a second region of the ground surface, the second region partially overlapping the first region; and a processing device that performs image processing on the first image and the second image. The processing device generates a combined image through processing that includes planar panorama image combination based on the first image and the second image, and detects rows of crops or ridges on the ground surface on the basis of the combined image.

*FIG.1*

EP 4 599 655 A1

**Description**

## TECHNICAL FIELD

The present disclosure relates to row detection systems, agricultural machines including row detection systems, and row detection methods.

## BACKGROUND ART

Research and development has been directed to the automation of work vehicles, such as tractors, to be used in fields. For example, work vehicles have been put to practical use which travel via automatic steering by utilizing a positioning system capable of precise positioning, e.g., GNSS (Global Navigation Satellite System). Work vehicles that automatically perform speed control as well as automatic steering have also been put to practical use.

Moreover, vision guidance systems are being developed which detect rows of crops (crop rows) or ridges in a field by using an imaging device such as a camera, and control the travel of a work vehicle along the detected crop rows or ridges.

Patent Document No. 1 discloses an implement that travels along a ridge in cultivated land where crops are planted in ridges which are formed in rows. Patent Document No. 1 describes binarizing a raw image acquired by capturing an image of the cultivated land from obliquely above with an onboard camera, and thereafter generating a planar perspective projection image. With the technique disclosed by Patent Document No. 1, the planar perspective projection image is rotated to generate a large number of rotated images having different orientations from each other and thus to detect a work path between the ridges.

## CITATION LIST

### PATENT LITERATURE

Patent Document No. 1: Japanese Laid-Open Patent Publication No. 2016-208871

## SUMMARY OF INVENTION

### TECHNICAL PROBLEM

When an agricultural machine is to move by automatic steering along a row region such as crop rows, ridges or the like by use of an image recognition technique, it is required to detect the row region at high precision.

The present disclosure provides row detection systems capable of improving the detection precision of a row region, agricultural machines including such row detection systems, and row detection methods.

### SOLUTION TO PROBLEM

A row detection system according to an embodiment of the present disclosure includes a first imaging device attached to an agricultural machine to capture an image of a ground surface to generate a first image of a first region of the ground surface; a second imaging device attached to the agricultural machine to capture an image of the ground surface to generate a second image of a second region of the ground surface partially overlapping the first region; and a processing device to execute image processing on the first image and the second image. The processing device executes a process including planar panorama image synthesis based on the first image and the second image to generate a synthesized image, and detects a crop row or a ridge on the ground surface based on the synthesized image.

An agricultural machine according to another embodiment of the present disclosure includes the above-described row detection system; and an automatic steering device controlling a traveling direction of the agricultural machine based on the position of the crop row or the ridge detected by the row detection system.

A row detection method according to still another embodiment of the present disclosure is a row detection method to be implemented by a computer. The row detection method causes the computer to execute: acquiring a first image from a first imaging device attached to an agricultural machine to capture an image of a ground surface to generate the first image of a first region of the ground surface; acquiring a second image from a second imaging device attached to the agricultural machine to capture an image of the ground surface to generate the second image of a second region of the ground surface partially overlapping the first region; executing a process including planar panorama image synthesis based on the first image and the second image to generate a synthesized image; and detecting a crop row or a ridge on the ground surface based on the synthesized image.

A row detection system according to still another embodiment of the present disclosure includes an imaging device attached to an agricultural machine to capture an image of a ground surface to generate time-series images including at least a portion of the ground surface; and a processing device to execute image processing on the time-series images. The processing device determines an index value of at least a portion of pixels of the time-series images, the index value being to distinguish a crop row or a ridge as a target of detection from the remaining region, divides a portion of, or the entirety of, the time-series images or a plan view image obtained as a result of transformation of the time-series images into a plurality of band-shaped blocks arranged in an image vertical direction; and for each of the plurality of blocks, while changing the direction of the plurality of scanning lines to a plurality of directions, executes a process of determining a total value or an average value of the index values along each of a plurality of scanning lines parallel to each other, the process being executed for each of the plurality of directions, determines one direction corresponding to the direction of the crop row or the ridge among the plurality of directions based on the relationship between the positions of the scanning lines and the total value or the average value, determines positions of edge lines of the crop row or the ridge based on the relationship between the positions of the scanning lines and the total value or the average value in the determined direction, and determines an approximation line of the crop row or the ridge based on the direction and the positions of the edge lines determined for each of the plurality of blocks.

An agricultural machine according to still another embodiment of the present disclosure includes the above-described row detection system; and an automatic steering device controlling a traveling direction of the agricultural machine based on the approximation line of the crop row or the ridge determined by the row detection system.

A row detection method according to still another embodiment of the present disclosure is a row detection method to be implemented by a computer. The row detection method causes the computer to execute: acquiring time-series images from an imaging device attached to an agricultural machine to capture an image of a ground surface to generate the time-series images including at least a portion of the ground surface, determining a distribution of index values of at least a portion of pixels of the time-series images, the index values being to distinguish a crop row or a ridge as a target of detection from the remaining region, dividing a portion of, or the entirety of, the time-series images or a plan view image obtained as a result of transformation of the time-series images into a plurality of band-shaped blocks arranged in an image vertical direction; and for each of the plurality of blocks, while changing the direction of the plurality of scanning lines to a plurality of directions, executing a process of determining a total value or an average value of the index values along each of a plurality of scanning lines parallel to each other, the process being executed for each of the plurality of directions, determining one direction corresponding to the direction of the crop row or the ridge among the plurality of directions based on the relationship between the positions of the scanning lines and the total value or the average value, determining positions of edge lines of the crop row or the ridge based on the relationship between the positions of the scanning lines and the total value or the average value in the determined direction, and determining an approximation line of the crop row or the ridge based on the direction and the positions of the edge lines determined for each of the plurality of blocks.

General or specific aspects of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be disposed within a single apparatus, or divided over two or more separate apparatuses.

## ADVANTAGEOUS EFFECTS OF INVENTION

According to an embodiment of the present disclosure, it is made possible to improve the detection precision of the row region such as the crop rows, the ridges or the like.

## BRIEF DESCRIPTION OF DRAWINGS

FIG. 1 is a block diagram showing a configuration of a row detection system according to an example embodiment 1 of the present disclosure.

FIG. 2 is a flowchart showing an overview of an operation executed by a processing device.

FIG. 3A schematically shows how a first imaging device and a second imaging device attached to an agricultural machine capture images of a portion of a crop row..

FIG. 3B shows an example of region of a ground surface that is shown in a synthesized image.

FIG. 4 schematically shows how the first imaging device and the second imaging device attached to the agricultural machine captures images of the ground surface.

FIG. 5 is a perspective view schematically showing the relationship among a vehicle coordinate system $\Sigma b$, a camera coordinate system $\Sigma c1$ of the first imaging device, a camera coordinate system $\Sigma c2$ of the second imaging device, and a world coordinate system Σw fixed to the ground surface.

FIG. 6 is a plan view schematically showing a portion of a field where a plurality of crop rows are provided on the ground surface.

FIG. 7 schematically shows an example of image acquired by an imaging device of an agricultural machine shown in FIG. 6.

FIG. 8 is a plan view schematically showing a state where a traveling direction of the agricultural machine is inclined with respect to a direction in which the crop rows extend.

FIG. 9 schematically shows an example of image acquired by an imaging device of an agricultural machine shown in FIG. 8.

FIG. 10 is a plan view schematically showing a portion of a field where a plurality of curved crop rows are provided on the ground surface.

FIG. 11 is a block diagram showing an example hardware configuration of the processing device.

FIG. 12 is a flowchart showing an example operation of the processing device.

FIG. 13 is a perspective view schematically showing positions of each of a camera coordinate system Σc1 of an imaging device at a first pose and a camera coordinate system Σc3 of an imaginary imaging device at a second pose, with respect to a reference plane Re.

FIG. 14 is a view provided to describe a synthesis process performed on a first plan view image and a second plan view image.

FIG. 15 shows an example of a first image, a second image, the first plan view image and the second plan view image.

FIG. 16 shows an example of synthesized image generated in the example of FIG. 15.

FIG. 17 shows an example of state where an image of a calibration subject placed on the ground surface is captured by two imaging devices.

FIG. 18 shows an example of images acquired by image capturing of the calibration subject.

FIG. 19 shows a synthesized enhanced image provided as a result of RGB values in the synthesized image shown in FIG. 16 being transformed into "2 × g - r - b".

FIG. 20 shows an example of binary image provided as a result of binarization of the synthesized enhance image shown in FIG. 19.

FIG. 21 shows a histogram of excess green index (E×G) in the synthesized enhanced image shown in FIG. 19.

FIG. 22 schematically shows an example of image showing three crop rows.

FIG. 23 schematically shows the relationship between the positions of the scanning lines and the total value of the index values, obtained for the image shown in FIG. 22.

FIG. 24 shows an example of image in which the crop rows extend obliquely.

FIG. 25 schematically shows the relationship between the positions of the scanning lines and the total value of the index values, obtained for the image shown in FIG. 24.

FIG. 26 is a flowchart showing an example of procedure for searching for the direction, of the scanning lines, that is parallel to the direction of the crop rows by changing the direction of the scanning lines.

FIG. 27 is a perspective view showing an example of external appearance of an agricultural machine

FIG. 28 is a side view schematically showing an example of the agricultural machine in a state where an implement is attached thereto.

FIG. 29 is a block diagram schematically showing an example configuration of the agricultural machine and the implement.

FIG. 30 is a block diagram showing a configuration of the row detection system according to an example embodiment 2 of the present disclosure.

FIG. 31 is a flowchart showing a flow of operations of the processing device.

FIG. 32 schematically shows how the imaging device attached to the agricultural machine captures an image of the ground surface.

FIG. 33 is a perspective view schematically showing the relationship among the vehicle coordinate system Σb, a camera coordinate system Σc and the world coordinate system Σw.

FIG. 34 is a plan view schematically showing a portion of a field in which a plurality of crop rows are provided on the ground surface.

FIG. 35 is a plan view schematically showing a state where the agricultural machine is steered to adjust the position and the orientation thereof so that the positional error thereof with respect to a target path is reduced.

FIG. 36 is a plan view schematically showing a portion of a field in which a plurality of curved crop rows are provided on the ground surface.

FIG. 37 is a flowchart showing an example operation of the processing device.

FIG. 38 shows an image corresponding to a one-frame image, among the time-series color images acquired by the imaging device mounted on the agricultural machine.

FIG. 39 shows an enhanced image obtained as a result of the RGB values in the image shown in FIG. 38 being transformed into "2 × g - r - b".

FIG. **40** shows an example of the plan view image, as seen from above the ground, in which the pixels are classified into first pixels and second pixels.

FIG. **41** shows an example in which the plan view image is divided into a plurality of blocks.

FIG. **42** schematically shows an example of one block in the plan view image.

FIG. **43** schematically shows the relationship between the positions of the scanning lines and the total value of the index values, obtained for the block shown in FIG. **42.**

FIG. **44** shows an example in which the crop rows extend obliquely.

FIG. **45** schematically shows the relationship between the positions of the scanning lines and the total value of the index values, obtained for the block of the plan view image shown in FIG. **44**.

FIG. **46** shows an example of state where the direction of the scanning lines and the direction of the crop rows match each other.

FIG. **47** schematically shows the relationship between the positions of the scanning lines and the total value of the index values, obtained for the block of the plan view image shown in FIG. **46**.

FIG. **48** shows an example of distribution of the total values, which is created from one block in the plan view image shown in FIG. **41.**

FIG. **49** shows an example of edge lines of the crop row extending in a curved manner.

FIG. **50** schematically shows an example of range of the scanning lines in each block.

FIG. **51** shows an example of approximation lines of the crop rows.

FIG. **52** is a perspective view schematically showing rows of ridges provided on the ground surface.

FIG. **53** is a flowchart showing another example operation of the processing device.

FIG. **54** shows a one-frame image, among time-series images, acquired at time t by the imaging device mounted on the agricultural machine.

FIG. **55** schematically shows the correspondence of feature points between the image acquired from the imaging device at time t and the image acquired from the imaging device at time t+1.

FIG. **56** is a perspective view schematically showing a movement of a ridge and an intermediate region appearing in the images acquired by the imaging device,

FIG. **57** schematically shows the relationship between an amount of movement (L) of a point **F1** on the ridge, corresponding to a feature point **f1** on an image plane **lm1** of the imaging device, and an amount of movement **(L+dL)** of a point **F1p** projected onto the reference plane **Re.**

FIG. **58** shows the relationship between the average value of the height of the feature points on each of the scanning lines parallel to the direction in which the ridges extend and the position of the scanning line.

FIG. **59** is a perspective view showing an example of external appearance of an agricultural machine.

FIG. **60** is a side view schematically showing an example of the agricultural machine in a state where an implement is attached thereto.

FIG. **61** is a block diagram showing an example configuration of the agricultural machine and the implement.

## DESCRIPTION OF EMBODIMENTS

Hereinafter, embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description and to facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following embodiments are only exemplary, and the techniques according to the present disclosure are not limited to the ones in the following embodiments. For example, numerical values, shapes, materials, steps, orders of steps, layout in a display screen, etc., that are indicated in the following embodiments are only exemplary, and admit of various modifications so long as it makes technological sense. Any one implementation may be combined with another so long as it makes technological sense to do so.

As used in the present disclosure, an "agricultural machine" broadly includes any machine that performs basic tasks of agriculture, e.g., "tilling", "planting", "harvesting", and "spraying drugs" in fields. An agricultural machine is a machine that has a functionality and structure to perform agricultural operations such as tilling, seeding, preventive pest control, manure spreading, planting of crops, or harvesting for the ground surface within a field. Such agricultural work, tasks, or operations may be referred to as "groundwork", or simply as "work", "tasks", or "operations". An agricultural machine does not need to include a traveling device moving the agricultural machine itself, and may travel by being attached to, or towed by, another vehicle including a traveling device. Not only does a work vehicle, such as a tractor, function as an "agricultural machine" by itself alone, but an implement that is attached to, or towed by, a work vehicle and the work vehicle may, as a whole, function as one "agricultural machine". Examples of agricultural machines include tractors, vehicles for crop management, vegetable transplanters, mowers, agricultural drones, and field-moving robots.

<Embodiment 1>

(1-1. Overview of the row detection system)

A row detection system according to embodiment 1 of the present disclosure includes a plurality of imaging devices used while being attached to an agricultural machine, and a processing device. The plurality of imaging devices are each secured to the agricultural machine so as to capture an image of a ground surface on which the agricultural machine performs groundwork and thus acquire an image including at least a portion of the ground surface. The images acquired by the plurality of imaging devices include overlapping regions. The processing device generates a synthesized image based on the plurality of images generated by the plurality of imaging devices and detects a row region such as a crop row or a ridge from the synthesized image. The processing device may be configured to determine a target path based on the detected row region and thus to output information on the target path to an automatic steering device of the agricultural machine. The automatic steering device performs steering control on the agricultural machine so that the agricultural machine moves along the target path. As a result, the agricultural machine is made movable along the crop row or the ridge. Hereinafter, an overview of a configuration and an operation of the row detection system will be described by way of an example in which the row detection device includes two imaging devices.

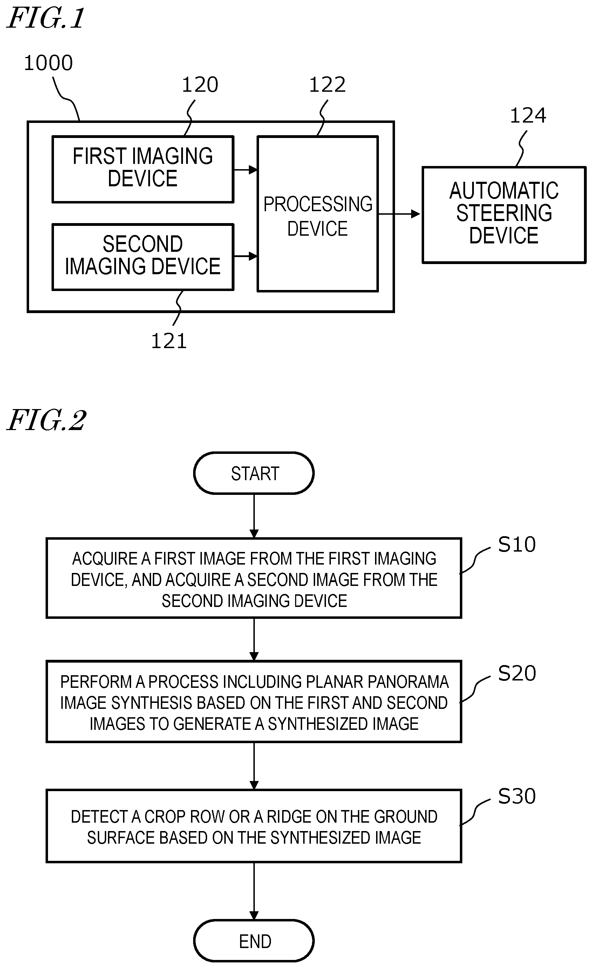

FIG. 1 is a block diagram showing a configuration of a row detection system 1000 according to an example embodiment of the present disclosure. The row detection system 1000 includes a first imaging device 120, a second imaging device 121, and a processing device 122. The processing device 122 may be connected to, for example, an automatic steering device 124 included in the agricultural machine. The first imaging device 120 and the second imaging device 121 are attached to the agricultural machine. The first imaging device 120 captures an image of the ground surface on which the agricultural machine performs groundwork to generate a first image of a first region of the ground surface. The second imaging device 121 captures an image of the ground surface to generate a second image of a second region of the ground surface partially overlapping the first region. The processing device 122 executes image processing on the first image and the second image to detect a crop row or a ridge on the ground surface.

FIG. 2 is a flowchart showing an overview of an operation executed by the processing device 122. The processing device 122 executes operations of steps S10, S20 and S30 to detect the crop row or the ridge on the ground surface.

In step S10, the processing device 122 acquires the first image from the first imaging device 120 and acquires the second image from the second imaging device 121. In step S20, the processing device 122 executes a process including planar panorama image synthesis based on the first image and the second image to generate a synthesized image. In step S30, the processing device 122 detects the crop row or the ridge on the ground surface based on the synthesized image.

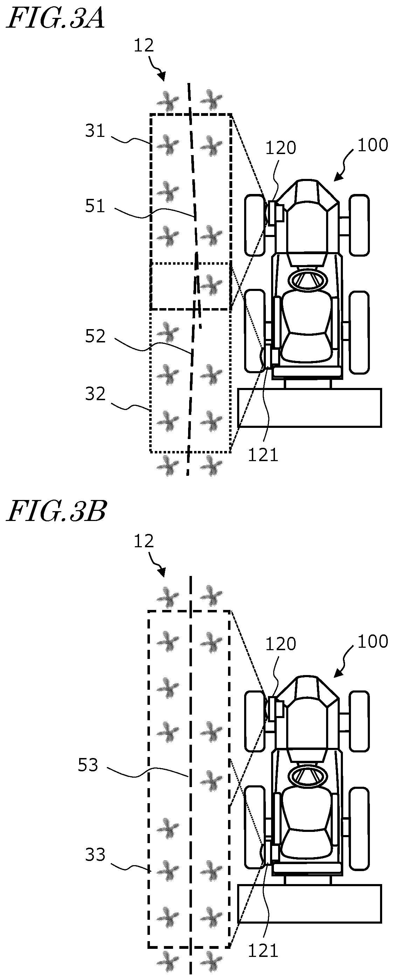

FIGS. 3A and 3B are provided to describe an operation of the row detection system 1000. FIGS. 3A and 3B each show an example of agricultural machine 100 traveling along a crop row 12. The agricultural machine 100 in this example is a work vehicle such as a tractor, a vehicle for crop management or the like. The agricultural machine 100 is not limited to the work vehicle, and may be, for example, a flying object such as an agricultural drone that performs work of, for example, spraying drugs or fertilizers while moving along a target path. The agricultural machine 100 is configured to travel along the crop row 12 and perform agricultural work such as, for example, planting of crops, seeding, manure spreading, preventive pest control, harvesting or tilling or the like. In the example shown in FIG. 3A, the agricultural machine 100 travels beside the crop row 12 by automatic steering. As described below, the agricultural machine 100 may travel while straddling the crop row 12.

FIG. 3A schematically shows how the first imaging device 120 and the second imaging device 121 attached to the agricultural machine 100 capture images of a portion of the crop row 12. The first imaging device 120 is attached to a first position on the agricultural machine 100. The second imaging device 121 is attached to a second position on the agricultural machine 100 rearward of the first position. In the example shown in FIGS. 3A and 3B, the first imaging device 120 is attached to a side surface of a portion frontward of the center of gravity of the agricultural machine 100, and the second imaging device 121 is attached to a side surface of a portion rearward of the center of gravity of the agricultural machine 100. The agricultural machine 100 may be configured to travel, by automatic steering, beside a region where the crop row 12 exists, along the crop row 12. The position and the orientation of each of the first imaging device 120 and the second imaging device 121 are not limited to those shown in the figures. As in another example described below, the first imaging device 120 and the second imaging device 121 may be provided in a bottom portion of the agricultural machine 100. Alternatively, the first imaging device 120 may be provided at a front end of the agricultural machine 100 whereas the second imaging device 121 may be provided at a rear end of the agricultural machine 100 or an implement. In such a configuration, the agricultural machine 100 may be configured to travel while straddling the crop row 12.

In the example shown in FIG. 3A, the first imaging device 120 is attached to the first position on the agricultural machine **100** while being directed obliquely downward so as to capture an image of a first region **31** including a first portion of the crop row **12.** The first position is relatively close to the front end of the agricultural machine **100.** The second imaging device **121** is attached to the second position on the agricultural machine **100** while being directed obliquely downward so as to capture an image of a second region **32** including a second portion of the crop row **12.** The second position is relatively close to the rear end of the agricultural machine **100.** Therefore, the second region **32** is shifted rearward with respect to the first region **31.** The first region **31** and the second region **32** partially overlap each other. The first imaging device **120** captures an image of the first region **31** of the ground surface to generate the first image. The second imaging device **121** captures an image of the second region **32** of the ground surface to generate the second image. The first image and the second image may each be, for example, a color image. The crop row **12** is detectable based on a color distribution of such a color image. The first imaging device **120** and the second imaging device **121** may each be configured to generate time-series color images. For example, the first imaging device **120** and the second imaging device **121** may each be configured to generate time-series color images at a predetermined frame rate during travel of the agricultural machine **1000.**

The processing device **122** executes a process including planar panorama image synthesis based on the first image and the second image to generate the synthesized image. FIG. **3B** shows an example of region **33** on the ground surface that appears in the synthesized image. The processing device **122** may be configured, for example, to transform the first image into a first plan view image as seen from above the ground, to transform the second image into a second plan view image as seen from above the ground, and to synthesize the first plan view image and the second plan view image to generate the synthesized image. The first image and the second image are transformed into the first plan view image and the second plan view image by use of homography transformation (planar perspective projection) described below.

Upon generating the synthesized image, the processing device **122** detects the crop row **12** based on the synthesized image. In the case where, for example, the first image and the second image are each a color image, the processing device **122** generates, from the synthesized image, a synthesized enhanced image in which a color of the crop row (e.g., green color) is enhanced, and thus can detect the crop row **12** on the ground surface based on the synthesized enhanced image. A more detailed example of method for detecting the crop row **12** will described below.

After detecting the crop row **12,** the processing device **122** determines an approximation line (straight line or curved line) of the crop row **12,** and determines a target path of the agricultural machine **100** along the approximation line. The processing device **122** outputs information on the determined target path to the automatic steering device **124** of the agricultural machine **100.** The automatic steering device **124** performs steering control on the agricultural machine **100** so that the agricultural machine **100** travels along the target path. As a result, the agricultural machine **100** is allowed to travel along the crop row **12.**

As described above, according to the present embodiment, the crop row **12** is detected based on the synthesized image of the first image generated by the first imaging device **120** and the second image generated by the second imaging device **121.** The synthesized image includes information on an area broader than each of the first image and the second image. Therefore, the approximation line of the crop row **12** can be determined more accurately than in a case where the crop row **12** is detected based on only one of the first image and the second image. Especially in the case where the crop row **12** of seedling having a relatively small size is to be detected, decrease in the detection precision due to missing plants can be reduced.

FIG. **3A** shows, as examples, an approximation line **51** of the crop row **12** determined only based on the first image and an approximation line **52** of the crop row **12** determined only based on the second image. Due to the influence of the missing plants, both of the approximation line **51** and the approximation line **52** are shifted from the direction of the approximation line that should be determined for the crop row **12.** Therefore, if a target path is set based on such an approximation line, the agricultural machine **100** may possibly tread on a portion of the crop row **12.** By contrast, according to the present embodiment, the approximation line of the crop row **12** is determined based on the synthesized image. Therefore, as shown in FIG. **3B,** the approximation line of the crop row **12** can be determined to be an approximation line **53,** which is more accurate.

In the above-described example, the processing device **122** detects the crop row **12.** The processing device **122** may be configured to detect a ridge, instead of, or in addition to, the crop row **12.** An example of method for detecting a ridge will be described below.

In the above-described example, the row detection system **1000** includes the two imaging devices **120** and **121.** The row detection system **1000** may include three or more imaging devices. In the case where the crop row or the ridge is detected based on a synthesized image generated from three or more images acquired by such three or more imaging devices, the approximation line of the crop row or the ridge can be determined more accurately.

(1-2. Specific example of the row detection system)

Now, a more specific example of the row detection system according to the present embodiment will be described. In the present embodiment, detection of a crop row is performed as the "row detection".

As shown in FIG. **1,** the row detection system **1000** according to the present embodiment includes the first imaging device **120,** the second imaging device **121** and the processing device **122.** The first imaging device **120** and the second imaging device **121** are each secured to the agricultural machine so as to acquire time-series color images including at least a portion of the ground surface.

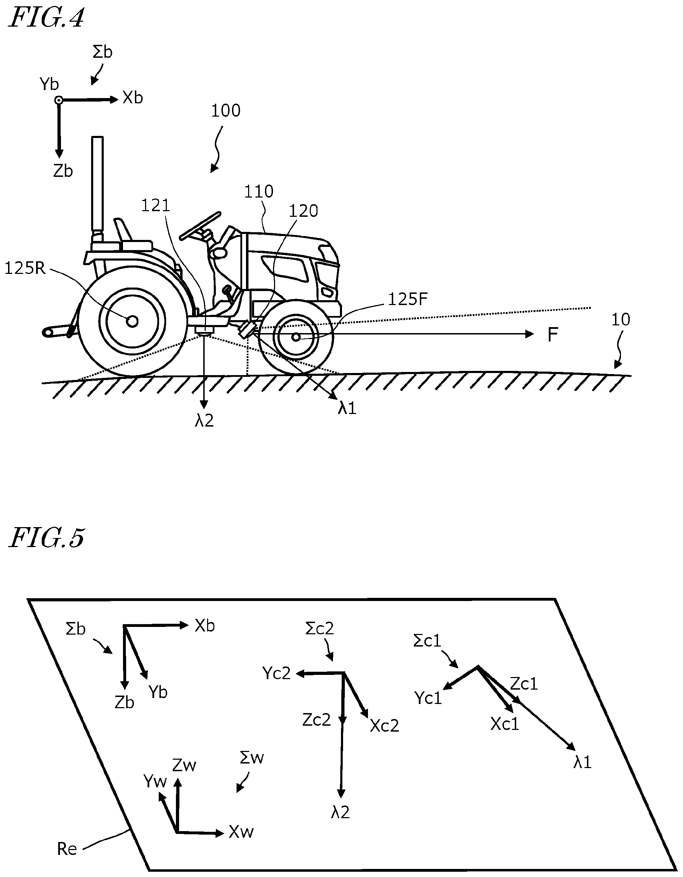

FIG. **4** schematically shows how the first imaging device **120** and the second imaging device **121** attached to the agricultural machine **100** each capture an image of a ground surface 10. In the example of FIG. **4,** the agricultural machine **100** includes a vehicle body **110** capable of traveling. The first imaging device **120** and the second imaging device **121** are secured to the vehicle body **110.** For referencing sake, FIG. 4 shows a vehicle coordinate system $\Sigma b$ having an **Xb** axis, a **Yb** axis, and a **Zb** axis that are orthogonal to one another. The vehicle coordinate system $\Sigma b$ is a coordinate system that is fixed to the agricultural machine **100.** The origin of the vehicle coordinate system $\Sigma b$ may be set, for example, to the center of gravity or in the vicinity thereof of the agricultural machine **100.** In FIG. **4,** for ease of viewing, the origin of the vehicle coordinate system $\Sigma b$ is illustrated as lying external to the agricultural machine **100.** In the vehicle coordinate system $\Sigma b$ according to the present disclosure, the **Xb** axis coincides with a traveling direction (direction of arrow **F)** while the agricultural machine **100** is traveling straight. As viewed from the coordinate origin in a positive direction along the **Xb** axis, the **Yb** axis coincides with the directly right direction, and the **Zb** axis coincides with the vertically downward direction.

The first imaging device **120** and the second imaging device **121** are each, for example, an onboard camera that includes a CCD (Charge Coupled Device) or a CMOS (Complementary Metal Oxide Semiconductor) image sensor. The first and second imaging devices **120** and **121** according to the present embodiment are each a monocular camera that is capable of capturing motion pictures at a frame rate of, for example, 3 frames/second (fps: frames per second) or above.

The image sensor in each of the imaging devices **120** and **121** includes a large number of photodetection cells that are arranged in rows and columns. Each of the photodetection cells corresponds to one of pixels included in an image, and includes an R subpixel to detect the intensity of red light, a G subpixel to detect the intensity of green light, and a B subpixel to detect the intensity of blue light. Optical outputs to be detected by the R subpixel, the G subpixel, and the B subpixel of each photodetection cell will be referred to as an R value, a G value and a B value, respectively. Hereinafter, the R value, the G value and the B value may be collectively referred to as "pixel values" or "RGB values". By using the R value, the G value and the B value, it is possible to define a color based on coordinate values within an RGB color space.

FIG. **5** is a perspective view schematically showing the relationship among the aforementioned vehicle coordinate system $\Sigma b,$ a camera coordinate system $\Sigma c1$ of the first imaging device **120,** a camera coordinate system $\Sigma c2$ of the second imaging device **121,** and a world coordinate system $\Sigma w$ that is fixed to the ground surface 10. The camera coordinate system $\Sigma c1$ of the first imaging device **120** has an **Xc1** axis, a **Yc1** axis, and a **Zc1** axis that are orthogonal to one another. The camera coordinate system $\Sigma c2$ of the second imaging device **121** has an **Xc2** axis, a **Yc2** axis, and a **Zc2** axis that are orthogonal to one another. The world coordinate system $\Sigma w$ has an **Xw** axis, a **Yw** axis, and a **Zw** axis that are orthogonal to one another. In the example of FIG. **5,** the **Xw** axis and the **Yw** axis of the world coordinate system $\Sigma w$ are on a reference plane **Re** that expands along the ground surface **10.**

The first imaging device **120** is attached to the first position on the agricultural machine **100** so as to face in a first direction. The second imaging device **121** is attached to the second position, rearward of the first position, of the agricultural machine **100** so as to face in a second direction. Therefore, the position and orientation of each of the camera coordinate systems $\Sigma c1$ and $\Sigma c2$ with respect to the vehicle coordinate system $\Sigma b$ are fixed in a known state. The **Zc1** axis of the camera coordinate system $\Sigma c1$ of the first imaging device **120** is on a camera optical axis $\lambda 1$ of the first imaging device **120.** The **Zc2** axis of the camera coordinate system $\Sigma c2$ of the second imaging device **121** is on a camera optical axis $\lambda 2$ of the second imaging device **121.** The direction of the camera optical axis $\lambda 1$ is the first direction, and the direction of the camera optical axis $\lambda 2$ is the second direction. In the illustrated example, the camera optical axes $\lambda 1$ and $\lambda 2$ are inclined with respect to the traveling direction F of the agricultural machine **100** toward the ground surface **10,** with an angle of depression that is greater than 0°. The traveling direction F of the agricultural machine **100** is generally parallel to the ground surface **10,** along which the agricultural machine **100** travels. The angle of depression of the camera optical axis $\lambda 1$ of the first imaging device **120** (i.e., an angle made by the traveling direction **F** and the camera optical axis $\lambda 1$) may be set to a range of, for example, not less than 0° and not more than 90°. The angle of depression of the camera optical axis $\lambda 2$ of the second imaging device **121** (i.e., an angle made by the traveling direction **F** and the camera optical axis $\lambda 2$) may be set to a range of, for example, not less than 45° and not more than 135°. In the example shown in FIG. **4,** the angle of depression of the camera optical axis $\lambda 1$ of the first imaging device **120** is about 40°, and the angle of depression of the camera optical axis $\lambda 2$ of the second imaging device **121** is about 90°. As in this example, the first imaging device **120** may be attached to the first position on the agricultural machine **100** so as to face in an obliquely forward and downward direction. The second imaging device **121** may be attached to the second position on the agricultural machine **100** so as to face in a downward direction. Herein, the expression "face in an obliquely forward and downward direction" refers to that the angle of depression of the camera optical axis is in a range of not less than 10° and not more than 80°. The expression "face in a downward direction" refers to that the angle of depression of the camera optical axis is in a range of not less than 80° and not more than 100°.

In the example shown in FIG. **4,** the first imaging device **120** and the second imaging device **121** are both attached to a bottom portion of the vehicle body **110.** The second imaging device **121** is attached rearward of the first imaging device **120.** That is, in the vehicle coordinate system Σ**b,** the coordinate value of the second imaging device **121** along the **Xb** axis is smaller than the coordinate value of the first imaging device **120** along the **Xb** axis. In the example shown in FIG. **4,** the imaging devices **120** and **121** are both located at the center or in the vicinity thereof of the vehicle body **110** in a width direction **(Yb** direction) thereof. Each of the imaging devices **120** and **121** is not limited to being located in the bottom portion of the vehicle body **110,** and may be attached to any other position, for example, in a side portion, in a front portion, or in a rear portion of the vehicle body **110.** In the case where, as in the present embodiment, the imaging devices **120** and **121** are provided in the bottom portion of the vehicle body **110,** a crop row or a ridge below the agricultural machine **100** can be detected.

FIG. **4** shows an image capturing area of the first imaging device **120** and an image capturing area of the second imaging device **121** with dotted lines expanding radially. The image capturing area of each of the first imaging device **120** and the second imaging device **121** includes a portion, of the ground surface **10,** that is below the agricultural machine **100.** The image capturing area of each of the first imaging device **120** and the second imaging device **121** includes at least a portion of wheels of the agricultural machine **1100.** Like in the example shown in FIG. **3,** the image capturing area of each of the first imaging device **120** and the second imaging device **121** may have a size that is longer in a front-rear direction than in a left-right direction of the agricultural machine **100.** The image capturing area of the first imaging device **120** and the image capturing area of the second imaging device **121** partially overlap each other. Therefore, the first image generated by the first imaging device **120** and the second image generated by the second imaging device **121** have overlapping portions. In the present embodiment, the image capturing area of the first imaging device **120** includes a portion, of the ground surface **10,** that is right below the front axle **125F** of the agricultural machine **100.** By contrast, the image capturing area of the second imaging device **121** includes a portion, of the ground surface **10,** that is right below the rear axle **125R** of the agricultural machine **100.** Therefore, the crop row or the ridge in the vicinity of front wheels and rear wheels can be detected at high precision.

While the agricultural machine **100** is traveling on the ground surface **10,** the vehicle coordinate systems Σ**b** and the camera coordinate systems Σ**c1** and Σ**b2** translate relative to the world coordinate system Σ**w.** When the agricultural machine **100** rotates or swings in the direction of pitch, roll, or yaw during travel, the vehicle coordinate system Σ**b** and the camera coordinate systems Σ**c** rotate relative to the world coordinate system Σ**w.** In the following description, for simplicity, it is assumed that the agricultural machine **100** does not rotate in the pitch or roll direction and that the agricultural machine **100** moves essentially parallel to the ground surface 10.

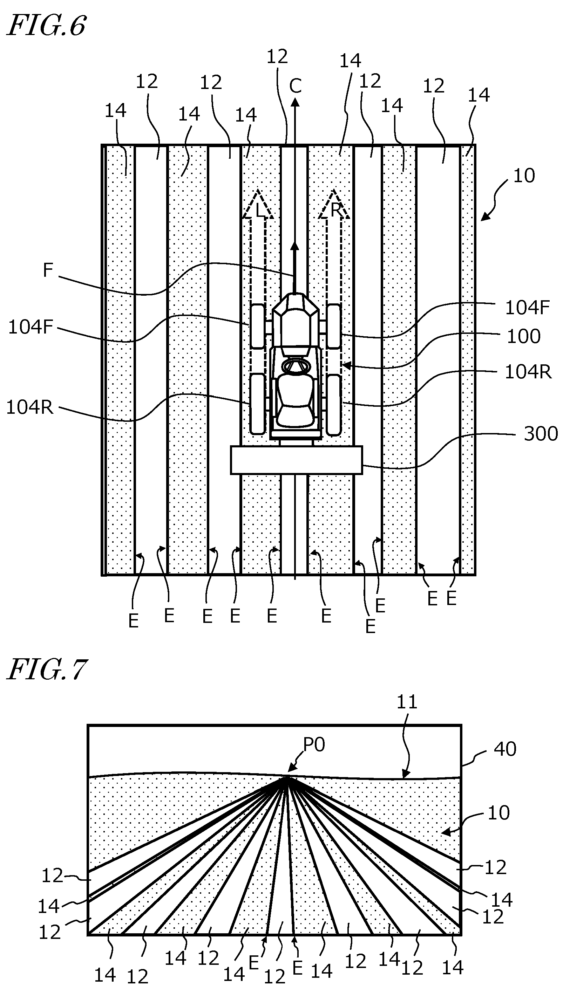

FIG. **6** is a plan view schematically showing a portion of a field in which a plurality of crop rows **12** are provided on the ground surface **10.** The crop rows **12** are each a row that is formed by crops being continuously planted on the ground surface **10** of the field in one direction. For example, each crop row **12** may be an aggregation of crops that are planted in a ridge of the field. As described above, each crop row **12** is a row that is formed by an aggregation of crops planted in the field. Therefore, strictly describing, the shape of such a crop row may be complex depending on the shapes of crops and the positional arrangement of crops. The width of each crop row **12** changes as the crops grows. Between each two crop rows **12** adjacent to each other, a belt-shaped intermediate region **14,** in which no crops have been planted, exists. Such intermediate regions **14** are each a region that is interposed between two edge lines **E** facing each other between two adjacent crop rows **12.** In the case where a plurality of crops are planted for one ridge in a width direction of the ridge, a plurality of crop rows **12** are formed on the one ridge. In such a case, among the plurality of crop rows **12** that are formed on the ridge, an edge line **E** of the crop row **12** that is located at an end in the width direction of the ridge serves as a delineator of the intermediate region **14.** In other words, the intermediate region **14 lies** between the edge lines **E** of crop rows **12** that are located at ends of the ridge in the width direction, among the edge lines E of the plurality of crop rows **12.** Since such an intermediate region **14** functions as a region (work path) along which the wheels of the agricultural machine **100** may pass, the "intermediate region" may be referred to as a "work path".

In the present disclosure, an "edge line" of a crop row means a reference line segment (which may also include a curve) defining a target path for travel of an agricultural machine. Such reference line segments may be defined as both of two ends of a belt-like region (work path) along which the wheels of the agricultural machine are allowed to pass. A specific method for determining the "edge lines" of a crop row will be described below.

FIG. **6** schematically shows one agricultural machine **100** traveling in a field in which the crop rows **12** are formed. The agricultural machine **100** includes left and right front wheels **104F** and left and right rear wheels **104R** as traveling devices, and tows an implement **300.** The front wheels **104F** are wheels responsible for steering.

In the example shown in FIG. **6,** thick broken-lined arrows **L** and **R are** respectively indicated for the work paths **14** that are located on opposite sides of one crop row **12** in the middle. While the agricultural machine **100** is traveling on a target path that is indicated by solid-lined arrow **C,** the front wheels **104F** and the rear wheels **104R** of the agricultural machine **100** are required to move on the work paths **14** along arrows **L** and **R,** so as not to step on the crop row 12. In the present embodiment, the first and second imaging devices **120** and **121** attached to the agricultural machine **100** are usable to detect the edge lines **E** of the crop row **12.** Therefore, it is possible to control the steering and the travel of the agricultural machine **100** so that the front wheels **104F** and the rear wheels **104R** move on the work paths **14** along arrows **L** and **R.** Controlling the steering and the travel of the agricultural machine **100** based on the edge lines **E** of the crop row **12** in this manner may be referred to as "row-following travel control".

FIG. 7 schematically shows an example of image **40** acquired by the first imaging device **120** of the agricultural machine **100** shown in FIG. **6.** For easer understanding, FIG. **7** does not show the front wheels **104F,** of the agricultural machine **100,** that may be included in the image **40.** The plurality of crop rows **12** and the intermediate regions (work paths) **14** extending in parallel to each other on the ground surface **10** theoretically cross each other at a vanishing point **P0** on a horizon **11.** The vanishing point **P0** is located in a central region of the image **40.**

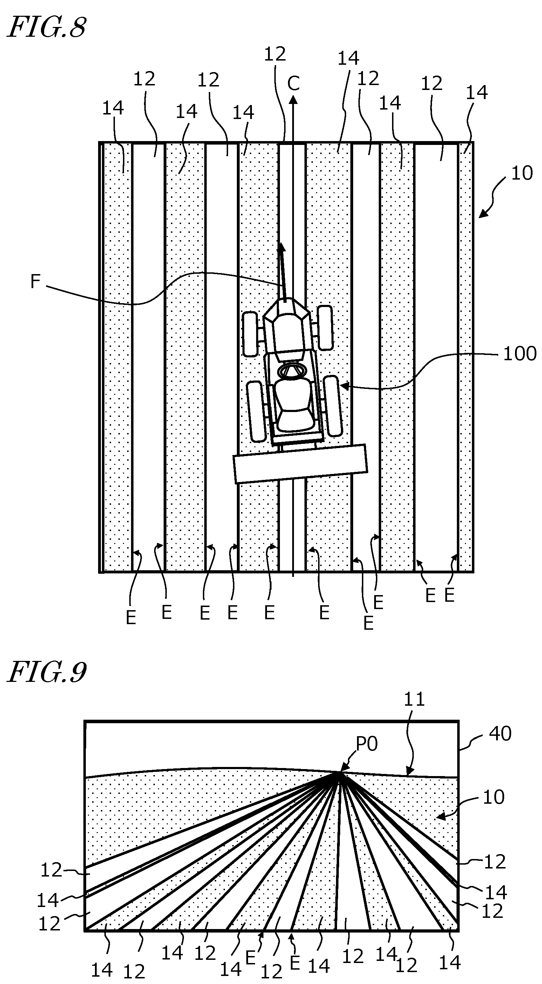

FIG. **8** is a plan view schematically showing a state where the traveling direction **F** of the agricultural machine **100** is inclined with respect to the direction in which the crop rows **12** extend. FIG. **9** schematically shows an example of the image **40** acquired by the first imaging device **120** of the agricultural machine **100** shown in FIG. **8.** In the case where the traveling direction F of the agricultural machine **100** is inclined with respect to the direction in which the crop rows **12** extend (direction parallel to arrow **C),** the vanishing point **P0** is located in a right or left region of the image **40.** In the example shown in FIG. **9,** the vanishing point **P0** is located in the right region of the image **40.**

The agricultural machine **100** includes the row detection system **1000** and the automatic steering device **124** shown in FIG. **1.** The processing device **122** in the row detection system **1000** executes a process including panorama image synthesis based on the first image generated by the first imaging device **120** and the second image generated by the second imaging device **121** to generate a synthesized image. The processing device **122** detects the crop row **12** included in the synthesized image and linearly approximates the detected crop row **12** to determine an approximation line. The processing device **122** determines a target path of the agricultural machine **100** along the approximation line. The automatic steering device **124** performs steering control so that the agricultural machine **100** travels along the target path.

The automatic steering device **124** performs the steering control on the agricultural machine **100** so as to reduce a positional deviation and a directional deviation of the agricultural machine **100** with respect to the target path (arrow **C** shown in FIG. **8).** As a result, the agricultural machine **100** in the state shown in, for example, FIG. **8** has the position and the orientation (angle in the yaw direction) thereof adjusted, and thus becomes closer to the state shown in FIG. **6.** The left and right wheels of the agricultural machine **100** in the state of FIG. **6** are respectively located on lines indicated by arrows **L** and **R** on the work paths **14.** While the agricultural machine **100** is traveling along the target path indicated by central arrow **C,** the automatic steering device **124** of the agricultural machine **100** controls the steering angles of the wheels responsible for steering so that neither the front wheels **104F** nor the rear wheels **104R** deviate from the work paths **14.**

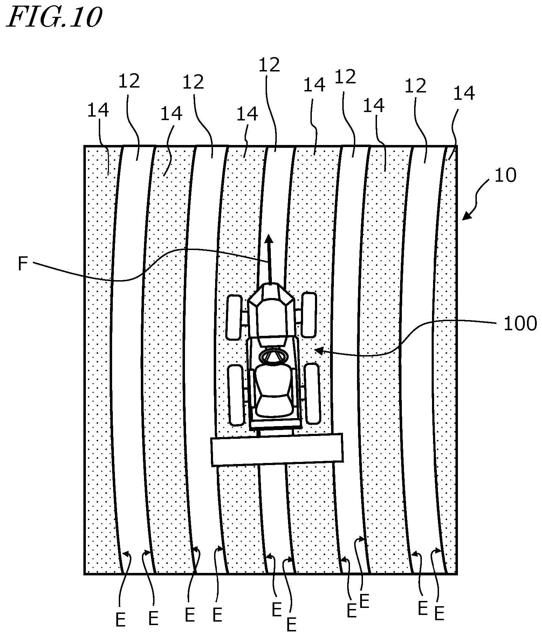

FIG. **10** is a plan view schematically showing a portion of a field in which a plurality of curved crop rows **12** are provided on the ground surface **10.** According to the present disclosure, even in a field in which such curved crop rows **12** are formed, it is made possible to accurately detect the positions of the crop rows **12** from two images acquired by the two imaging devices **120** and **121** and to precisely control the steering and the travel of the agricultural machine **100** along the crop rows **12.**

Now, a configuration and an operation of the processing device **122** in the row detection system **1000** will be described in more detail.

The processing device **122** according to the present embodiment executes image processing on time-series color images acquired by the imaging devices **120** and **121.** The processing device **122** is connected to the automatic steering device **124** included in the agricultural machine **100.** The automatic steering device **124** may included in, for example, a controller controlling the travel of the agricultural machine **100.**

The processing device **122** may be implemented by an electronic control unit (ECU) for image recognition. The ECU is an onboard computer. The processing device **122** is connected to the imaging devices **120** and **121** via serial signal lines, e.g., wire harnesses or the like, so as to receive image data that is output from the imaging devices **120** and **121.** A portion of the image recognition processing to be executed by the processing device **122** may be executed inside each of the imaging devices **120** and **121** (inside each of camera modules).

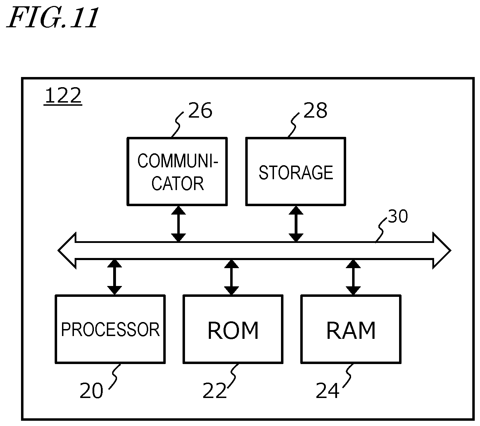

FIG. **11** is a block diagram showing an example hardware configuration of the processing device **122.** The processing device **122** includes a processor **20,** a ROM (Read Only Memory) **22,** a RAM (Random Access Memory) **24,** a communicator **26,** and a storage **28.** These component elements are connected to one another via buses **30.**

The processor **20** is a semiconductor integrated circuit, and is referred to also as a central processing unit (CPU) or a microprocessor. The processor **20** may include an image processing unit (GPU). The processor **20** consecutively executes a computer program describing a group of predetermined instructions stored on the ROM **22** to realize processing that is needed for the row detection according to the present disclosure. A portion of or an entirety of the processor **20** may be an FPGA (Field Programmable Gate Array), an ASIC (Application Specific Integrated Circuit), or an ASSP (Application Specific Standard Product) each having a CPU mounted thereon.

The communicator **26** is an interface for performing data communication between the processing device **122** and an external computer. The communicator **26** can perform wired communication based on a CAN (Controller Area Network) or the like, or wireless communication complying with the Bluetooth (registered trademark) protocols and/or the Wi-Fi (registered trademark) standards.

The storage **28** can store data on images acquired from the imaging device **120** or images which are under processing. Examples of the storage **28** include a hard disc drive and a non-volatile semiconductor memory.

The hardware configuration of the processing device **122** is not limited to the one described in the above example. It is not required that a portion of or an entirety of the processing device **122** is mounted on the agricultural machine **100**. By utilizing the communicator **26,** one or more computers located outside the agricultural machine **100** may be allowed to function as a portion of or an entirety of the processing device **122**. For example, a server computer that is connected to a network may function as a portion of or an entirety of the processing device **122**. By contrast, a computer mounted on the agricultural machine **100** may perform all the functions that are required of the processing device **122**.

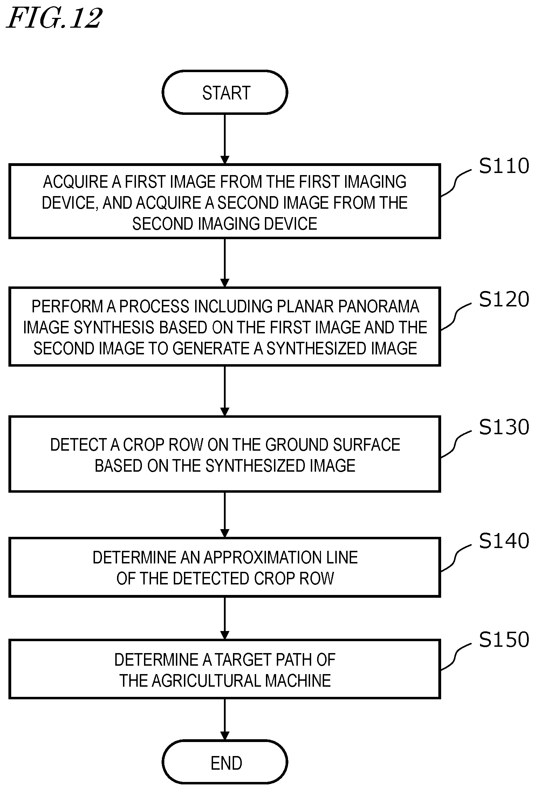

FIG. **12** is a flowchart showing an example operation of the processing device **122** according to the present embodiment. The processing device **122** executes operations of steps **S110** through **S150** shown in FIG. **12** to detect a crop row on the ground surface and determine a target path of the agricultural machine **100** along the crop row.

In step **S110**, the processing device **122** acquires the first image from the first imaging device **120** and acquires the second image from the second imaging device **121**. The first image and the second image according to the present embodiment each include time-series color images. The time-series color images form an aggregation of images that are chronologically generated by the imaging devices **120** and **121** through image capturing. Each of the images is formed of a frame-by-frame group of pixels. For example, in the case where the imaging devices **120** and **121** each output images at a frame rate of 30 frames/second, the processing device **122** can acquire new images with a period of about 33 milliseconds. As compared with a common automobile that travels on public roads, the agricultural machine **100,** such as a tractor or the like, travels in a field at a speed which is relatively low, e.g., about 10 kilometers per hour or lower. In the case where the speed is 10 kilometers per hour, a distance of about 6 centimeters is travelled in about 33 milliseconds. Therefore, the processing device **122** may acquire images with a period of, for example, about 100 to 300 milliseconds, and does not need to process all the frames of images captured by the imaging devices **120** and **121**. The period with which the images to be processed by the processing device **122** are acquired may be automatically changed by the processing device **122** in accordance with the traveling speed of the agricultural machine **100.**

In step **S120**, the processing device **122** executes a process including planar panorama image synthesis based on the first image and the second image captured at substantially the same time to generate a synthesized image. The planar panorama image synthesis may include, for example, a process of performing homography transformation on the first image and the second image to generate a first plan view image and a second plan view image, and a process of synthesizing the first plan view image and the second plan view image. Hereinafter, an example of process of the planar panorama image synthesis will be described.

A plan view image is an overhead-view image as seen from right above a reference plane, which is parallel to the ground surface, in a direction normal to the reference plane. The overhead-view image can be generated by homography transformation of the first image and the second image. Homography transformation is a type of geometrical transformation, and allows a point on a given plane in a three-dimensional space to be transformed into a point on another optional plane. Hereinafter, an example of process of transforming the first image acquired by the first imaging device **120** into the first plan view image will be described. A process of transforming the second image acquired by the second imaging device **121** into the second plan view image is executed by substantially the same method.

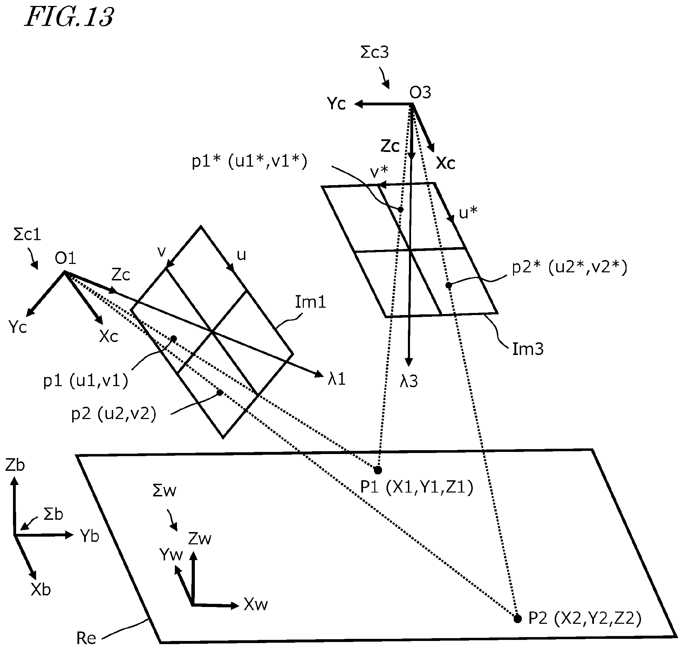

FIG. **13** is a perspective view schematically showing positions of each of the camera coordinate system $\Sigma c1$ of the imaging device **120** at a first pose (position and orientation) and a camera coordinate system $\Sigma c3$ of an imaginary imaging device at a second pose, with respect to the reference plane **Re**. FIG. **13** also shows the vehicle coordinate system $\Sigma b$. In the example shown in FIG. **13,** the camera coordinate system $\Sigma c1$ is inclined so that a **Zc** axis thereof obliquely crosses the reference plane **Re**. By contrast, the camera coordinate system $\Sigma c3$ has a **Zc** axis thereof orthogonal to the reference plane **Re.** In the case where the agricultural machine **100** does not rotate in the pitch direction or the roll direction, a plane including the **Xb** axis and the **Yb** axis of the vehicle coordinate system $\Sigma b$ (hereinafter, referred to as a "vehicle coordinate system plane") is parallel to the reference plane **Re.** In this case, the **Zc** axis of the camera coordinate system $\Sigma c3$ is also orthogonal to the vehicle coordinate system plane. That is, the camera coordinate system $\Sigma c3$ is located so that an overhead-view image as seen from right above the reference plane **Re** and the vehicle coordinate system plane along a direction normal thereto can be acquired.

At a position that is distant from the origin **O1** of the camera coordinate system $\Sigma c1$ by the focal length of the camera in the direction of the **Zc** axis, an imaginary image plane **Im1** exists. The image plane **Im1** is orthogonal to the **Zc** axis and the camera optical axis $\lambda 1$. A pixel position on the image plane **Im1** is defined by an image coordinate system having a u axis and a v axis that are orthogonal to each other. For example, it is assumed that a point **P1** and a point **P2** located on the reference plane **Re** have coordinates (X1,Y1,Z1) and (X2,Y2,Z2) respectively in the world coordinate system $\Sigma w$. In the example of FIG. **13,** the **Xw** axis and the **Yw** axis of the world coordinate system $\Sigma w$ are on the reference plane **Re**. Therefore, Z1=Z2=0. The reference plane **Re** is set so as to expand along the ground surface.

Through perspective projection based on a pinhole camera model, the point **P1** and the point **P2** on the reference plane **Re** are transformed, respectively, into a point **p1** and a point **p2** on the image plane **Im1** of the imaging device **120** at the first pose. On the image plane **Im1,** the point **p1** and the point **p2** are at pixel positions indicated by coordinates (u1,v1) and (u2,v2), respectively.

In the case where it is assumed that the imaging device is at the second pose, an imaginary image plane **Im3** exists at a position that is distant from the origin **O3** of the camera coordinate system Σ**c3** by the focal length of the camera in the direction of the **Zc** axis. In this example, the image plane **Im3** is parallel to the reference plane **Re** and the vehicle coordinate system plane. A pixel position on the image plane **Im3** is defined by the image coordinate system having a **u\*** axis and a **v\*** axis that are orthogonal to each other. This image coordinate system moves together with the vehicle coordinate system Σ**b** with respect to the world coordinate system Σ**w**. Therefore, the pixel position on the image plane **Im3** may also be defined by the vehicle coordinate system Σ**b**. The point **P1** and the point **P2** on the reference plane **Re** are transformed, respectively, into a point **p1\*** and a point **p2\*** on the image plane **Im3** through perspective projection. On the image plane **Im3**, the point **p1\*** and point **p2\*** are at pixel positions indicated by coordinates (u1\*,v1\*) and (u2\*,v2\*), respectively.

Once the relative positions of the camera coordinate systems Σ**c1** and Σ**c3** with respect to the reference plane **Re** in the world coordinate system Σ**w** are given, from a given point (u,v) on the image plane **Im1**, a point (u\*,v\*) corresponding thereto on the image plane **Im3** can be determined through homography transformation. In the case where the point coordinates are expressed by a homogeneous coordinate system, such homography transformation is defined by a transformation matrix H of 3 rows × 3 columns.

[eq. 1]

$$\begin{pmatrix} u* \\ v* \\ 1 \end{pmatrix} = H \begin{pmatrix} u \\ v \\ 1 \end{pmatrix}$$

The contents of the transformation matrix H are defined by numerical values of $h_{11}$, $h_{12}$, ..., $h_{32}$, as indicated below.

[eq. 2]

$$\begin{pmatrix} u* \\ v* \\ 1 \end{pmatrix} = \begin{pmatrix} h11 & h12 & h13 \\ h21 & h22 & h23 \\ h31 & h32 & 1 \end{pmatrix} \begin{pmatrix} u \\ v \\ 1 \end{pmatrix}$$

The eight numerical values ($h_{11}$, $h_{12}$, ..., $h_{32}$) can be calculated by a known algorithm once an image of a calibration board that is placed on the reference plane **Re** is captured by the imaging device **120** attached to the agricultural machine **100**.

In the case where a point on the reference plane **Re** has coordinates (X,Y,0), the coordinates of the corresponding points on the camera image planes **Im1** and **Im3** are associated with the point (X,Y,0) by respective homography transformation matrices H1 and H2, as indicated by equation 3 and equation 4 below.

[eq. 3]

$$\begin{pmatrix} u \\ v \\ 1 \end{pmatrix} = H1 \begin{pmatrix} X \\ Y \\ 1 \end{pmatrix}$$

[eq. 4]

$$\begin{pmatrix} u* \\ v* \\ 1 \end{pmatrix} = H2 \begin{pmatrix} X \\ Y \\ 1 \end{pmatrix}$$

From the above two equations, the following equation is derived. As is clear from this equation, the transformation matrix H is equal to H2H1$^{-1}$. H1$^{-1}$ is an inverse of H1.

[eq. 5]

$$\begin{pmatrix} u* \\ v* \\ 1 \end{pmatrix} = H2H1^{-1} \begin{pmatrix} u \\ v \\ 1 \end{pmatrix}$$

The contents of the transformation matrices H1 and H2 depend on the reference plane **Re.** Therefore, when the position of the reference plane **Re** changes, the contents of the transformation matrix H also change.

By utilizing such homography transformation, a plan view image of the ground surface can be generated from an image of the ground surface acquired by the imaging device **120** at the first pose. In other words, through the homography transformation, coordinates of a given point on the image plane **Im1** of the imaging device **120** can be transformed into coordinates of a point that is on the image plane **Im3** of the imaginary imaging device at a predetermined pose with respect to the reference plane **Re.**

After calculating the contents of the transformation matrix H, the processing device **122** executes a software program based on the aforementioned algorithm to generate, from the time-series images output from the imaging device **120,** an overhead-view image of the ground surface **10** as seen from above the ground **10.** Before the processing of generating the overhead-view image, pre-processing such as white balancing, noise reduction or the like may be applied to the time-series images.

In the above description, it is assumed that the points in the three-dimensional space (e.g., **P1, P2)** are all located on the reference plane **Re** (e.g., Z1=Z2=0). In the case where the height of a crop with respect to the reference plane **Re** is non-zero, in the post-homography transformation plan view image, the positions of points respectively corresponding to the points on the reference plane **Re** are shifted from proper positions thereof. In order to suppress an increase in the amount of shift, it is desirable that the height of the reference plane **Re** is close to the height of the crop as a target of detection. On the ground surface **10,** bumps and dents, e.g., ridges, furrows, trenches or the like, may exist. In such a case, the reference plane **Re** may be offset upward from the bottoms of such bumps and dents. The offset distance may be appropriately set depending on the bumps and dents of the ground surface **10** on which crops are planted.

When the vehicle body **110** (see FIG. **4)** makes a motion of roll or pitch while the agricultural machine **100** is traveling on the ground surface **10,** the pose of the imaging device **120** is changed. Therefore, the contents of the transformation matrix H1 may change. In such a case, the rotation angle of the roll and the pitch of the vehicle body **110** can be measured by an inertial measurement unit (IMU), so that the transformation matrix H1 and the transformation matrix H are corrected in accordance with the change in the pose of the imaging device **120.**

The processing device **122** can transform the second image acquired by the second imaging device **121** into the second plan view image by a method substantially the same as the method for transforming the first image acquired by the first imaging device **120** into the first plan view image. The first plan view image and the second plan view image are each generated as an image on the imaginary image plane Im3. The first plan view image and the second plan view image may be represented by an xb coordinate and a yb coordinate in the vehicle coordinate system Σ**b**. As shown in FIG. **4,** the image capturing area of the first imaging device **120** and the image capturing area of the second imaging device **121** partially overlap each other. Therefore, the first plan view image and the second plan view image include overlapping areas.

Upon generating the first plan view image and the second plan view image, the processing device **122** synthesizes these images to generate a synthesized image. For example, the processing device **122** generates the synthesized image by a synthesis process including a process of determining a weighted average of a pixel value of each of pixels in a first overlapping region and a pixel value of each of pixels in a second overlapping region respectively corresponding to the each of the pixels in the first overlapping region, the weighted average being determined in accordance with the position of each of the pixels. The first overlapping region is a region of the first plan view image that overlaps the second plan view image. The second overlapping region is a region of in the second plan view image that overlaps the first plan view image.

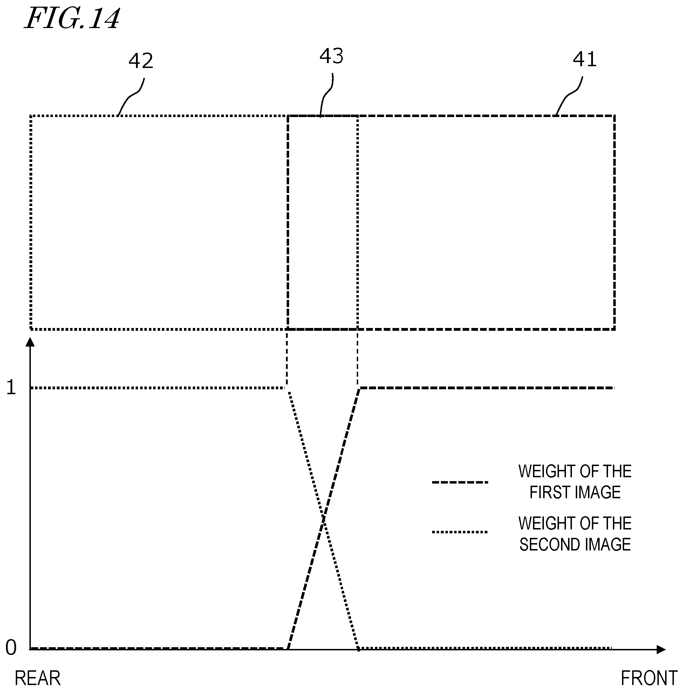

FIG. **14** is a view provided to describe the synthesis process performed on the first plan view image and the second plan view image. In FIG. **14,** a region of a first plan view image **41** is represented with a broken line, and a region of a second plan view image **42** is represented with a dotted line. The first plan view image **41** and the second plan view image **42** include an overlapping region **43.** The pixel value of each of the pixels in the synthesized image may be determined by a weighted average determined as follows: the pixel value in the first plan view image **41** is multiplied by a first weight, and the pixel value in the second plan view image **42** is multiplied by a second weight, and then the two products are added together. In the example of FIG. **14,** the first weight is 0 in a region of the second plan view image **42** excluding the overlapping region **43.** In the overlapping region **43,** the first weight linearly increases from 0 to 1 in a forward direction of the vehicle (rightward in FIG. **14).** In a region of the first plan view image **41** excluding the overlapping region **43,** the first weight is 1. By contrast, the second weight is 1 in the region of the second plan view image **42** excluding the overlapping region **43.**

In the overlapping region **43,** the second weight linearly decreases from 1 to 0 in the forward direction of the vehicle. In the region of the first plan view image **41** excluding the overlapping region **43,** the second weight is 0. The processing device **122** may be configured to, in this manner, perform a weighted average process on the pixel value of each pixel in the overlapping region **43** in the first plan view image **41** and the pixel value of each corresponding pixel in the overlapping region **43** in the second plan view image **42** so that the weight of the pixel value in the first plan view image **41** increases in the forward direction of the vehicle and so that the weight of the pixel value in the second plan view image **42** increases in a rearward direction of the vehicle. With such a process, the pixel values in the overlapping region in the synthesized image can be appropriately determined, and thus a preferred synthesized image can be generated. The method for determining the pixel values in the overlapping region in the synthesized image is not limited to the one described in the above example. For example, the weight of each image in the overlapping region may be increased or decreased in a cubic function manner instead of linearly (in a linear function manner). Even in such a case, the weight of each image value in the overlapping region may be determined so as to monotonously increase or decrease in a direction corresponding to the forward direction of the vehicle.

The process of the planar panorama image synthesis based on the first image and the second image is not limited to the one described in the above example, and any of various algorithms is usable to generate a synthesized image.

In the case where the imaging devices **120** and **121** are provided relatively close to the ground surface **10** as shown in FIG. **4,** the imaging devices **120** and **121** may each be a camera generating a wide-angle image such as, for example, a fisheye camera or the like. Even in the case where the image is largely distorted, the internal parameters of the camera can be appropriately set, so that the image acquired by image capturing is transformed into a plan view image.

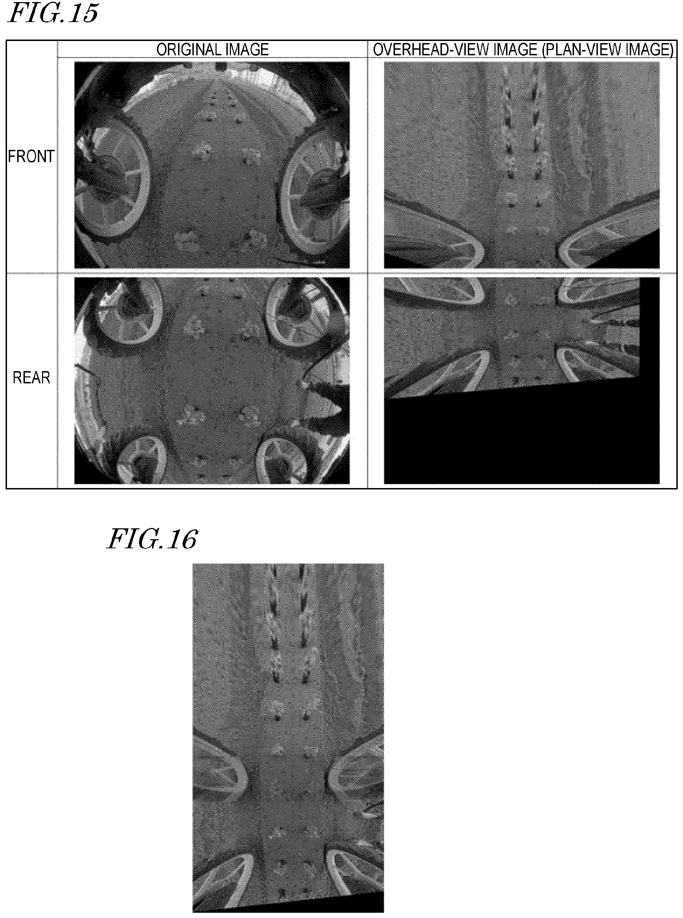

FIG. **15** shows an example of the first image, the second image, the first plan view image and the second plan view image. In FIG. **15,** the top left area shows the first image, the bottom left area shows the second image, the top right area shows the first plan view image, and the bottom right area shows the second plan view image. In this example, the first image shows the front wheels of the agricultural machine **100** and a region of the ground surface that is between the front wheels. The second image shows the front wheels and the rear wheels of the agricultural machine **100** and a region of the ground surface that is between the front wheels and the rear wheels. The processing device **122** transforms the first image and the second image respectively into the first plan view image and the second plan view image shown in the right areas of FIG. **15.** A bottom portion of the first plan view image and a top portion of the second plan view image include a common subject (front wheels, and the ground surface and the crops between the front wheels). This portion corresponds to the overlapping region. The processing device **122** interpolates pixel values into the overlapping region based on the first plan view image and the second plan view image by the above-described synthesis process to generate a synthesized image.

FIG. **16** shows an example of the synthesized image generated in the example of FIG. **15.** In this example, the above-described weighted average process is applied to the overlapping region corresponding to the bottom portion of the first plan view image and the top portion of the second plan view image. As a result, a synthesized image that is more natural in terms of the shape and the color of the crops in the overlapping region is generated. The crop row can be detected based on such a synthesized image, so that the detection precision is improved as compared with a case where the crop row is detected based on a single image. For example, even in the case where there is a missing plant, the approximation line of the crop row can be calculated more accurately.

Now, an example of calibration operation of determining the transformation matrix used for the planar panorama image synthesis process, by which a synthesized image is generated from the first image and the second image, will be described. The calibration is performed based on two images acquired by the imaging devices **120** and **121** capturing images of a specific subject on the ground surface. The calibration may be performed before the use of the agricultural machine **100** is started, or when the position or the orientation of the imaging device **120 or 121** is shifted from the initial state. In the calibration, the processing device **122** executes the following operations **S1, S2** and **S3.**

(S1) Acquires a first reference image generated by the first imaging device **120** capturing an image of the specific subject on the ground surface, and acquires a second reference image generated by the second imaging device **121** capturing an image of the subject.

(S2) Extracts a plurality of feature points of the subject from each of the first reference image and the second reference image.

(S3) Generates or updates the transformation matrix usable for the planar panorama image synthesis based on the relationship between the positions of the plurality of feature points in the first reference image and the positions of the plurality of corresponding feature points in the second reference image.

The specific subject to be used for the calibration may be, for example, a board on which a characteristic pattern usable as an AR (Augmented Reality) marker is drawn. Alternatively, the specific subject may be the wheels of the agricultural machine **100.** In the following description, the specific subject to be used for the calibration will be referred to as a "calibration subject" .

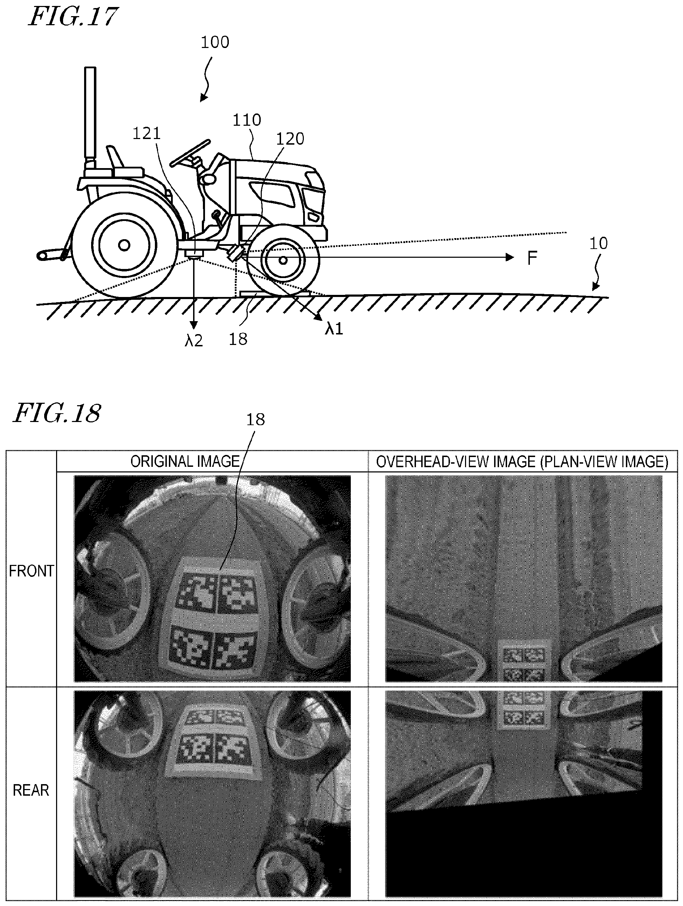

FIG. **17** shows an example of state where an image of a calibration subject **18** placed on the ground surface **10** is captured by the imaging devices **120** and **121**. In this example, the calibration subject **18** is a board on which a plurality of marks each having a characteristic pattern are drawn, and is placed between the two front wheels of the agricultural machine **100.** In a state where the agricultural machine **100** is at a pause, the first imaging device **120** and the second imaging device **121** capture the ground surface on which the calibration subject **18** is placed, and thus respectively generate the first reference image and the second reference image.

FIG. **18** shows an example of images acquired by image capturing of the calibration subject **18.** The first imaging device **120** captures an image of the calibration subject **18** to generate the first reference image shown in the top left area of FIG. **18.** The second imaging device **121** captures an image of the calibration subject **18** to generate the second reference image shown in the bottom left area of FIG. **18.** The processing device **122** detects a plurality of feature points (e.g., four corners of the board, corners of each of four marks, etc.) in the calibration subject **18** from the first reference image and the second reference image, and calculates the transformation matrix based on the positions of the plurality of feature points.

The top right area of FIG. **18** shows an example of plan view image obtained as a result of the transformation of the first reference image. The bottom right area of FIG. **18** shows an example of plan view-image obtained as a result of the transformation of the second reference image. The processing device **122** stacks the plurality of feature points of the calibration subject **18** in these plan view images to determine a range corresponding to the overlapping region, and records information regarding the range on the storage. Subsequent synthesis processes are executed based on the recorded information.

FIG. **12** is referred to again. In step **S130,** the processing device **122** detects the crop row on the ground surface based on the synthesized image. For example, the processing device **122** generates, from the synthesized image, a synthesized enhanced image in which the color of the crop row (e.g., green) is enhanced, and thus can detect the edge lines of the crop row on the ground surface based on the synthesized enhanced image.

In step **S140,** the processing device **122** determines an approximation line of the detected crop row. For example, the processing device **122** determines a line passing the center between the edge lines at both of two ends of the detected crop row as the approximation line.

In step **S150,** the processing device **122** determines a target path of the agricultural machine **100** along the approximation line, on the vehicle coordinate system. The target path may be determined so as to, for example, overlap the approximation line of the crop row. Note that in the configuration, as in the examples shown in FIGS. **3A** and **3B,** in which the imaging devices **120** and **121** are provided in a side portion of the agricultural machine **100,** the target path may be set to be parallel to the approximation line of the crop row or the ridge at a position away from the approximation line by a predetermined distance. The processing device **122** outputs information on the determined target path to the automatic steering device **124** of the agricultural machine **100.** The automatic steering device **124** performs the steering control on the agricultural machine **100** so that the agricultural machine **100** travels along the target path.

Now, a specific example of method for detecting the crop row in step **S130** will be described. Upon generating the synthesized image, the processing device **122** can execute the following operations **S11, S12** and **S13** to detect the crop row from the synthesized image.

**(S11)** Generates, from the synthesized image, a synthesized enhanced image in which the color of the crop row as a target of detection is enhanced.

**(S12)** Generates, from the synthesized enhance image, a binary image, in which the pixels are classified into first pixels each having a color index value of the crop row that is equal to, or higher than, a threshold value, and second pixels each having a color index value of the crop row that is lower than the threshold value.

**(S13)** Determines the positions of the edge lines of the crop row based on the index values of the first pixels.

Hereinafter, specific example of the operations **S11, S12** and **S13** will be described.

The synthesized image shown in FIG. **16** shows rows of crops (crop rows) planted in rows on the ground surface of a field. In this example, the crop rows are arranged generally parallel to each other and at substantially equal intervals on the ground surface.

In the operation **S11,** the processing device **122** generates a synthesized enhanced image in which the color of the crops as the target of detection is enhanced, based on the synthesized image. The crops receives sunlight (white light) to perform photosynthesis, and therefore, contains chlorophyll. Chlorophyll has a lower absorptivity for green than for red or blue. Therefore, the spectrum of the sunlight reflected by the crops exhibits a higher value in a wavelength range of green than the spectrum of the sunlight reflected by the soil surface. As a result, the color of the crops generally includes a large amount of green components, and the "color of the crops" is typically green. However, as described below, the "color of the crops" is not limited to green.

In the case where the color of the crops as the target of detection is green, the enhanced image in which the color of the crops is enhanced is an image obtained as a result of the RGB values of each of pixels in the color image being transformed into pixel values having a relatively high ratio of the G value. Such transformation of the pixel values, which is performed to generate an enhanced image, is defined by, for example, "(2 × G value - R value - B value)/(R value + G value + B value)". Herein, (R value + G value + B value), which is the denominator, is a factor for normalization. Hereinafter, the normalized RGB values will be referred to as "rgb values", and r, g and b are defined as r=R value/(R value + G value + B value), g=G value/(R value + G value + B value), and b=B value/(R value + G value + B value). "2 × g - r - b" is referred to as an excess green index (E×G).

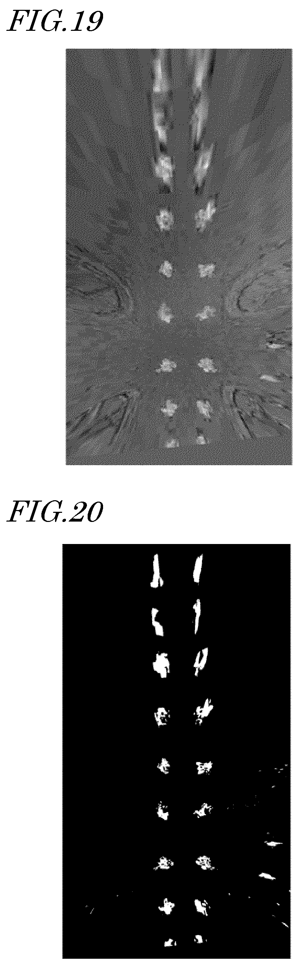

FIG. **19** shows a synthesized enhanced image obtained as a result of the RGB values in the synthesized image shown in FIG. **16** being transformed into "2 × g - r - b". As a result of this transformation, in the synthesized image shown in FIG. **16,** a pixel having "r+b" smaller than g is displayed bright, and a pixel having "r+b" larger than g is displayed dark. As a result of this transformation, an image in which the color of the crops as the target of detection (in this example, "green") is enhanced is provided (a synthesized enhanced image is provided). In the image shown in FIG. **19,** a relatively bright pixel has a relatively large amount of green components, and belongs to a region of the crops.

As the "color index value" enhancing the color of the crops, another index such as, for example, a green red vegetation index (G value - R value)/(G value + R value) or the like may be used instead of the excess green index (E×G). In the case where the imaging device may function also as an infrared camera, an NDVI (Normalized Difference Vegetation Index) may be used as the "color index value of the crops".

There are cases where each of rows of crops is covered with a sheet called a "mulching sheet". In such a case, the "color of the crop rows" is the "color of objects located in rows while covering the crops". Specifically, in the case where the color of the sheet is black, which is an achromatic color, the "color of the crop rows" signifies "black". In the case where the color of the sheet is red, the "color of the crop rows" signifies "red". In this manner, the "color of the crop rows" is not limited to signifying the color of the crops themselves, but also signifies the color of the region defining the crop rows (color recognizable from the color the soil surface).

In order to generate an enhanced image in which the "color of the crop rows" is enhanced, transformation of an RGB color space into an HSV color space may be used. An HSV color space is a color space that is formed of the three components of hue, saturation, and value. By using color information obtained by transformation of an RGB color space into an HSV color space, it is made possible to detect a "color" with low saturation, such as black or white. In order to detect "black" utilizing an OpenCV library, the hue may be set to the maximum range (0-179), the saturation may be set to the maximum range (0-255), and the value range may be set to 0-30. In order to detect "white", the hue may be set to the maximum range (0-179), the saturation may be set to the maximum range (0-255), and the value range may be set to 200-255. Any pixel that has a hue, a saturation, and a value falling within such setting ranges is a pixel having the color to be detected. In order to detect, for example, a green pixel, the hue range may be set to a range of e.g. 30-90.

Such a synthesized enhanced image in which the color of the crops as the target of detection is enhanced is generated, so that the region of the crops is easily distinguished (extracted) from the remaining background region (so that segmentation is made easily).

Now, the operation **S12** will be described.

In the operation **S12,** the processing device **122** generates, from the synthesized enhanced image, a binary image, in which the pixels are classified into first pixels each having a color index value of the crop rows that is equal to, or higher than, a threshold value, and second pixels each having a color index value of the crop rows that is lower than the threshold value. FIG. **20** shows an example of such a binary image.

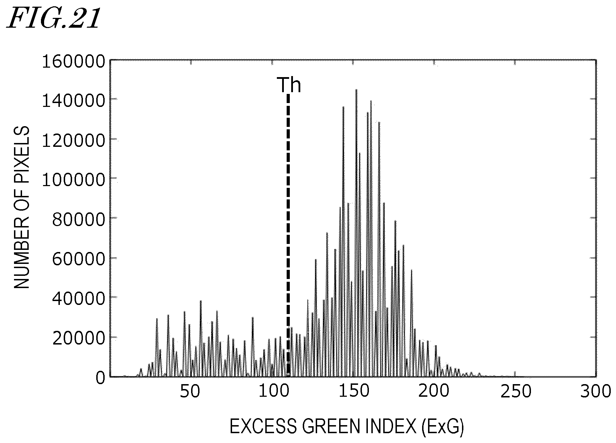

In the present embodiment, the aforementioned excess green index (E×G) is adopted as the color index value of the crop rows, and a discriminant analysis method (Otsu's binarization) is used to determine a discrimination threshold. FIG. **21** shows a histogram of the excess green index (E×G) in the synthesized enhanced image shown in FIG. **19.** In the histogram, the horizontal axis represents the excess green index (E×G), and the vertical axis represents the number of pixels in the image (corresponding to frequency of occurrence). In FIG. **21,** a broken line is shown indicating a threshold value **Th** that is calculated by a discriminant analysis algorithm. The pixels in the synthesized enhanced image are classified into two classes by the threshold value **Th.** The right side of the broken line indicating the threshold value **Th** shows the frequency of occurrence of pixels each having an excess green index (E×G) that is equal to, or higher than, the threshold value. These pixels are estimated as belonging to a crop class. By contrast, the left side of the broken line indicating the threshold value **Th** shows the frequency of occurrence of pixels each having an excess green index (E×G) that is lower than the threshold value. These pixels are estimated as belonging to a non-crop class, e.g., the soil. In this example, the first pixels each having an index value that is equal to, or higher than, the threshold value correspond to "crop pixels". By contrast, the second pixels each having an index value that is lower than the threshold value correspond to "background pixels". The background pixels correspond to objects other than the target of detection, e.g., the soil surface. The aforementioned intermediate regions (work paths) **14** may be formed of the background pixels. Note that the method for determining the threshold value is not limited to the one described in the above example. For example, other methods utilizing machine learning may be used to determine the threshold value.

By assigning each of the pixels forming the synthesized enhanced image as either a "first pixel" or a "second pixel", it becomes possible to extract a region that is the target of detection from the synthesized enhanced image. Also, by giving "zero" as the pixel value of each "second pixel", or by removing data on the second pixel from the image data, it becomes possible to mask a region other than regions that are the target of detection. When finalizing the regions to be masked, a process of incorporating a pixel having an excess green index (E×G) exhibiting a locally high value, as a noise, into the masked regions. As a result of such a process, the binary image shown in FIG. **20,** in which the pixels are classified into the first pixels and the second pixels can be generated.

Now the operation **S13** will be described.

In the operation **S13,** the processing device **122** determines the positions of the edge lines of the crop rows **12** based on the index values of the first pixels in the binary image.

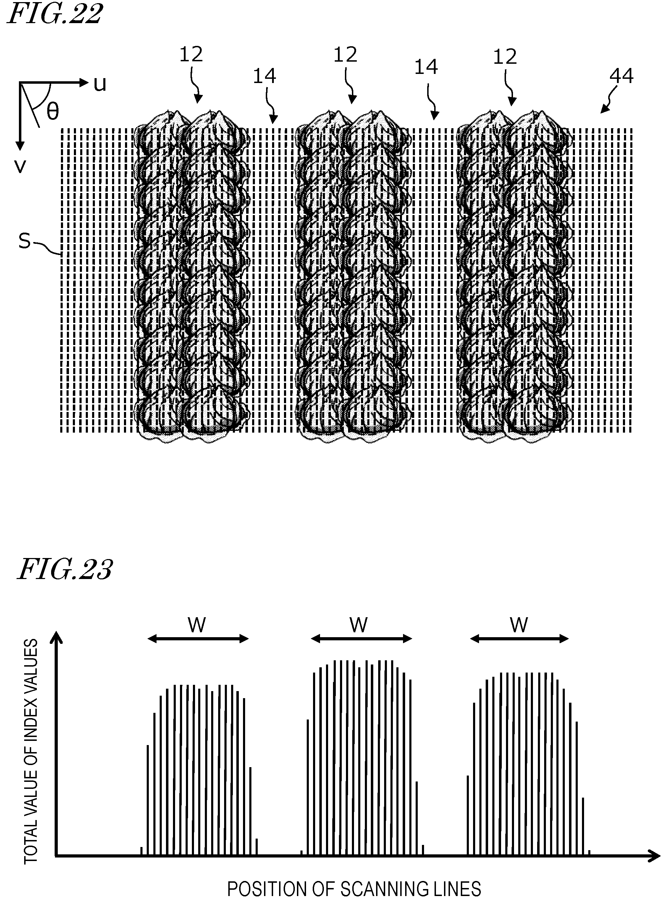

FIG. **22** schematically shows an example of plan view image **44** showing three crop rows **12.** In this example, the direction of the crop rows **12** is parallel to the image vertical direction (v-axis direction). FIG. **22** shows a large number of scanning lines (broken lines) **S** that are parallel to the image vertical direction (v-axis direction). The processing device **122** totals the index values of pixels that are located on the plurality of scanning lines **S,** for each scanning line, to obtain a total value.

FIG. **23** schematically shows the relationship between the positions of the scanning lines **S** and the total value of the index values, obtained for the image **44** shown in FIG. **22.** In FIG. **23,** the horizontal axis represents the positions of the scanning lines **S** along the image horizontal direction (u-axis direction). In the image **44,** in the case where many of the pixels that are crossed by the scanning lines **S** are the first pixels belonging to the crop rows **12,** such scanning lines **S** each have a large total value. By contrast, in the case where many of the pixels that are crossed by the scanning lines **S** are the second pixels (background pixels) belonging to the intermediate regions (work paths) **14** located between the crop rows **12,** such scanning line **S** each have a small total value. Note that, according to the present embodiment, the intermediate regions (work paths) **14** are masked, so that the second pixels have an index value of zero.

In the example in FIG. **22,** there exist concave regions where the total values are zero or near-zero, and convex regions that are distinguished from the concave regions. The concave regions correspond to the intermediate regions (work paths) **14,** whereas the convex regions correspond to the crop rows **12.** In the present embodiment, predetermined positions on opposite sides sandwiching a peak of the total values in each of the convex regions, specifically, the positions of the scanning lines **S** having total values of a predetermined ratio (e.g., value selected from a range of 60% or higher and 90% or lower) with respect to the peak of the total values, are determined as the positions of the edge lines of each of the crop rows **12.** In FIG. **23,** two ends of each of arrows **W** represent the positions of the edge lines of each crop row **12.** In the example of FIG. **23,** the positions of the edge lines of each crop row **12** are positions of the scanning lines **S** having a 80% value with respect to the peak of the total values of the respective crop row **12.**

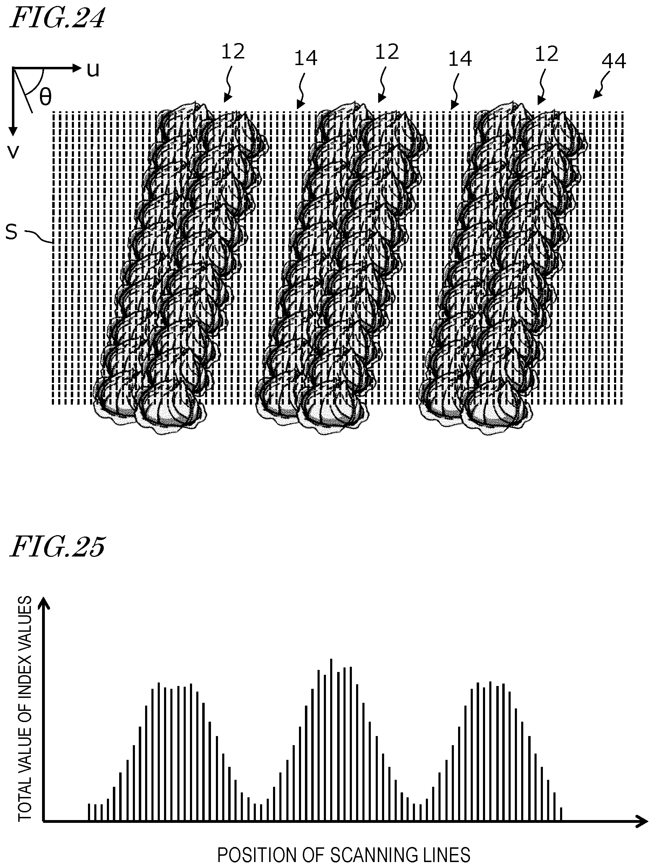

FIG. **24** shows an example of binary image **44,** in which the crop rows **12** extend obliquely. In the images acquired by the imaging devices **120** and **121,** the crop rows **12** may extend in directions that are inclined right or left, depending on the orientation of the agricultural machine **100.** In the case where a plan view image is generated from such images through homography transformation, as in the example of FIG. **24,** the direction of the crop rows **12** is inclined with respect to the image vertical direction (v-axis direction).

FIG. **24** also shows a large number of scanning lines (broken lines) **S** that are parallel to the image vertical direction (v-axis direction). The processing device **122** totals the index values of the pixels that are located on such a plurality of scanning lines **S,** for each scanning line **S,** to obtain a total value of each scanning line **S.** FIG. **25** schematically shows the relationship between the positions of the scanning lines **S** and the total value of the index values, obtained for the image shown in FIG. **24.**

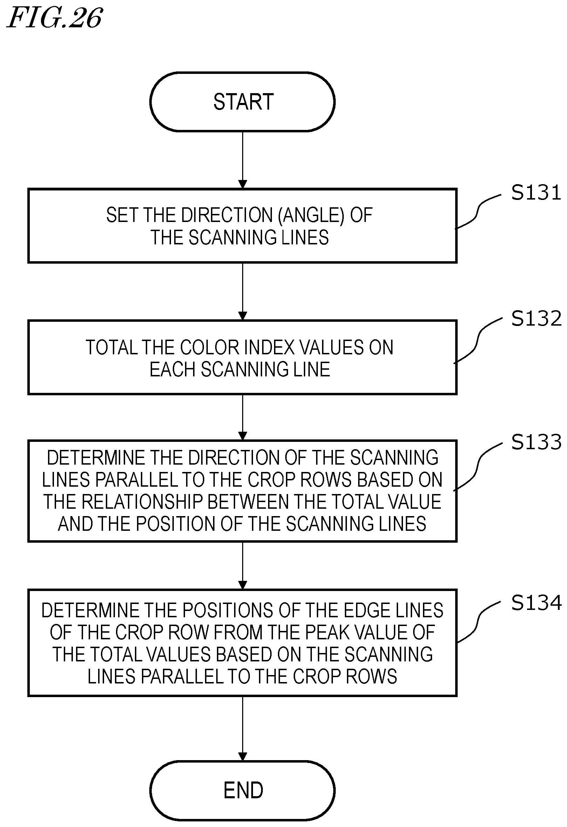

The processing device **122** changes the direction (angle) of the scanning lines **S** to search for the direction, of the scanning lines **S,** that is parallel to the direction of the crop rows **12.** FIG. **26** is a flowchart showing an example of method for searching for the direction, of the scanning lines **S,** that is parallel to the direction of the crop rows **12.**

In step **S131,** the processing device **122** sets the direction (angle) of the scanning lines **S.** Herein, an angle in the clockwise direction with respect to the **u** axis in the image coordinate system is set as the angle θ (see FIG. **22** and FIG. **24).** The search for the angle θ may be done by, for example, setting a range of e.g., 60 to 120° and changing the angle by, for example, 1 degree. In this case, in step **S131,** 60°, 61°, 62°, ..., 119° and 120° are set as the angle θ of scanning lines **S.**

In step **S132,** the processing device **122** totals the index values of the pixels on the scanning line **S** extending in the direction of each angle θ to obtain data on a distribution of the total values in a direction vertical to the scanning lines. This data shows different distributions for different angles θ.

In step **S133,** the processing device **122** selects, from the data on the distribution of the total values in the plurality of directions obtained as described above, a distribution in which the boundaries between the concave regions and the convex regions are clear as shown in FIG. **23** and the crop rows **12** are distinguished from the intermediate regions **14** most clearly, and determines the angle θ of the scanning lines **S** generating the distribution.

In step **S134,** the processing device **122** determines the edge lines of each of the crop rows **12** from the peak value of the distribution corresponding to the angle θ determined in step **S133.** As described above, the positions of the scanning lines **S** each having a total value that is, for example, 0.8 times the peak value may be adopted as the edge lines.

Note that, when searching for the direction (angle) of the scanning lines **S,** each time the angle θ is changed by 1 degree within the range of search, the processing device **122** may determine the distribution of the total values on the scanning line **S** at the angle θ. The processing device **122** may calculate a feature amount (e.g., depth of the concave region/height of the convex region, differential value of the envelope, etc.) from the waveform of the distribution of the total values, and determine whether or not the direction of the crop rows **12** is parallel to the direction of the scanning lines **S** based on the feature amount.

Note that the method for determining the angle θ is not limited to the one described in the above example. In the case where the direction in which the crop rows extend is known through measurements, the orientation of the agricultural machine **100** may be measured with an IMU thereon, and the angle θ of the orientation of the agricultural machine **100** with respect to the direction in which the crop rows extend may be determined.

With the above-described method, influences of daylighting conditions that vary depending on the weather conditions such as forward light, backlight, sunny weather, cloudy weather, fog or the like or on the time of work can be reduced, and thus the crop rows can be detected at high precision. Even if there is a change in the type of crops (cabbage, broccoli, radish, carrot, lettuce, Chinese cabbage, etc.), growth state (from seedling to a fully grown state), presence/absence of diseases, presence/absence of fallen leaves or weeds, or soil color, the crop rows can be detected with high robustness.

In the above embodiment, after generating the synthesized image of the first plan view image and the second plan view image generated by homography transformation of the first image and the second image, the processing device **122** determines the threshold value for the binarization in the synthesized image and extracts a crop row region by use of the pixels each having a pixel value equal to, or higher than, the threshold value. Instead of using this method, the processing device **122** may detect the crop rows by executing the following steps **S21** through **S26.**

**(S21)** Generates, from the first image, a first enhanced image in which the color of the crop rows is enhanced.
**(S22)** Generates, from the second image, a second enhanced image in which the color of the crop rows is enhanced.
**(S23)** Generates, from the first enhanced image, a first plan view image, as seen from above the ground, in which the pixels are classified into pixels each having a color index value of the crop rows that is equal to, or higher than, the threshold value and pixels each having a color index value of the crop rows that is lower than the threshold value.
**(S24)** Generates, from the second enhanced image, a second plan view image, as seen from above the ground, in which the pixels are classified into pixels each having a color index value of the crop rows that is equal to, or higher than, the threshold value and pixels each having a color index value of the crop rows that is lower than the threshold value.
**(S25)** Synthesizes the first plan view image and the second plan view image to generate a synthesized image.
**(S26)** Detects the crop rows on the ground surface based on the synthesized image.

With such a method, the first plan view image and the second plan view image in which the crop row region is enhanced are generated, and the synthesized image in which the crop row region is enhanced is generated based on these images. The synthesized image is a binary image as shown in FIG. **20**. With such a method also, the crop rows can be detected at high precision like by the method described above.

In the above-described example, the crop rows are detected from the synthesized image. It is also possible to detect ridges from the synthesized image. Hereinafter, an example of method for detecting a ridge on the ground surface will be described.

The processing device **122** acquires the first image and the second image, which are each time-series images, from the imaging devices **120** and **121,** and generates a synthesized image by the above-described method on a frame-by-frame basis. The synthesized image is generated at a predetermined frame rate. As a result, time-series synthesized images are obtained. Next, the processing device **122** executes the following operations **S31, S32** and **S33**.

**(S31)** From a plurality of synthesized images generated at different times, determines a first amount of movement, in the image plane, of each of a plurality of feature points by feature point matching.
**(S32)** Performs perspective projection of each of the plurality of feature points from the image plane onto a reference plane corresponding to the ground surface, and determines a second amount of movement of each of the projection points in the reference plane, based on the first amount of movement.
**(S33)** Estimates the height of each of the plurality of feature points from the reference plane based on the second amount of movement, to detect a ridge on the ground surface.

As a result of the above-described operations, the processing device **122** can detect edge lines of the ridge. Based on the positions of the edge lines of the ridge, the processing device **122** can determine an approximation line linearly approximating the ridge.

The above-described example of method for detecting the crop row or the ridge is described in detail in International Publication WO2023/276227 of an international application filed by the present Applicant. The entirety of the disclosure of International Publication WO2023/276227 is incorporated herein by reference.

The method for detecting the crop row or the ridge formed in a field is not limited to the one described in the above example, and may be any of a wide variety of methods using known algorithms. For example, a method for linearly approximating a crop row is described in detail in Japanese Patent No. 2624390 granted to the present Applicant. The entirety of the disclosure of Japanese Patent No. 2624390 is incorporated herein by reference. Japanese Laid-Open Patent Publication No. 2016-146061 describes a method for detecting a line formed by steps or trenches of a ridge or grooves. The entirety of the disclosure of Japanese Laid-Open Patent Publication No. 2016-146061 is incorporated herein by reference.

(1-3. Example configuration of the agricultural machine)

Now, an example configuration of the agricultural machine will be described.

The agricultural machine includes the above-described row detection system, and a control system executing controls to realize automatic steering driving. The control system is a computer system that includes a storage and a controller, and is configured to control the steering, the travel, and other operations of the agricultural machine.

In a usual automatic steering operation mode, the controller may be configured to specify the position of the agricultural machine by using a positioning device, and, based on a target path generated in advance, control the steering of the agricultural machine so that the agricultural machine travels along the target path. Specifically, the controller may control the steering angle of the wheels responsible for steering (e.g., front wheels) of the agricultural machine so that the work vehicle travels along the target path within a field. The agricultural machine according to the present embodiment includes an automatic steering device configured to control the agricultural machine to travel not only in such a usual automatic steering mode but also under the "row-following travel control" within the field in which rows of crops or ridges are provided.

The positioning device includes a GNSS receiver, for example. Such a positioning device is able to specify the position of the work vehicle based on signals from GNSS satellites. However, in the case where the rows are in the field, even if the positioning device is able to measure the position of the agricultural machine with high precision, the interspaces between the rows are narrow, such that it is highly possible that the traveling device, e.g., wheels, of the agricultural machine deviates into the rows depending on how the crops are planted or on the state of growth. In the present embodiment, however, the aforementioned row detection system can be used to detect the rows actually existing and perform appropriate automatic steering. In other words, the automatic steering device included in the agricultural machine according to an embodiment of the present disclosure is configured to control the steering angle of the wheels responsible for steering, based on the positions of the edge lines of the row that are determined by the row detection system.

Moreover, in the agricultural machine according to the present embodiment, the processing device of the row detection system can monitor the positional relationship between the edge lines of the rows and the wheels responsible for steering based on the time-series color images. By generating a positional error signal from this positional relationship, it becomes possible for the automatic steering device of the agricultural machine to appropriately adjust the steering angle so as to reduce the positional error.

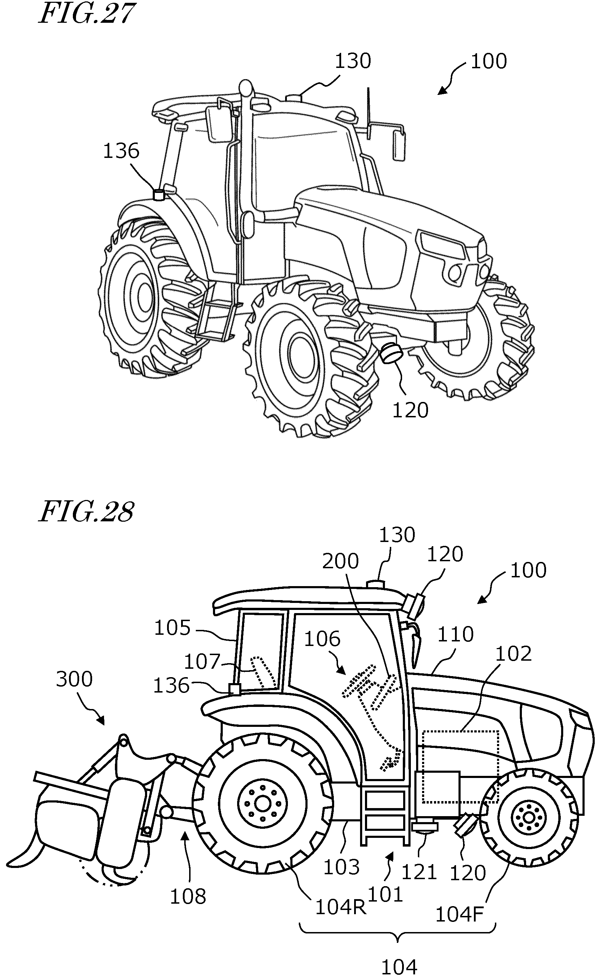

FIG. **27** is a perspective view showing an example of external appearance of the agricultural machine **100** according to the present embodiment. FIG. **28** is a side view schematically showing an example of the agricultural machine **100** in a state where the implement **300** is attached thereto. The agricultural machine **100** according to the present embodiment is an agricultural tractor (work vehicle) having the implement **300** attached thereto. The agricultural machine **100** is not limited to a tractor, or does not need to have the implement **300** attached thereto. The row detection technique according to the present disclosure can exhibit excellent effects when being used in small-sized crop management machines and vegetable transplanters that may be used for tasks associated with the interridge land, such as, for example, ridge making, intertillage, ridging, weeding, side dressing, and preventive pest control.

The agricultural machine **100** according to the present embodiment includes the imaging devices **120** and **121,** a positioning device **130,** and an obstacle sensor(s) **136**. Although one obstacle sensor **136** is illustrated in FIG. **27,** the obstacle sensors **136** may be provided at a plurality of positions of the agricultural machine **100**.

As shown in FIG. **28,** the agricultural machine **100** includes the vehicle body **110,** a prime mover (engine) **102,** and a transmission **103**. On the vehicle body **110,** the wheels **104** with tires and a cabin **105** are provided. The wheels **104** include the pair of front wheels **104F** and the pair of rear wheels **104R.** Inside the cabin **105,** a driver's seat **107,** a steering device **106,** an operational terminal **200,** and switches for manipulation are provided. The front wheels **104F** or the rear wheels **104R** may be replaced by a plurality of wheels with caterpillar tracks attached thereon (may be replaced with crawlers), instead of being wheels with tires. The agricultural machine **100** may be a four-wheel drive vehicle including the four wheels **104** as driving wheels, or a two-wheel drive vehicle including the pair of front wheels **104F** or the pair of rear wheels **104R** as driving wheels.

The positioning device **130** in the present embodiment includes a GNSS receiver. The GNSS receiver includes an antenna to receive a signal(s) from a GNSS satellite(s) and a processing circuit to determine the position of the agricultural machine **100** based on the signal(s) received by the antenna. The positioning device **130** receives a GNSS signal(s) transmitted from a GNSS satellite(s), and performs positioning on the basis of the GNSS signal(s). GNSS is a general term for satellite positioning systems, such as GPS (Global Positioning System), QZSS (Quasi-Zenith Satellite System, e.g., MICHIBIKI), GLONASS, Galileo, BeiDou, and the like. Although the positioning device **130** according to the present embodiment is disposed above the cabin **105,** it may be disposed at any other position.

Furthermore, the positioning device **130** may complement the position data by using a signal from an IMU. The IMU can measure tilts and minute motions of the agricultural machine **100**. The position data based on the GNSS signal can be complemented using the data acquired by the IMU, so that the positioning performance is improved.

In the example shown in FIGS. **27** and **28**, the obstacle sensor(s) **136** is provided at the rear of the vehicle body **110**. The obstacle sensor(s) **136** may be disposed at any other position than the rear of the vehicle body **110**. For example, one or more obstacle sensors **136** may be disposed at any position at the sides of the vehicle body **110,** the front of the vehicle body **110,** and the cabin **105**. The obstacle sensor(s) **136** detects objects around the agricultural machine **100**. Each obstacle sensor **136** may include a laser scanner and/or an ultrasonic sonar, for example. In the case where an obstacle exists in a detection area (search area) present in a predetermined distance from the obstacle sensor **136,** the obstacle sensor **136** outputs a signal indicating the presence of the obstacle. A plurality of obstacle sensors **136** may be provided at different positions of the body of the agricultural machine **100**. For example, a plurality of laser scanners and a plurality of ultrasonic sonars may be disposed at different positions of the body. Providing such a large number of obstacle sensors **136** can reduce blind spots in monitoring obstacles around the agricultural machine **100**.

The prime mover **102** may be a diesel engine, for example. Instead of a diesel engine, an electric motor may be used. The transmission **103** can change the propulsion and moving speed of the agricultural machine **100** through a speed changing mechanism. The transmission **103** can also switch between forward travel and backward travel of the agricultural machine **100**.

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as a "steering angle") can cause a change in the traveling direction of the agricultural machine **100**. During manual steering, the steering angle of the front wheels **104F** can be changed by the operator manipulating the steering wheel. The power steering device includes a hydraulic device or an electric motor to supply an assisting force for changing the steering angle of the front wheels **104F.** When automatic steering is performed, the steering angle is automatically adjusted by the power of the hydraulic device or the electric motor (steering motor) under the control of a controller disposed in the agricultural machine **100**.

A linkage device **108** is provided at the rear of the vehicle body **110**. The linkage device **108** may include, e.g., a three-point linkage (also referred to as a "three-point link" or a "three-point hitch"), a PTO (Power Take Off) shaft, a universal joint, and a communication cable. The linkage device **108** causes the implement **300** to be attached to, or detached from, the agricultural machine **100**. The linkage device **108** is able to raise or lower the three-point linkage device with, for example, a hydraulic device, thus controlling the position or pose of the implement **300**. Moreover, motive power can be sent from the agricultural machine **100** to the implement **300** via the universal joint. While towing the implement **300,** the agricultural machine **100** causes the implement **300** to perform a predetermined task. The linkage device may be provided frontward of the vehicle body **110**. In that case, the implement may be connected frontward of the agricultural machine **100.**

The implement **300** shown in FIG. **28** is a rotary cultivator, for example. The implement **300** to be towed by, or attached to, a tractor or any of other work vehicles when traveling in a manner of following rows may be of any kind, so long as it is used in operations associated with the interridge land, such as ridge making, intertillage, ridging, weeding, side dressing, and preventive pest control.

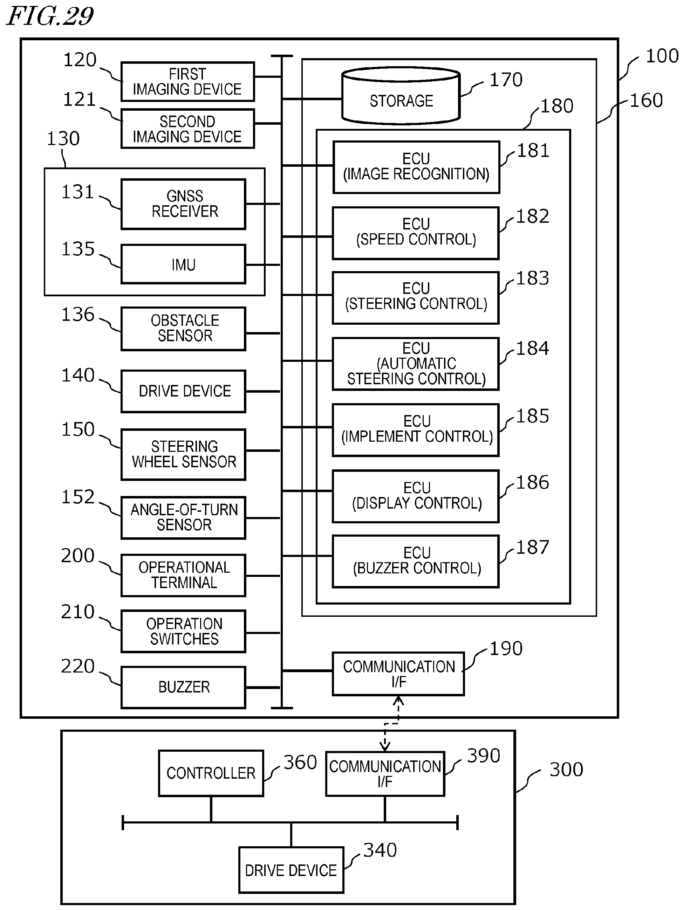

FIG. **29** is a block diagram showing an example general configuration of the agricultural machine **100** and the implement **300.** The agricultural machine **100** and the implement **300** can communicate with each other via a communication cable that is included in the linkage device **108.**

In addition to the first imaging device **120,** the second imaging device **121,** the positioning device **130,** the obstacle sensor **136** and the operational terminal **200,** the agricultural machine **100** in the example of FIG. **29** includes a drive device **140,** a steering wheel sensor **150,** an angle-of-turn sensor **152,** a control system **160,** a communication interface (I/F) **190,** operation switches **210,** and a buzzer **220.** The positioning device **130** includes a GNSS receiver **131** and an IMU **135.** The control system **160** includes a storage **170** and a controller **180.** The controller **180** includes a plurality of electronic control units (ECU) **181** to **186.** The implement **300** includes a drive device **340,** a controller **380,** and a communication interface (I/F) **390.** Note that FIG. **29** shows component elements which are relatively closely related to the operation of automatic steering or self-driving by the agricultural machine **100,** while other component elements are omitted from illustration.

The positioning device **130** performs positioning of the agricultural machine **100** by utilizing GNSS. In the case where the positioning device **130** includes an RTK receiver, not only GNSS signals transmitted from multiple GNSS satellites, but also a correction signal that is transmitted from a reference station is used. The reference station may be disposed around the field that is traveled by the agricultural machine **100** (e.g., at a position within 10 km of the agricultural machine **100).** The reference station generates a correction signal based on the GNSS signals received from the multiple GNSS satellites, and transmits the correction signal to the positioning device **130.** The GNSS receiver **131** in the positioning device **130** receives the GNSS signals transmitted from the multiple GNSS satellites. Based on the GNSS signals and the correction signal, the positioning device **130** calculates the position of the agricultural machine **100,** thus achieving positioning. Use of the RTK-GNSS enables positioning with a precision on the order of several centimeters of errors, for example. Positional information, including latitude, longitude and altitude information, is acquired through the highly precise positioning by the RTK-GNSS. Note that the positioning method is not limited to use of the RTK-GNSS, but any arbitrary positioning method (e.g., an interferometric positioning method or a relative positioning method) that provides positional information with the necessary precision can be used. For example, positioning may be performed by utilizing a VRS (Virtual Reference Station) or a DGPS (Differential Global Positioning System).

The IMU **135** includes a 3-axis accelerometer and a 3-axis gyroscope. The IMU **135** may include a direction sensor such as a 3-axis geomagnetic sensor. The IMU **135** functions as a motion sensor which can output signals representing parameters such as acceleration, velocity, displacement, and pose of the agricultural machine **100.** Based not only on the GNSS signals and the correction signal but also on a signal that is output from the IMU **135,** the positioning device 130 can estimate the position and orientation of the agricultural machine **100** with higher precision. The signal that is output from the IMU **135** may be used for the correction or complementation of the position that is calculated based on the GNSS signals and the correction signal. The IMU **135** outputs a signal more frequently than the GNSS signals. Utilizing this highly frequent signal allows the position and orientation of the agricultural machine **100** to be measured more frequently (e.g., about 10 Hz or above). Instead of the IMU **135,** a 3-axis accelerometer and a 3-axis gyroscope may be separately provided. The IMU **135** may be provided as a separate device from the positioning device **130.**

In addition to the GNSS receiver **131** and the IMU **135,** the positioning device **130** may include other kinds of sensors. Depending on the environment that is traveled by the agricultural machine **100,** it is possible to estimate the position and the orientation of the agricultural machine **100** with high precision based on data from such sensors.

The positioning device **130** as described above can be used to create a map of the crop rows and the ridges detected by the above-described row detection system **1000** and **2000.**

For example, the drive device **140** includes various devices that are needed for the travel of the agricultural machine **100** and the driving of the implement **300,** e.g., the aforementioned prime mover **102,** the transmission **103,** a differential including a locking differential mechanism, the steering device **106,** and the linkage device **108.** The prime mover **102** includes an internal combustion engine such as, for example, a diesel engine. Instead of, or in addition to, the internal combustion engine, the drive device **140** may include an electric motor that is dedicated to traction purposes.

The steering wheel sensor **150** measures the angle of rotation of the steering wheel of the agricultural machine **100.** The angle-of-turn sensor **152** measures the angle of turn of the front wheels **104F,** which are the wheels responsible for steering. Measurement values provided by the steering wheel sensor **150** and the angle-of-turn sensor **152** are used for the steering control by the controller **180.**

The storage **170** includes one or more storage media such as a flash memory or a magnetic disc. The storage **170** stores various data that is generated by the sensors and the controller **180.** The data that is stored on the storage **170** may include map data in the environment that is traveled by the agricultural machine **100,** and data on a travel path of automatic steering. The storage **170** also stores a computer program(s) to cause the ECUs in the controller **180** to perform various operations described below. Such a computer program(s) may be provided to the agricultural machine **100** via a storage medium (e.g., a semiconductor memory, an optical disc or the like) or through telecommunication lines (e.g., the Internet). Such a computer program(s) may be marketed as commercial software.

The controller **180** includes a plurality of ECUs. The plurality of ECUs include an ECU **181** for image recognition, an ECU **182** for speed control, an ECU **183** for steering control, an ECU **184** for automatic steering control, an ECU **185** for implement control, an ECU **186** for display control, and an ECU **187** for buzzer control. The ECU **181** for image recognition functions as a processing device of the row detection system. The ECU **182** controls the prime mover **102,** the transmission **103,** and brakes included in the drive device **140,** thus controlling the speed of the agricultural machine **100.** The ECU **183** controls the hydraulic device or the electric motor included in the steering device **106** based on a measurement value of the steering wheel sensor **150,** thus controlling the steering of the agricultural machine **100.** The ECU **184** executes computations and controls for achieving automatic steering driving, based on signals which are output from the positioning device **130,** the steering wheel sensor **150,** and the angle-of-turn sensor **152.** During the automatic steering driving, the ECU **184** sends the ECU **183** a command to change the steering angle. In response to this command, the ECU **183** controls the steering device **106** to change the steering angle. In order to cause the implement **300** to perform a desired operation, the ECU **185** controls the operation of the linkage device **108.** Also, the ECU **185** generates a signal to control the operation of the implement **300,** and transmits this signal from the communication I/F **190** to the implement **300.** The ECU **186** controls displaying on the operational terminal **200.** For example, the ECU **186** causes a display device of the operational terminal **200** to present various indications, e.g., a map of the field, detected crop rows or ridges, the position and the target path of the agricultural machine **100** in the map, pop-up notifications, and setting screens. The ECU **187** controls outputting of alarm sounds by the buzzer **220.**

Through the action of these ECUs, the controller **180** realizes driving via manual steering or automatic steering.

During usual automatic steering driving, the controller **180** controls the drive device **140** based on the position of the agricultural machine **100** as measured or estimated by the positioning device **130** and the target path stored on the storage **170.** As a result, the controller **180** causes the agricultural machine **100** to travel along the target path. By contrast, in a row-following control mode where travel is done along the rows, the ECU **181** for image recognition determines, from a detected crop row or ridge, the edge lines of the detected crop row or ridge, and generates a target path based on the edge lines. The controller **180** performs an operation in accordance with this target path.

The plurality of ECUs included in the controller **180** may communicate with one another according to a vehicle bus standard such as a CAN (Controller Area Network). Although the ECUs **181** to **187** are illustrated as individual corresponding blocks in FIG. **29,** each of these functions may be implemented by a plurality of ECUs. Alternatively, an onboard computer that integrates at least a portion of the functions of the ECUs **181** to **187** may be provided. The controller **180** may include ECUs other than the ECUs **181** to **187,** and any number of ECUs may be provided in accordance with functionality. Each ECU includes a control circuit including one or more processors.

The communication I/F **190** is a circuit that performs communications with the communication I/F **390** of the implement **300.** The communication I/F **190** performs exchanges of signals complying with an ISOBUS standard such as, for example, ISOBUS-TIM between the communication I/F **190** itself and the communication I/F **390** of the implement **300.** This causes the implement **300** to perform a desired operation, or allows information to be acquired from the implement **300.** The communication I/F **190** may communicate with an external computer via a wired or wireless network. The external computer may be a server computer in a farming support system which centralizes management of information concerning fields by using a cloud, and assists in agriculture by utilizing the data on the cloud, for example.

The operational terminal **200** is a terminal for the operator to perform a manipulation related to the travel of the agricultural machine **100** and the operation of the implement **300,** and may also be referred to as an imaginary terminal (VT). The operational terminal **200** may include a display device such as a touch screen panel, and/or one or more buttons. By manipulating the operational terminal **200,** the operator can perform various manipulations of, for example, switching ON/OFF the automatic steering mode, switching ON/OFF the cruise control, setting an initial position of the agricultural machine **100,** setting a travel path, recording or editing a map, switching between 2WD and 4WD, switching ON/OFF the locking differential, and switching ON/OFF the implement **300.** At least a portion of these manipulations can also be realized by manipulating the operation switches **210.** Display on the operational terminal **200** is controlled by the ECU **186.**

The buzzer **220** is an audio output device to present an alarm sound for alerting the operator of an abnormality. For example, during automatic steering driving, the buzzer **220** presents an alarm sound when the agricultural machine **100** mistracks from the travel path by a predetermined distance or more. Instead of the buzzer **220,** a loudspeaker of the operational terminal **200** may provide a similar function. The buzzer **220** is controlled by the ECU **186.**

The drive device **340** in the implement **300** performs an operation necessary for the implement **300** to perform a predetermined task. The drive device **340** includes devices adapted to the intended use of the implement **300,** e.g., a hydraulic device, an electric motor, or a pump. The controller **380** controls the operation of the drive device **340.** In response to a signal that is transmitted from the agricultural machine **100** via the communication I/F **390,** the controller **380** causes the drive device **340** to perform various operations. Moreover, a signal that is in accordance with the state of the implement **300** may be transmitted from the communication I/F **390** to the agricultural machine **100.**

<Embodiment 2>

(2-1. Overview of the row detection system)

Now, an overview of the row detection system according to embodiment 2 will be described. The row detection system according to the present embodiment can detect the crop rows or ridges at high precision even in the case where the crop rows or ridges are formed in a curved manner in a field. Hereinafter, differences from embodiment 1 will be mainly described, and overlapping descriptions will be omitted.

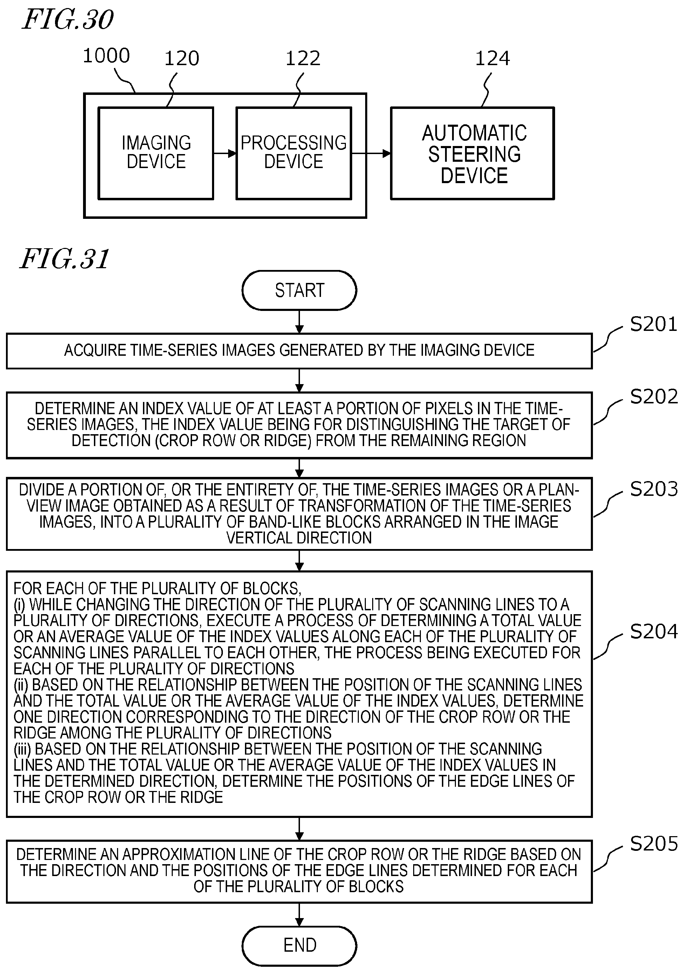

FIG. **30** is a block diagram showing a configuration of the row detection system **1000** according to the present embodiment. The row detection system **1000** includes the imaging device **120** used while being attached to the agricultural machine, and the processing device **122.** The imaging device **120** is secured to the agricultural machine so as to capture an image of the ground surface on which the agricultural machine performs groundwork and thus to generate time-series images including at least a portion of the ground surface. The processing device **122** executes image processing on the time-series images generated by the imaging device **120** to detect a row region such as a crop row or a ridge on the ground surface and to determine an approximation line of the crop row or the ridge. The processing device **122** may be configured to determine a target path of the agricultural machine based on the determined approximation line, and to output information on the target path to the automatic steering device **124** of the agricultural machine. The automatic steering device **124** performs steering control on the agricultural machine so that the agricultural machine moves along the target path. As a result, the agricultural machine is allowed to move along the crop row or the ridge.

FIG. **31** is a flowchart showing a flow of operations of the processing device **122.** The processing device **122** executes operations of steps **S201** through **S205** to detect the crop row or the ridge existing on the ground surface on which the agricultural machine performs groundwork. The operations shown in FIG. **31** may be performed while the agricultural machine is moving. The operations shown in FIG. **31** makes it possible to detect a crop row or a ridge extending in a curved manner and to determine an approximation line thereof.

In step **S201,** the processing device **122** acquires time-series images generated by the imaging device **120.** The time-series images form an aggregation of images chronologically generated by the imaging device **120.** The agricultural machine is not limited to having one imaging device **120** mounted thereon, and may have a plurality of imaging devices mounted thereon. The processing device **122** may acquire a plurality of sequences of the time-series images generated by the plurality of time-imaging devices or synthesized time-series images generated by synthesizing the plurality of sequences of the time-series images. In this case, the subsequent processes may be performed on each of the plurality of sequences of the time-series images or the synthesized time-series images. For example, the subsequent processes may be performed on the image synthesized by the above-described method in embodiment 1.

In step **S202,** the processing device **122** determines an index value of at least a portion of pixels in the acquired time-series images. The index value is for distinguishing the crop row or the ridge as a target of detection from the remaining region. For example, the processing device **122** may be configured to determine a region of interest from which at least one of the crop row and the ridge is to be detected, and to determine an index value of a portion of, or all of, the pixels included in the region of interest. The index value may be, for example, a color index value of the crops. In the case where the target of detection is a green crop row, the index value may be an excess green index ($E \times G$), By contrast, in the case where the target of detection is a ridge, the index may be an index indicating the height thereof from a reference plane (e.g., plane parallel to the surface of the ground). The method for determining $E \times G$ as the index value is as described above. A specific example of method for determining the height from the reference plane will be described below.

In step **S203,** the processing device **122** divides a portion of, or the entirety of, the time-series images or a plan view image, obtained as a result of transformation of the time-series images, into a plurality of band-shaped blocks arranged in the image vertical direction. In the case where the imaging device **120** is attached to the agricultural machine so as to face in an obliquely downward direction, the processing device **122** may be configured to transform the time-series images into a plan view image and then divide the plan view image into a plurality of blocks. The transformation of the time-series images into the plan view image may be performed by homography transformation (planar perspective projection).

In step **S204,** the processing device **122** executes the following operations (i) through (iii) on each of the plurality of blocks.

(i) While changing the direction of the plurality of scanning lines to a plurality of direction, executes a process of determining a total value or an average value of the above-described index values along each of a plurality of scanning lines parallel to each other, the process being executed for each of the plurality of directions.
(ii) Based on the relationship between the positions of the scanning lines and the total value or the average value of the index values, determines one direction corresponding to the direction of the crop row or the ridge among the plurality of directions.
(iii) Based on the relationship between the positions of the scanning lines and the total value or the average value of the index values in the determined direction, determines the positions of the edge lines of the crop row or the ridge.

A specific example of these operations will be described below.

In step **S205,** the processing device **122** determines an approximation line of the crop row or the ridge based on the directions and the positions of the edge lines determined for each of the plurality of blocks. For example, the processing device **122** may determine an approximation line at the center between two edge lines indicating two ends of the crop row or the ridge in each of the blocks.

As a result of the above-described operations, the processing device **122** can detect the crop row or the ridge from the time-series images generated by the imaging device **120** and determine an approximation line thereof. The operation of step **S204** is executed for each of the blocks, so that even in the case where the crop row or ridge is provided in a curved manner, an approximation line of the crop row or the ridge can be detected at high precision.

After determining the approximation line of the crop row or the ridge, the processing device **122** may output information on the approximation line to the automatic steering device **124.** As a result, the automatic steering device **124** can control the traveling direction of the agricultural machine based on the approximation line.

Hereinafter, the row detection system and the row detection method according to the present embodiment will be described in detail.

(2-2. Example 1 of the row detection system)

Example 1 of the row detection system according to the present embodiment will be described. In the present embodiment, a crop row is detected as the "row detection".

The row detection system according to the present embodiment includes an imaging device used while being attached to the agricultural machine. The imaging device is secured to the agricultural machine so as to capture an image of the ground surface on which the agricultural machine travels and to acquire time-series color images including at least a portion of the ground surface.

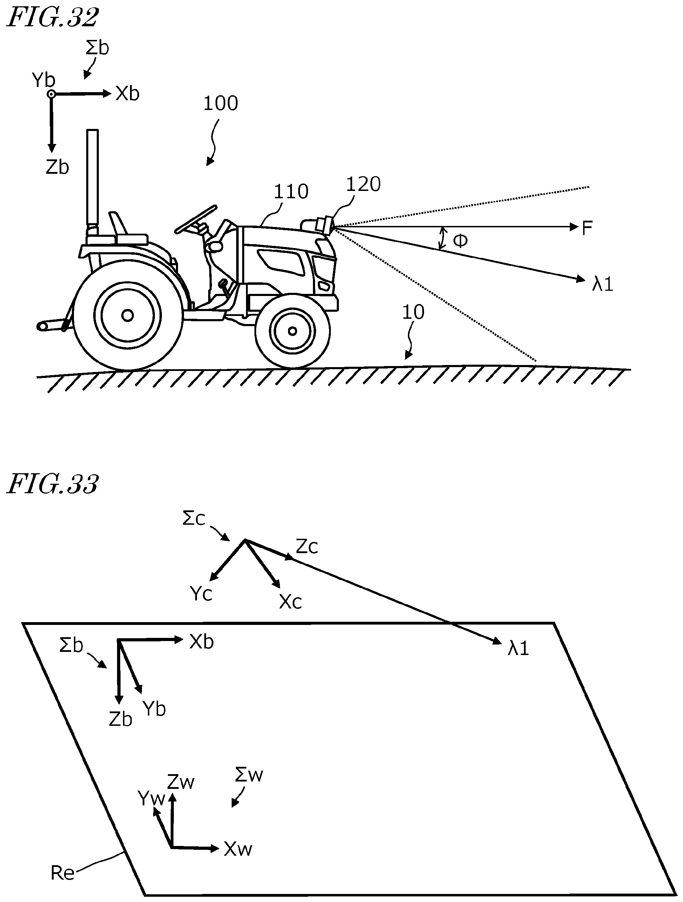

FIG. **32** schematically shows how the imaging device **120** attached to the agricultural machine **100** such as a tractor, a vehicle for crop management or the like captures an image of the ground surface **10**. Unlike the agricultural machine **100** shown in FIG. **4,** the agricultural machine **100** shown in FIG. **32** includes one imaging device **120** instead of two. Except for this, the agricultural machine **100** has the same basic configuration as that in the example of FIG. **4**.

FIG. **33** is a perspective view schematically showing the relationship among the vehicle coordinate system $\Sigma b$, a camera coordinate system $\Sigma c$ of the imaging device **120,** and the world coordinate system $\Sigma w$ that is fixed to the ground surface **10.** The camera coordinate system $\Sigma c$ has an **Xc** axis, a **Yc** axis, and a **Zc** axis that are orthogonal to one another. The world coordinate system $\Sigma w$ has an Xw axis, a **Yw** axis, and a **Zw** axis that are orthogonal to one another. In the example of FIG. **33,** the **Xw** axis and the **Yw** axis of the world coordinate system $\Sigma w$ are on a reference plane **Re** that expands along the ground surface **10**.

The imaging device **120** is attached to the agricultural machine **100** so as to face in a predetermined direction. Therefore, the position and the orientation of the camera coordinate system $\Sigma c$ with respect to the vehicle coordinate system $\Sigma b$ are fixed in a known state. The **Zc** axis of the camera coordinate system $\Sigma c$ is on a camera optical axis $\lambda 1$. In the illustrated example, the camera optical axis $\lambda 1$ is inclined with respect to the traveling direction **F** of the agricultural machine **100** toward the ground surface **10,** with an angle of depression that is greater than 0°. The traveling direction **F** of the agricultural machine **100** is generally parallel to the ground surface **10,** along which the agricultural machine **100** travels. The angle of depression may be set to a range of, for example, not less than 0° and not more than 60°. In the case where the position at which the imaging device is mounted is close to the ground surface **10,** the orientation of the camera optical axis $\lambda 1$ 2 may be set so that the angle of depression $\Phi 1$ has a negative value, that is, so that the orientation of the camera optical axis $\lambda 1$ has a positive angle of elevation.

While the agricultural machine **100** is traveling on the ground surface **10,** the vehicle coordinate system $\Sigma b$ and the camera coordinate system $\Sigma c$ translate relative to the world coordinate system $\Sigma w$. When the agricultural machine **100** rotates or swings in a direction of pitch, roll, or yaw during travel, the vehicle coordinate system $\Sigma b$ and the camera coordinate system $\Sigma c$ rotate relative to the world coordinate system $\Sigma w$. In the following description, for simplicity, it is assumed that the agricultural machine **100** does not rotate in the pitch or roll direction and that the agricultural machine **100** moves essentially parallel to the ground surface **10**.

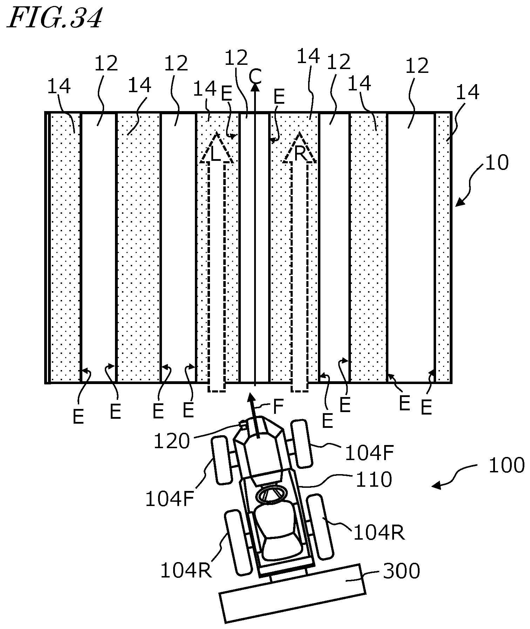

FIG. **34** is a plan view schematically showing a portion of a field in which a plurality of crop rows **12** are provided on the ground surface **10**. FIG. **34** schematically shows the agricultural machine **100** about to enter the field where the crop rows **12** are provided.

In the example shown in FIG. **34,** thick broken-lined arrows **L** and **R** are respectively shown for the work paths **14** that are located on opposite sides of one crop row **12** in the middle. While the agricultural machine **100** is traveling on a target path that is indicated by solid-lined arrow **C,** the front wheels **104F** and the rear wheels **104R** of the agricultural machine **100** are required to move on the work paths **14** along arrows **L and R,** so as not to step on the crop row **12**. In the present embodiment, the imaging device **120** attached to the agricultural machine **100** is usable to detect the edge lines E of the crop row **12**. Therefore, it is possible to control the steering and the travel of the agricultural machine **100** so that the front wheels **104F** and the rear wheels **104R** move on the work paths **14** along arrows L and **R.**

The imaging device **120** of the agricultural machine **100** shown in FIG. **34** acquires an image, for example, substantially the same as the image **40** shown in FIG. **9.** As shown in FIG. **34,** the traveling direction **F** of the agricultural machine **100** is inclined with respect to the direction in which the crop rows **12** extend (direction parallel to arrow **C).** Therefore, as shown in FIG. **9,** the vanishing point **P0** is located in a right region of the image **40**.

In the present embodiment, even if the daylighting conditions or the growth state of the crops changes, it is possible to accurately detect the crop row **12** from the image **40** and to determine the edge lines **E** of the crop row **12** by the method described below. Based on the edge lines **E,** a path along which the agricultural machine **100** is to proceed (target path) can be appropriately generated. As a result, it is made possible to control, by automatic steering, the travel of the agricultural machine **100** so that the front wheels **104F** and the rear wheels **104R** of the agricultural machine **100** move on the work paths **14** along arrows **L** and **R** (row-following travel control is made possible). Such row-following travel control realizes precise automatic steering in accordance with the state of growth of the crops, which is not easily realized by the automatic steering technique using the positioning system such as GNSS or the like.

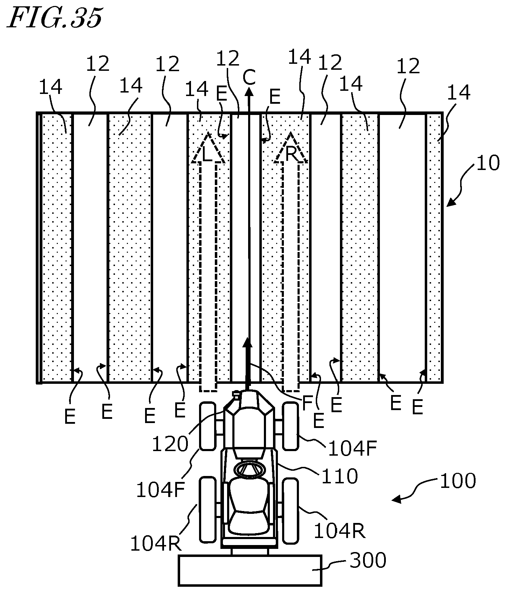

FIG. **35** is a plan view schematically showing a state where the agricultural machine **100** is steered to adjust the position and the orientation thereof (angle in the yaw direction) so that the positional error thereof with respect to the target path (arrow **C)** is reduced. The imaging device **120** of the agricultural machine **100** in this state acquires an image substantially the same as the image **40** shown in FIG. **7.** The front wheels **104F** and the rear wheels **104F** of the agricultural machine **100** in the state of FIG. **35** are located on lines indicated by arrows **L** and **R** on the work paths **14**. While the agricultural machine **100** is traveling along the target path indicated by central arrow **C,** the automatic steering device **124** in the agricultural machine **100** controls the steering angles of the wheels responsible for steering so that neither the front wheels **104F** nor the rear wheels **104R** deviate from the work paths **14.**

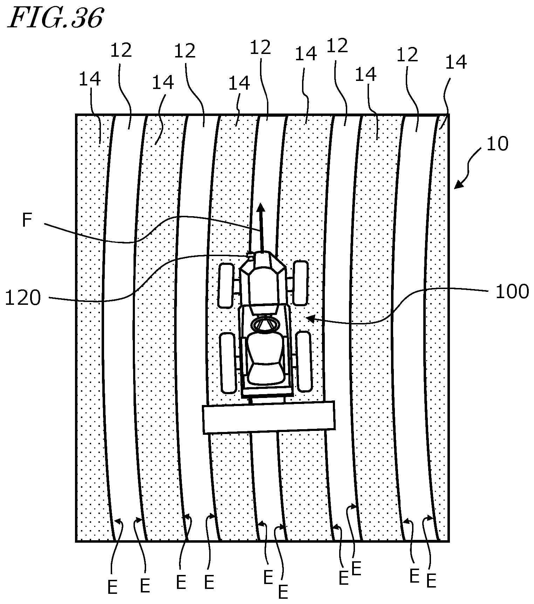

FIG. **36** is a plan view schematically showing a portion of a field in which a plurality of curved crop rows **12** are provided on the ground surface **10.** Even in the case where such curved crop rows **12** are formed, it is made possible, by operations described below, to accurately detect the positions of the crop rows **12** from the image acquired by the imaging device 120 and to precisely control the steering and the travel of the agricultural machine **100** along the crop rows **12.**

Now, the configuration and the operation of the processing device **122** in the row detection system according to the present embodiment will be described in more detail.

The agricultural machine **100** according to the present embodiment includes the row detection system **1000** and the automatic steering device **124** shown in FIG. **30.** The row detection system **1000** includes the imaging device **120,** and the processing device **122** executing image processing on time-series color images acquired from the imaging device **120.** The processing device **120** is connected to the automatic steering device **124.** The automatic steering device **124** is included in, for example, a controller controlling the travel of the agricultural machine **100.**

The processing device **122** may be implemented by the electronic control unit (ECU) for image recognition. The ECU is an onboard computer. The processing device **122** is connected to the imaging device **120** via serial signal lines, e.g., wire harnesses or the like, so as to receive image data that is output from the imaging device **120.** A portion of the image recognition processing that is to be executed by the processing device **122** may be executed inside the imaging device **120** (inside a camera module). The hardware configuration of the processing device **122** is as described above with reference to FIG. **11.** The imaging device **120** has substantially the same configuration as that of each of the imaging devices **120** and **121** in embodiment 1.

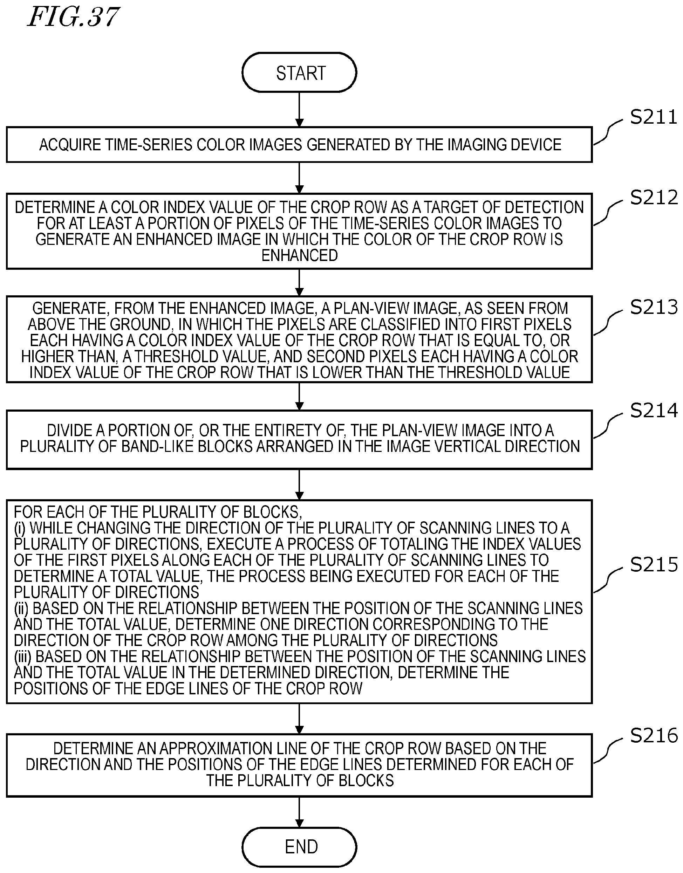

FIG. **37** is a flowchart showing an example operation of the processing device **122** according to the present embodiment. The processing device **122** executes operations of steps **S211** through **S216** shown in FIG. **37.** Hereinafter, the operation of each step will be described.

In step **S211,** the processing device **122** acquires the time-series color images generated by the imaging device **120.** The time-series color images form an aggregation of images that are chronologically generated by the imaging device **120** through image capturing. Each of the images is formed of a frame-by-frame group of pixels. For example, in the case where the imaging device **120** outputs images at a frame rate of 30 frames/second, the processing device **122** can acquire new images with a period of about 33 milliseconds. As compared with a common automobile that travels on public roads, the agricultural machine **100,** such as a tractor or the like, travels in a field at a speed which is relatively low, e.g., about 10 kilometers per hour or lower. In the case where the speed is 10 kilometers per hour, a distance of about 6 centimeters is travelled in about 33 milliseconds. Therefore, the processing device **122** may acquire images with a period of, for example, about 100 to 300 milliseconds, and does not need to process all the frame of images captured by the imaging device **120.** The period with which the images to be processed by the processing device **122** are acquired may be automatically changed by the processing device **122** in accordance with the traveling speed of the agricultural machine **100.**

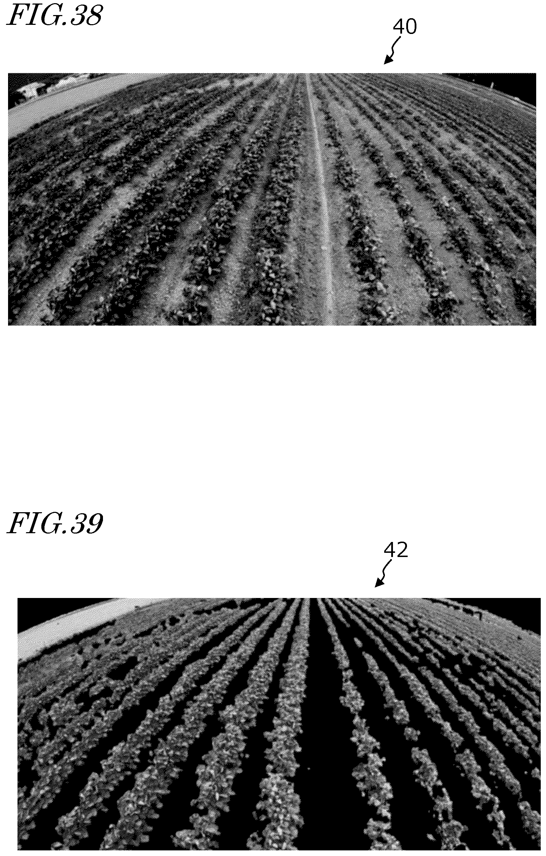

FIG. **38** shows an example of a one-frame image **40,** among the time-series color images acquired by the imaging device **120** mounted on the agricultural machine **100** (in this example, a monocular camera). The image **40** of FIG. **38** shows rows of crops (crop rows) planted in the form of rows on the ground surface of a field. In this example, the crop rows are arranged essentially in parallel and at equal intervals on the ground surface, such that the camera optical axis of the imaging device **120** is directed in the traveling direction of the agricultural machine **100.** As described above, the camera optical axis does not need to be parallel to the traveling direction of the agricultural machine **100,** but may be incident on the ground surface frontward of the agricultural machine **100** in the forward traveling direction thereof. The position at which the imaging device **120** is attached is not limited to the one described in this example. In the case where a plurality of imaging devices are attached to the agricultural machine **100,** some of the imaging devices may each be attached so that the camera optical axis thereof is directed in a direction opposite to the traveling direction or a direction crossing the traveling direction.

In step **S212** in FIG. **37,** the processing device **122** determines a color index value of the crops as a target of detection for at least a portion of pixels in the time-series color images acquired from the imaging device **120** to generate an enhanced image in which the color of the crops is enhanced. The color index value may be, for example, an excess green index (E×G) described above.

FIG. **39** shows an enhanced image **42** obtained as a result of the RGB values in the image shown in FIG. **38** being transformed into E×G, that is, "2 × g - r - b". As a result of this transformation, in the image shown in FIG. **39,** a pixel having "r + b" smaller than g is displayed bright, and a pixel having "r + b" larger than g is displayed dark. As a result of this transformation, an image **42** in which the color of the crops as the target of detection (in this example, "green") is enhanced is obtained (the enhanced image **42** is provided). In the image shown in FIG. **39,** the relatively bright pixel has a relatively large amount of green components, and belongs to the region of the crops.

As the "color index value" enhancing the color of the crops, another index such as, for example, a green red vegetation index (G value - R value)/(G value + R value) or the like may be used instead of the excess green index (E×G). In the case where the imaging device may function also as an infrared camera, an NDVI (Normalized Difference Vegetation Index) may be used as the "color index value of the crops".

There are cases where each of rows of crops is covered with a sheet called a "mulching sheet". In such a case, the "color of the crop rows" is the "color of objects located in rows while covering the crops". Specifically, in the case where the color of the sheet is black, which is an achromatic color, the "color of the crop rows" signifies "black". In the case where the color of the sheet is red, the "color of the crop rows" signifies "red". In this manner, the "color of the crop rows" is not limited to signifying the color of the crops themselves, but also signifies the color of the region defining the crop rows (color recognizable from the color the soil surface).

In order to generate an enhanced image in which the "color of the crop rows" is enhanced, transformation of an RGB color space into an HSV color space may be used. An HSV color space is a color space that is formed of the three components of hue, saturation, and value. By using color information obtained by transformation of an RGB color space into an HSV color space, it is made possible to detect a "color" with low saturation, such as black or white. In order to detect "black" utilizing an OpenCV library, the hue may be set to the maximum range (0-179), the saturation may be set to the maximum range (0-255), and the value range may be set to 0-30. In order to detect "white", the hue may be set to the maximum range (0-179), the saturation may be set to the maximum range (0-255), and the value range may be set to 200-255. Any pixel that has a hue, a saturation, and a value falling within such setting ranges is a pixel having the color to be detected. In order to detect, for example, a green pixel, the hue range may be set to a range of e.g. 30-90.

Such an image in which the color of the crops as the target of detection is generated (such an enhanced image is generated), so that the region of the crops is easily distinguished (extracted) from the remaining background region (so that segmentation is made easily).

Note that instead of determining index values of all the pixels in the time-series color images, the processing device **122** may determine index values of pixels in a region of the time-series color images to generate an enhanced image for the such a region. For example, the processing device **122** may determine a region of interest, in the time-series color images, from which the crop row is detected, and determine an index value of each of the pixels in the region of interest, to generate an enhanced image for the region of interest. As the region of interest, a region including a bottom central portion of an image, for example, may be selected. Information necessary for the row-following travel control is position information on the crop row located near the agricultural machine **100**. Therefore, it is not necessary to determine index values of the entirety of the image.

In step **S213** in FIG. **37,** the processing device **122** generates, from the enhanced image **42,** a plan view image in which the pixels are classified into first pixels each having a color index value of the crop rows that is equal to, or higher than, a threshold value, and second pixels each having a color index value of the crop rows that is lower than the threshold value. The plan view image is an image as seen from above the ground.

As the color index value of the crop rows, the aforementioned excess green index (E×G), for example, may be adopted, and a discriminant analysis method (Otsu's binarization) may be used to determine a discrimination threshold. As described above with reference to FIG. **21,** the pixels of the enhanced image **42** may be classified into pixels each having an index value equal to, or higher than, a threshold value (crop pixels) and pixels each having an index value lower than the threshold value (background pixels) based on a histogram of the excess green index (E×G) in the enhanced image **42.**

By assigning each of the pixels forming the enhanced image **42** as either a "first pixel" or a "second pixel", it becomes possible to extract a region that is the target of detection from the enhanced image **42.** Also, by giving "zero" as the pixel value of each "second pixel", or by removing data on the second pixel from the image data, it becomes possible to mask a region other than regions that are the target of detection. When finalizing the regions to be masked, a process of incorporating a pixel having an excess green index (E×G) exhibiting a locally high value, as a noise, into the masked regions.

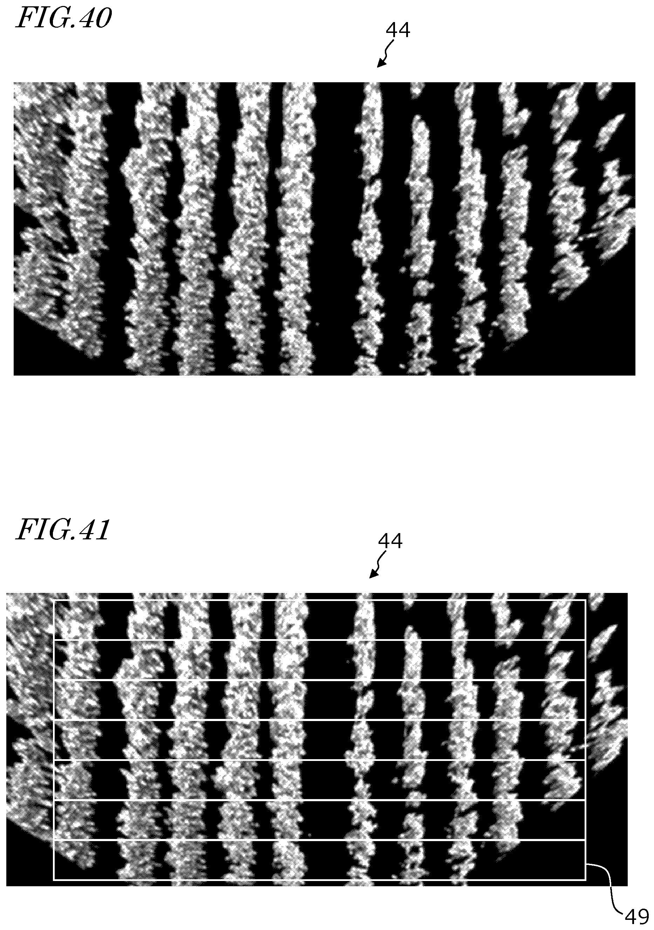

FIG. **40** shows an example of plan view image **44,** as seen from above the ground, in which the pixels are classified into first pixels and the second pixels. The plan view image **44** in FIG. **40** is created from the enhanced image **42** in FIG. **39** by use of an image transformation technique described below. In the plan view image **44,** black pixels (pixels having a value set to zero) are the second pixels each having a color index value of the crops (in this example, excess green index) that is lower than the threshold value Th. The regions formed of the second pixels are mainly regions where the soil surface of the ground surface are exposed to be seen. In the plan view image **44** in FIG. **40,** black triangular regions exist at left and right corners in contact with the bottom side. These black triangular regions correspond to regions that are not shown in the enhanced image **42** in FIG. **39.** Note that the image **40** in FIG. **38** and the enhanced image **42** in FIG. **39** each show a phenomenon that a line that is supposed to a straight line is distorted in a peripheral area of the image. Such a distortion of the image is caused by the performance of the lens of the camera, and may be corrected by use of internal parameters of the camera. The processes of enhancing the crop region, masking, correcting the distortion and the like may be referred to as "pre-processes". The pre-processes may include processes other than these processes.

The plan view image **44** in FIG. **40** is an overhead-view image of the reference plane **Re** parallel to the ground surface, as seen from right above the reference plane **Re** in a direction normal to the reference plane **Re .** Such an overhead-view image can be generated by use of homography transformation (planar perspective projection) of the enhanced image **42** in FIG. **39.** The specific process of the homography transformation is as described above with reference to FIG. **13.**

The processing device **122** according to the present embodiment generates the plan view image as seen from above the ground, in which the pixels are classified into the first pixels each having a color index value of the crops that is equal to, or higher than, a threshold value, and the second pixels each having a color index value of the crop rows that is lower than the threshold value, by the above-described method. After this, the processing device **122** executes the operation of step **S214** in FIG. **37.**

In step **S214,** the processing device **122** divides a portion of, or the entirety of, the plan view image into a plurality of band-shaped bocks arranged in the image vertical direction. FIG. **41** shows an example in which the plan view image **44** is divided into a plurality of blocks **49.** In the example shown in FIG. **41,** a region of the plan view image **44** (region of interest) including a central portion is divided into the plurality of blocks **49.** The processing device **122** may divide the entirety of the plan view image **44** into the plurality of blocks **49.** The plurality of blocks **49** are arranged in the image vertical direction. Each of the blocks **49** has a band shape extending in the image horizontal direction. The length of each block **49** in the image vertical direction may be set to correspond to, for example, a distance of 1 to 2 meters on the ground surface.

In this specification, the number of the blocks **49** may be referred to as a "division number". In the example of FIG. **41,** the division number is 7, but the division number is not limited to 7. Where the height of the image (i.e., the number of pixels in the vertical direction) is y pixels, the number (division number) of the blocks **49** may be set to any number of 3 or larger and y or smaller. In the case where, for example, the number of pixels in the image vertical direction is 960, the division number may be set to a value that is 3 or larger and 960 or smaller. Typically, the division number may be set to a value of 5 or larger and 30 or smaller. The processing device **122** may be configured to change the number (division number) of the plurality of blocks **49** and/or the size of each block **49** (number of pixels in the vertical direction and/or the horizontal direction) in response to a manipulation made by the user or a command from an external device. Upon dividing the plan view image **44** into the plurality of blocks **49,** the processing device **122** executes the operation of step **S215** in FIG. **37.**

In step **S215,** the processing device **122** executes the following operation on each of the plurality of blocks **49.**

(i) While changing the direction of the plurality of scanning lines to a plurality of directions, executes a process of totaling the index values of the first pixels (pixels each having an index of the color that is equal to, or higher than, the threshold value) along each of the plurality of scanning lines to determine a total value, the process being executed for each of the plurality of directions.

(ii) Based on the relationship between the positions of the scanning lines and the total value, determines one direction corresponding to the direction of the crop row among the plurality of directions.

(iii) Based on the relationship between the positions of the scanning lines and the total value of the index values in the determined direction, determines the positions of the edge lines of the crop row.

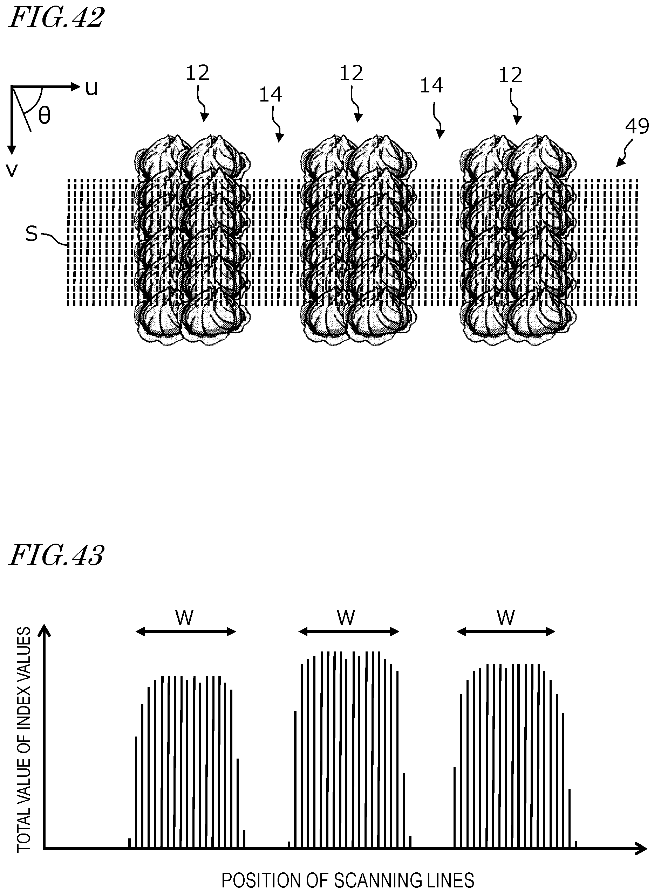

FIG. **42** schematically shows an example of one block **49** in the plan view image **44.** In this example, the block **49** includes three crop rows **12,** and the direction of the crop rows **12** is parallel to the image vertical direction (v-axis direction). FIG. **42** shows a plurality of scanning lines (broken lines) **S** that are parallel to the image vertical direction. The processing device **122** totals the index values of pixels that are located on the plurality of scanning lines **S,** for each scanning line, to obtain a total value of each scanning line **S.**

FIG. **43** schematically shows the relationship between the positions of the scanning lines **S** and the total value of the index values, obtained for the block **49** shown in FIG. **42.** In FIG. **43,** the horizontal axis represents the positions of the scanning lines **S** along the image horizontal direction (u-axis direction). In the block **49,** in the case where many of the pixels that are crossed by the scanning lines **S** are the first pixels belonging to the crop rows **12,** such scanning lines **S** each have a large total value. By contrast, in the case where many of the pixels that are crossed by the scanning lines **S** are the second pixels (background pixels) belonging to the intermediate regions (work paths) **14** located between the crop rows **12,** such scanning line **S** each have a small total value. Note that, according to the present embodiment, the intermediate regions (work paths) **14** are masked, so that the second pixels have an index value of zero.

Regarding the relationship shown in FIG. **43** between the positions of the scanning lines and the total value of the index values, there exist a plurality of concave regions where the total values are zero or near-zero, and a plurality of convex regions are distinguished from such concave regions. The concave regions correspond to the intermediate regions (work paths) **14,** whereas the convex regions correspond to the crop rows **12.** In the present embodiment, predetermined positions on opposite sides sandwiching a peak of the total values in each of the convex regions, specifically, the positions of the scanning lines **S** having total values of a predetermined ratio (e.g., a value selected from the range of 60% or higher and 90% or lower) with respect to the peak of the total values are determined as the positions of the edge lines. In FIG. **43,** the two ends of each of arrows **W** represent the positions of the edge lines of each crop row **12.** In the example of FIG. **43,** the positions of the edge lines of each crop row **12** are positions of the scanning lines **S** having a 80% value with respect to the peak of the total values of the respective crop row **12.**

In the present embodiment, the processing device **122** totals the color index values of the crop row on each of the scanning lines **S** in a state where the second pixels are masked. With this method, wrong determinations caused by fallen leaves or weeds are reduced, and the robustness of the row detection can be enhanced.

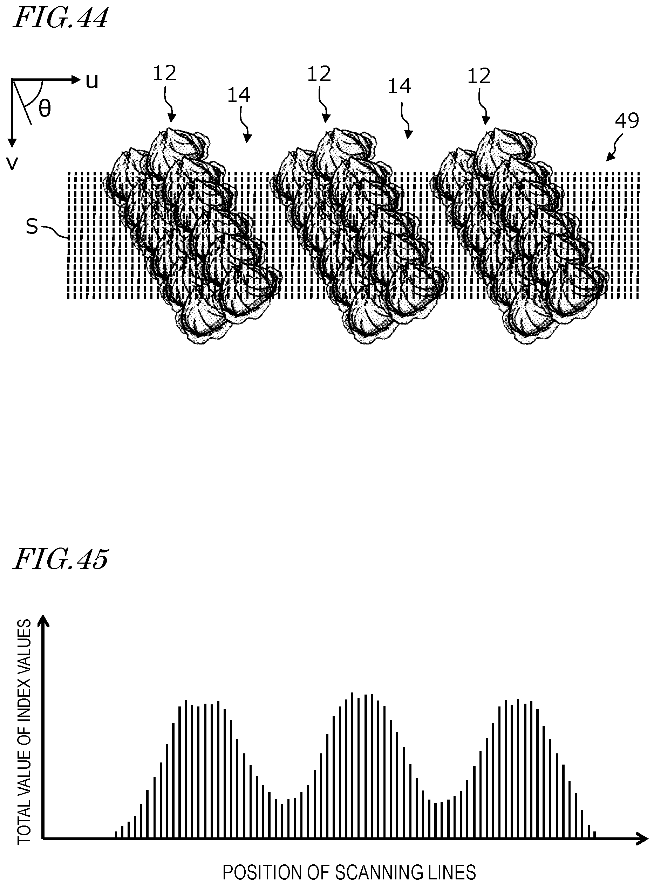

FIG. **44** shows an example in which the crop rows **12** extend obliquely. In the image **40** acquired by the imaging device **120,** the crop rows **12** may extend in directions that are inclined right or left, depending on the orientation of the agricultural machine **100.** In the case where the plan view image **44** is generated from such an image through homography transformation, as in the example of FIG. **44,** the direction of the crop rows **12** is inclined with respect to the image vertical direction (v-axis direction).

FIG. **44** also shows a large number of scanning lines **S** that are parallel to the image vertical direction. The processing device **122** totals the index values of the pixels that are located on such a plurality of scanning lines **S,** for each scanning line **S,** to obtain a total value of each scanning line **S.** FIG. **45** schematically shows the relationship between the positions of the scanning lines **S** and the total value of the index values, obtained for the block **49** of the plan view image shown in FIG. **44.** From this relationship, it is impossible to clearly specify the edge lines of the crop rows **12.**

In this situation, the processing device **122** in the present embodiment changes the direction (angle) of the scanning lines **S** to search for the direction, of the scanning lines **S,** that is parallel to the direction of the crop rows **12,** for each of the blocks **49.**

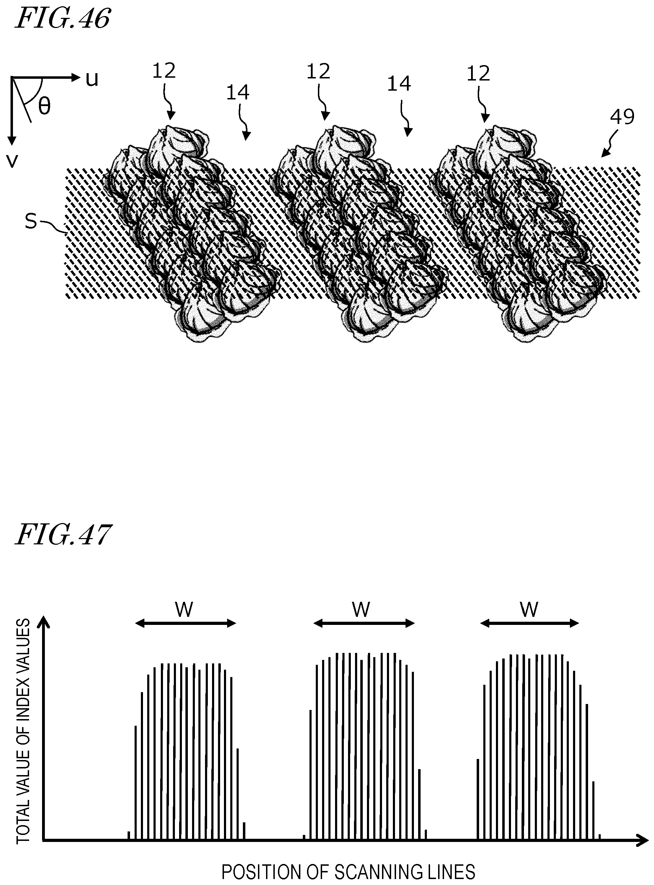

FIG. **46** shows an example of state where the direction of the scanning lines **S** and the direction of the crop rows **12** match each other. FIG. **47** schematically shows the relationship between the positions of the scanning lines **S** and the total value of the index values, obtained for the block **49** of the plan view image shown in FIG. **46.** The processing device **122** changes the direction of the scanning lines **S** within a predetermined range to search for the direction by which the convex portions and the convex portions are distinguished from each other most clearly as shown in FIG. **47.**

The process of searching for the direction, of the scanning lines **S,** that matches the direction of the crop rows **12** in the present embodiment may also be executed in accordance with the flowchart shown in FIG. **26.** The processing device **122** in the present embodiment executes the operations in steps **S131** through **S133** for each of the blocks **49.**

In step **S131,** the processing device **122** sets the direction (angle) of the scanning lines S. Herein, an angle in the clockwise direction with respect to the u axis in the image coordinate system is set as the angle θ (see FIG. **42,** FIG. **44** and FIG. **46).** The search for the angle θ may be done by, for example, setting a range of e.g., 60° to 120° and changing the angle by 1 degree. In this case, in step **S131,** 60°, 61°, 62°, ..., 119° and 120° are set as the angle θ of scanning lines **S.**

In step **S132,** the processing device **122** totals the index values of the pixels on plurality of the scanning line S extending in the direction of each angle θ to obtain data on the distribution of the total values of the index values in a direction perpendicular to the scanning lines. This data shows the relationship as shown in, for example, FIG. **43,** FIG. **45** or FIG. **47,** and shows different distributions for different angles θ.

In step **S133,** the processing device **122** selects, from a plurality of distributions obtained for each of the angles θ, a distribution in which the boundaries between the concave regions and the convex regions are clear as shown in FIG. **47** and the crop rows **12** are distinguished from the intermediate regions **14** clearly, and determines the angle θ of the scanning lines **S** generating the distribution. The direction of this angle θ is treated as the direction in which the crop rows **12** extend in the block **49.**

In step **S134,** the processing device **122** determines the edge lines of each of the crop rows **12** based on the peak value of the total values in the distribution corresponding to the angle θ determined in step **S135.** As described above, the positions of the scanning lines **S** each having a total value that is, for example, 0.8 times the peak value may be adopted as the positions of the edge lines.

Note that, when searching for the direction (angle) of the scanning lines **S,** each time the angle θ is changed by the unit angle (e.g., 1 degree) within the range of search, the processing device **122** may determine the distribution of the total values on the scanning line **S** at the angle θ. The processing device **122** may calculate a feature amount (e.g., depth of the concave region/height of the convex region, differential value of the envelope, etc.) from the waveform of the distribution of the total values, and determine whether or not the direction of the crop rows **12** is parallel to the direction of the scanning lines **S** based on the feature amount.

With the above-described method, influences of daylighting conditions that vary depending on the weather conditions such as forward light, backlight, sunny weather, cloudy weather, fog or the like or the time of work can be reduced, and thus the crop rows can be detected at high precision. Even if there is a change in the type of crops (cabbage, broccoli, radish, carrot, lettuce, Chinese cabbage, etc.), growth state (from seedling to a fully grown state), presence/absence of diseases, presence/absence of fallen leaves or weeds, or soil color, the crop rows can be detected with high robustness.

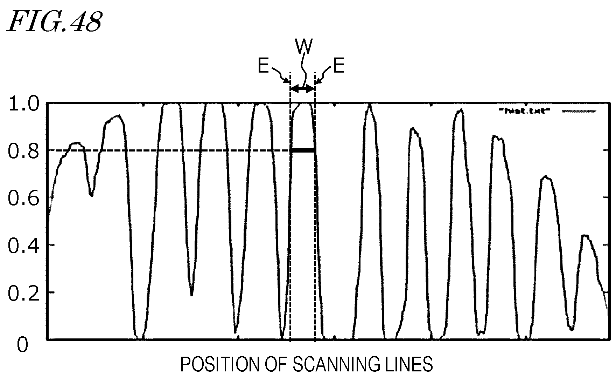

FIG. **48** shows an example of distribution of the total values, which is created from one block **49** in the plan view image shown in FIG. **41.** In this example, regarding the convex portion at the center of the distribution, the positions of the scanning lines having a total value that is 0.8 times the peak value of the convex portion are set as the positions of the edge lines **E.** In this distribution, as the positions of the scanning lines becomes farther from the center in a leftward direction or a rightward direction, the peak of the convex portion becomes lower and broader. Reasons why this occurs are, as can be seen from the image in FIG. **41,** that the degree of distortion of the image is small at the center of the plan view image but becomes larger in a direction away from the center; and that the black triangular regions at the two corners of the bottom side decreases the total values. In the case where the detection of the crop rows is used for the travel of the agricultural machine, the crop rows that should be detected accurately are the crops rows at the center or in the vicinity thereof in the image. Therefore, the distortion of the regions closer to the left and right ends of the plan view image can be ignored.

The process shown in FIG. 26 is executed for each of the plurality of blocks **49.** That is, the processing device **122** searches for the direction of the scanning directions **S** for each of the blocks **49,** and determines the direction of the crop rows **12** and the positions of the edge lines. As a result, even in the case where the curved crop rows **12** are provided, the direction of the crop rows **12** and the positions of the edge lines can be accurately determined.

The process shown in FIG. 26 is executed on the blocks **49** sequentially, for example, from the block located closest to the agricultural machine **100** (lowermost block in the image) to the block located farthest from the agricultural machine **100** (uppermost block in the image). At this point, setting of the direction of the scanning lines **S** in a certain block may be adjusted based on the direction of the crop rows **12** and the positions of the edge lines of the crop rows **12** determined for the immediately previous block. For example, the division number of the plurality of blocks (i.e., number of blocks) is set as **N (N** is an integer of 3 or larger), and the plurality of blocks are labeled a first block, a second block, ... and an N'th block sequentially from the lowermost block in the image. The processing device **122** may change the direction of the plurality of scanning lines in the (i+1)th block within a predetermined range of angles centered around the direction of the crop rows determined for the i'th block (i is an integer of 1 or larger and N-1 or smaller). Alternatively, the processing device **122** may determine a row region corresponding to the crop rows based on the determined positions of the edge lines for the i'th block, and set a start point of the plurality of scanning lines S in the (i+1)th block at a point in a range of the top end of the row region determined for the i'th block. Hereinafter, a specific example of this process will be described.

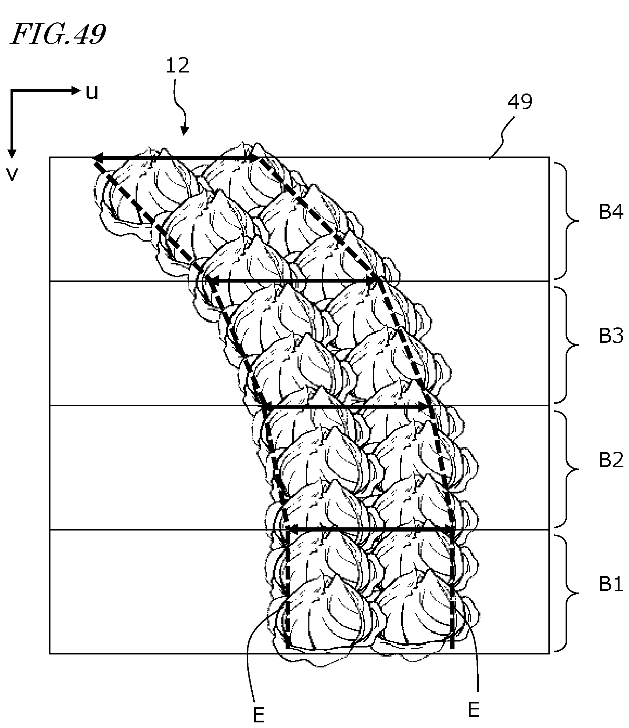

FIG. **49** shows an example of edge lines E of the crop row **12** extending in a curved manner. FIG. **49** shows four blocks **49.** These blocks **49** include a first block **B1,** a second block **B2,** a third block **B3** and a fourth block **B4** sequentially from the block closest to the agricultural machine **100** (from the lowermost block in the image). In FIG. **49,** the edge lines **E** of the crop row **12** in each of the blocks are represented with broken lines. A region between the two edge lines E is determined as a row region corresponding to the crop row **12.** In FIG. **49,** a range of the top end of the row region of each block is represented with a two-headed arrow.

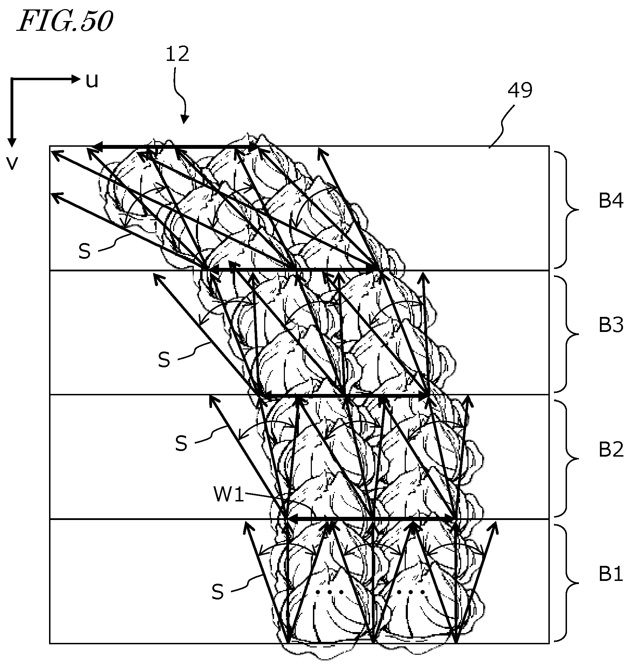

FIG. **50** schematically shows an example of range of the scanning lines **S** in each block. In FIG. **50,** the plurality of scanning lines **S** are represented with arrows. In this example, for the first block **B1,** the processing device **122** changes the angle (direction) of the scanning lines **S** within a predetermined angle range (e.g., ±15°, ±30°, ±45°, etc.) centered around the traveling direction of the agricultural machine **100** (v-axis direction). The processing device **122** determines the direction of the crop row **12** and the positions of the edge lines in the first block **B1** based on the distribution of the total values of the index values by the process described above. The processing device **122** sets the region sandwiched by the two edge lines **E** as the row region in the first block **B1.** For the second block **B2,** the processing device **122** changes the direction of the plurality of scanning lines **S** within a predetermined angle range centered around the direction of the crop row **12** determined for the first block **B1.** The processing device **122** sets a start point of the plurality of scanning lines **S** in the second block **B2** at a point in the range of a top end **W1** of the row region determined for the first block **B1.** The processing device **122** determines the distribution of the total values of the index values, and determines the direction of the crop row **12** and the positions of the edge lines in the second block **B2** based on the distribution, by the process described above. After this, substantially the same process is executed for the third block **B3** and the subsequent blocks.

With such processes, the processing amount required for the search for the direction of the scanning lines **S** can be decreased, and the time required for the detection of the row region in each block can be shortened. Note that in the case where the angle range for the search for the direction of the scanning lines **S** is set to a relative wide angle, the search may be performed in an angle range centered around the angle of the traveling direction (v-axis direction) of the agricultural machine **100,** for all the blocks. For the second block **B2** and the subsequent blocks, instead of determining the total value of the index values along a large number of scanning lines, the processing device **122** may determine a total value of the index values along two parallel scanning lines starting from the two edge lines determined for the immediately previous block. With such a method also, the direction of the crop row and the edge lines in the second block **B2** and the subsequent blocks can be estimated.

In the above-described example, the direction of the crop row and the edge lines in each block are determined based on the distribution of the total values that are determined by calculating the total value of the color index values of the crop row **12** for each scanning line. Any other method may be used. For example, the processing device **122** may count the number of the first pixels each having an index value that is equal to, or higher than, the threshold value along a plurality of scanning lines parallel to each other, and may set the direction of the scanning lines, at which the total of the counted numbers is maximum, as the direction of the crop row **12** in the block. Based on the distribution of the counted numbers of the first pixels obtained by scanning performed in the direction determined in this manner, the processing device **122** can determine the direction and the edge lines of the crop row **12** in the block.

Upon determining the direction in which the crop row **12** extends and the edge lines of the crop row **12** in each of the plurality of blocks, the processing device **122** executes the operation of step **S216** shown in FIG. **37.**

In step **S216,** the processing device **122** determines an approximation line of the crop row **12** based on the direction and the positions of the edge lines determined for each of the plurality of blocks. For example, the processing device **122** may determine the center of the row region between the edge lines at the two ends of the detected crop row **12** (hereinafter, the center may be referred to as a "crop row center") for each block, and may determine the approximation line of the crop row **12** based on the position of the center of the row region in each block. More specifically, the processing device **122** may determine an approximation curve based on the position of the center of the row region in each of the plurality of blocks, and may determine the approximation curve as the approximation line of the crop row **12.** Alternatively, the processing device **122** may set a polyline, connecting the centers of the plurality of blocks, as the approximation line of the crop row **12.**

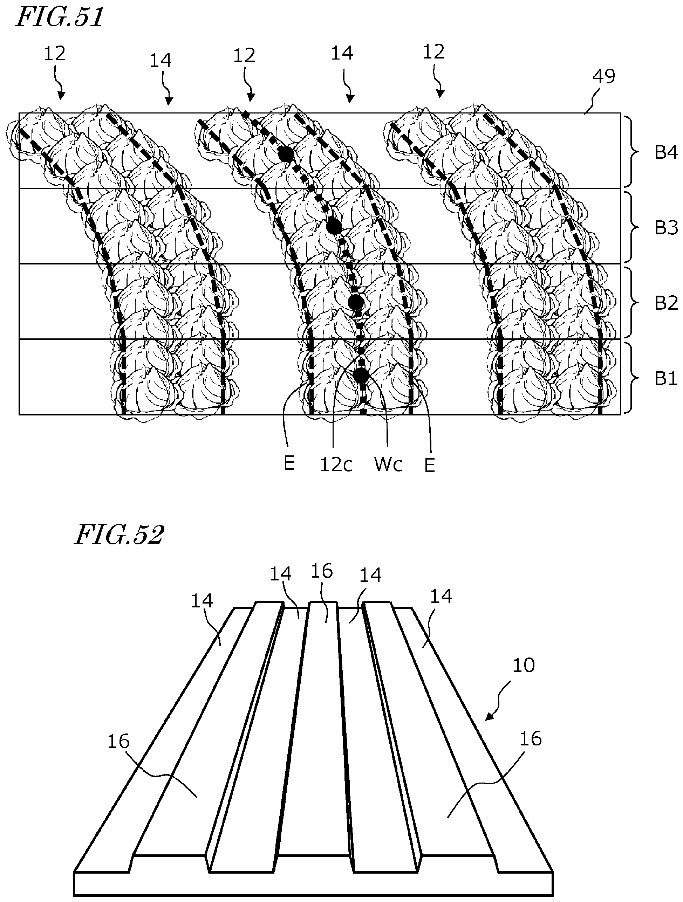

FIG. **51** shows an example of approximation line **12c** of the crop row **12.** In FIG. **51,** the crop row center **Wc** in each block is represented with a black circle. In the example of FIG. **51,** the crop row **12** at the center among the three crop rows **12** included in the image is the target of the row-following travel. Therefore, the approximation line **12c** is determined only for the central crop row **12.** The approximation line **12c** may be determined for each of all the crop rows **12** in the image. The crop row center **Wc** in each block is located at the center of the region sandwiched between two edge lines at the two ends of the crop row **12.** The approximation line **12C** may be, for example, a curved line (e.g., a high-order curve such as a cubic curve or the like) determined so that the root mean square of the distances (errors) from the plurality of crop row centers **Wc** is minimum. Such an approximation line **12c** corresponds to a curved line passing the center of the crop row **12** including a curved portion. The processing device **122** may generate an approximation curve such as a Bezier curve or a spline curve as the approximation line of the crop row, based on the positions of the plurality of crop row centers **Wc.**

Once the processing device **122** determines the approximation line **12c** of the crop row **12,** the processing device **122,** or a path generation device that has acquired information representing the position of the approximation line **12c** from the processing device **122,** can determine a target path of the agricultural machine based on the position of the approximation line **12c.** For example, the target path may be determined so as to overlap the approximation line **12c** or so as to be parallel to the approximation line **12c.** The target path may be generated so that the wheels of the agricultural machine **100** are maintained in the intermediate regions (work paths) **14.** For example, the target path may be generated so that the central portion of each of the wheels in the width direction passes the center between the two edge lines located at the two ends of the intermediate region **14.** With such a target path, even if the agricultural machine **100** deviates from the target path by several centimeters while traveling, the possibility that the tire enters the crop row can be decreased.

In the present embodiment, an enhanced image in which the crop region is enhanced is generated from the time-series color images acquired from the imaging device **120,** and then homography transformation is performed. Alternatively, the step of generating the enhanced image may be performed after the homography transformation. For example, homography transformation may be performed on the time-series color images acquired from the imaging device **120** to generate a plan view image, and an enhanced image in which the crop region is enhanced is generated from the plan view image.

The above-described row detection methods are implemented by a computer, and may be executed by causing the computer to execute predetermined operations.

(2-3. Example 2 of the row detection system)

Example 2 of the row detection system according to the present embodiment will be described. In this present embodiment, a ridge is detected as the "row detection".

FIG. **52** is a perspective view schematically showing rows of ridges **16** provided on the ground surface **10.** "Ridges" are places where plants for serial sowing or serial planting are to be planted, in which earth is raised high at intervals to result in bumps that extend essentially linearly. The ridges **16** may each have a cross-sectional shape, taken perpendicularly to the direction in the ridge **16** extends, that is generally trapezoidal or semicircular. FIG. **52** schematically shows the ridges **16** having a trapezoidal cross-section. Actual ridges do not have such a simple shape as shown in FIG. **52.** What exists between two adjacent ridges **16** is an intermediate region **14,** which is called an "interridge land". Such intermediate regions **14** function as work paths. Crops may be planted in the ridges **16,** or only the soil may be exposed at the entirety of the ridges **16** with no crops being planted. Each of the ridges **16** may be covered with a mulching sheet.

The height, width, and intervals of the ridge **16** do not need to be uniform, but may vary from place to place. Generally, the height of the ridge **16** is a difference in height between the ridge and the interridge land. In the present specification, the "height" of a ridge **16** is defined by a distance to a top surface of the ridge **16** from the aforementioned reference plane **Re.**

In the example of FIG. **52,** the edge lines of the ridges **16** are clear. However, in actuality, the ridges **16** are portions of the ground surface **10** that are continuous from the intermediate regions **14,** and have various "cross-sectional shapes" as described above. Therefore, the boundaries between the ridges **16** and the intermediate regions **14** are not always clear. In an embodiment of the present disclosure, the edge lines of the ridges **16,** i.e., the boundaries between the ridges **16** and intermediate regions **14,** are defined as positions that are located on opposite sides of a peak of each of ridges **16** and have a height of a predetermined ratio with respect to the height of the peak. The positions of the edge lines are, for example, positions having a height that is 0.8 times the height of the peak of each ridge **16.**

As shown in FIG. **30,** the row detection system **1000** in this example also includes the imaging device **120** and the processing device **122** executing image processing on the time-series images acquired from the imaging device **120.** The hardware configuration of the processing device **122** is the same as that of the processing device **122** in example 1.

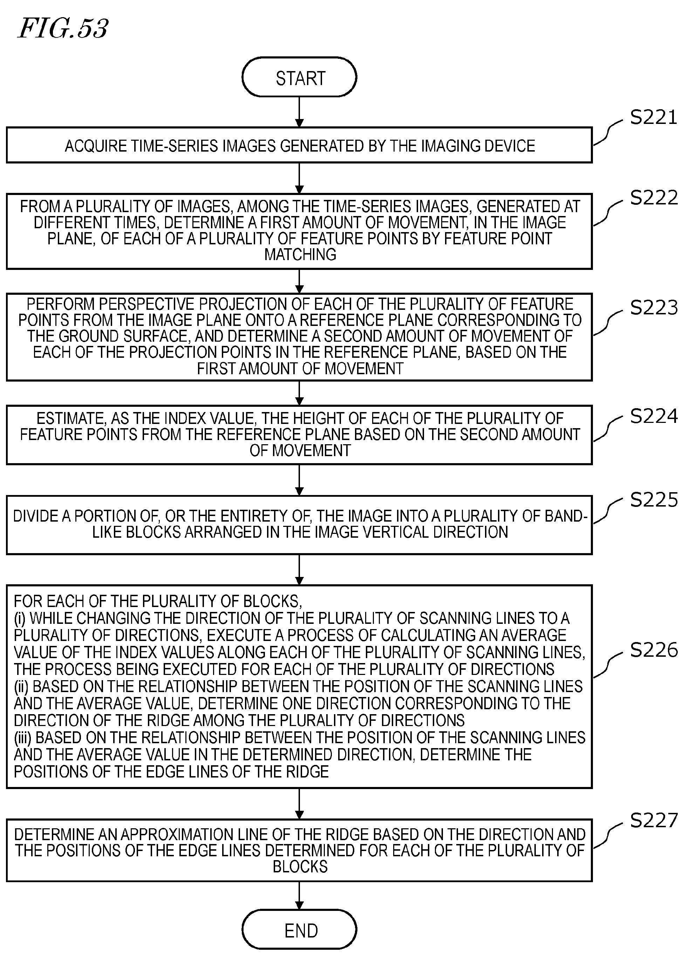

FIG. **53** is a flowchart showing operations of the processing device **122.** The processing device **122** executes the operations of steps **S221** though **S227** shown in FIG. **53.** Hereinafter, the operation of each step will be described.

In step **S221,** the processing device **122** acquires the time-series images generated by the imaging device **120.** This operation is substantially the same as that of step **S211** shown in FIG. **37.** The time-series images form an aggregation of images that are chronologically acquired by the imaging device **120** through image capturing. The time-series images do not need to be color images, but may be color images. In the case of outputting time-series color images, the processing device **122** may apply gray-scale processing to a given color image as a target of processing, among the time-series color images. As described above in embodiment 1, each of the images is formed of a frame-by-frame group of pixels. The frame rate is also as described above in embodiment 1.

In step **S222,** the processing device **122** determines a first amount of movement, in the image plane, of each of a plurality of feature points by feature point matching, from a plurality of images, among the time-series images, generated at different times.

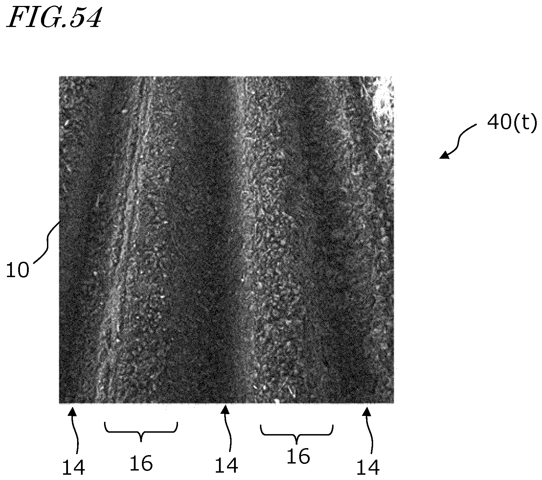

FIG. **54** shows a one-frame image **40(t)** among time-series images acquired , at time t, by the imaging device (in this example, a monocular camera) **122** mounted on the agricultural machine **100.** In this example, crops are not planted in the ridges **16.** The data on the image **40(t)** captured by the monocular camera does not include depth information. Therefore, it is impossible to learn, from this single image **40(t),** the difference in height between the ridges **16** and the intermediate regions **14.**

Not only at time t but also at other points in time, e.g., time t+1, t+2, t+3, ..., the imaging device **120** chronologically acquires an image **40(t+1),** an image **40(t+2),** and an image **40(t+3),** .... Each of the plurality of images that are chronologically acquired by the imaging device **120** during the travel of the agricultural machine **100** may include the same region of the ground surface **10** in a partially overlapping manner.

In the present embodiment, the processing device **122** extracts feature points from the image **40(t),** the image **40(t+1),** .... A "feature point" is a point having a pixel(s) of a luminance value or a color that is distinguishable from those of the surrounding pixels, such that the position(s) of the pixel(s) can be specified within the image. By extraction of the feature points in the image, a plurality of images that have captured the same scene can be associated with one another. In a region of the image where the luminance value and color are uniform, it is difficult to distinguish any pixel in that region from the surrounding pixels. Therefore, a feature point is selected from a region in which the luminance value or the color locally changes within the image. A feature point is a pixel or a group of pixels that has a "local feature amount".

In the present embodiment, a purpose of extracting the feature points is to perform feature point matching to measure an amount of movement of each of the feature points from the time-series images **40(t), 40(t+1),** ... that are acquired while the agricultural machine **100** is moving. The feature point extraction that is suitable for such feature point matching can be performed by the processing device **122** through image processing. Examples of feature-point extraction algorithms based on image processing include SIFT (Scale-invariant feature transform), SURF (Speed-Upped Robust Feature), KAZE, and A-KAZE (ACCELERATED-KAZE). Like SIFT or SURF, KAZE and A-KAZE are feature-point extraction algorithms that are highly robust because of the strength thereof in scaling, rotation, and changes in lighting. Unlike SIFT and SURF, KAZE and A-KAZE do not employ a Gaussian filter. Therefore, KAZE and A-KAZE are unlikely to be affected by rotation, scaling, and changes in luminance values, and are able to extract feature points even from a region of the image where changes in the luminance value and the color are relatively small. This makes it easy to extract feature points that are suitable for feature point matching, even from an image of the soil surface or the like. As compared to KAZE, A-KAZE is advantageous in having high robustness and in being capable of enhancing the processing speed. In the present embodiment, the A-KAZE algorithm is used to extract the feature points. Note that the algorithm for the feature point matching is not limited to those in this example.

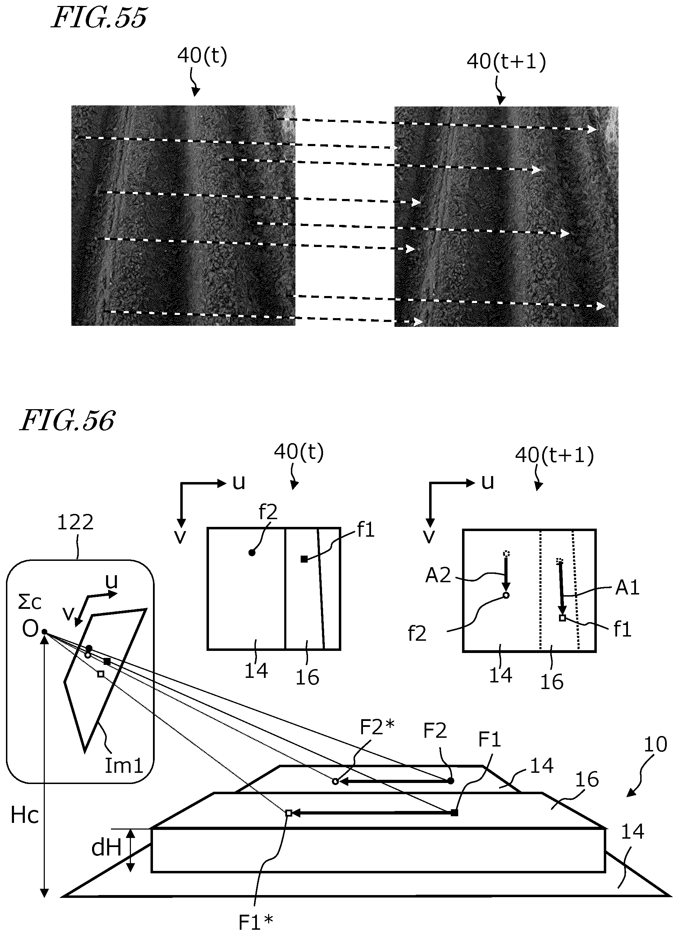

FIG. **55** schematically shows the correspondence of feature points between the image **40(t)** acquired from the imaging device **120** at time t and the image **40(t+1)** acquired from the imaging device **120** at time t+1. Herein, the time interval between time t and time t+1 may be e.g., not shorter than 100 milliseconds and not longer than 500 seconds.

A plurality of feature points extracted from the image **40(t)** and a plurality of feature points in the image **40(t+1)** respectively corresponding to such a plurality of feature points are associated with each other by a feature point matching algorithm. In FIG. **55,** 8 pairs of feature points corresponding to each other are connected by arrows. In the present embodiment, the processing device **122** is able to extract e.g. hundreds or thousands of feature points from each of the image **40(t)** and the image **40(t+1)** by A-KAZE. The number of feature points to be extracted may be determined based on the number of images to be processed in one second.

After performing such feature point matching, the processing device **122** determines the amount of movement (first amount of movement) in the image plane, for each of the plurality of feature points. It is not that the first amount of movement determined from the two images **40(t)** and **40(t+1)** has one common value for all the feature points. Depending on the physical difference in height between the feature points on the ground surface **10,** the first amount of movement exhibits different values.

FIG. **56** is a perspective view schematically showing the movement of the ridge **16** and the intermediate region (work path) **14** appearing in the images acquired by the imaging device **120.** FIG. **56** also schematically show the image **40(t)** and the image **40(t+1).** FIG. **56** schematically shows how a point **F1** on the ridge **16** and a point F2 on the intermediate region (interridge land or work path) **14** horizontally move leftward in the figure. This horizontal movement is a relative motion that occurs by the imaging device **120** secured to the agricultural machine **100** moving rightward together with the agricultural machine **100.** In FIG. **56,** for simplicity, the origin **O** of the camera coordinate system Σ**c** in the imaging device **120** is kept stationary, whereas the ground surface **10** moves leftward. The origin **O** of the camera coordinate system Σ**c** has a height **Hc.** In the illustrated example, the ridge **16** is a simplified ridge having a height **dH.**

In the image **40(t)** of FIG. **56,** a feature point **f1** of the ridge **16** and a feature point **f2** of the intermediate region **14** are shown. These feature points **f1** and **f2** are examples of a large number of feature points which are extracted by the feature-point extraction algorithm such as A-KAZE or the like. In the image **40(t+1),** the feature points **f1** and **f2** after the movement are shown. Also in the image **40(t+1),** for referencing sake, arrow **A1** indicating the movement of the feature point **f1** and arrow **A2** indicating the movement of the feature point **f2,** during the period of time from time t to t+1, are shown. The length of arrow **A1** (corresponding to the first amount of movement) is longer than the length of arrow **A2** (corresponding to the first amount of movement). As can be seen, the amount of movement of a feature point in the image (first amount of movement) differs depending on the distance from the origin **O** of the camera coordinate system Σ**c** to the corresponding point in the subject. This is caused by the geometric nature of perspective projection.

The feature points **f1** and **f2** in the image **40(t)** are, respectively, points resulting through perspective projection of the points **F1** and **F2** on the ground surface **10,** which is a subject, onto the image plane **Im1** of the imaging device **120.** Similarly, the feature points **f1** and **f2** in the image **40(t+1)** are, respectively, points resulting through perspective projection of the points **F1\*** and **F2\*** on the ground surface **10,** which is a the subject, onto the image plane **Im1** of the imaging device **120.** The center point of the perspective projection is the origin **O** of the camera coordinate system Σ**c** of the imaging device **120.** Since the perspective projection has a bidirectional relationship, the points **F1** and **F2** can be considered to be points resulting through perspective projection of the feature points **f1** and **f2** in the image **40(t+1)** onto the ground surface **10.** Similarly, the points **F1\*** and **F2\*** can be considered to be points resulting through perspective projection of the feature points **f1** and **f2** in the image **40(t)** onto the ground surface **10.**

As shown in FIG. **56,** from time t to time t+1, the point **F1** on the ridge **16** moves to the position of the point **F1\*,** and the point **F2** on the intermediate region **14** moves to the position of the point **F2\*.** The distances of these movements are each equal to the distance (distance of horizontal movement) traveled by the agricultural machine **100** from time t to time t+1. By contrast, the amounts of movement of the feature points **f1** and **f2** on the image plane **Im1** of the imaging device **120** are different from each other.

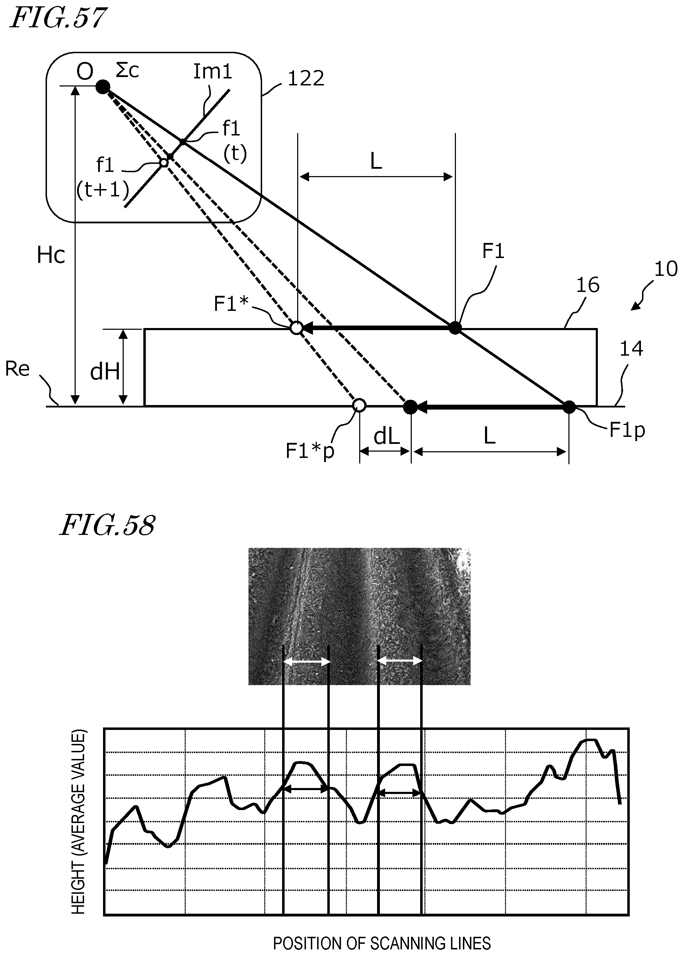

FIG. **57** schematically shows the relationship between the amount of movement **(L)** of the point **F1** on the ridge **16,** corresponding to the feature point **f1** on the image plane **Im1** of the imaging device **120,** and the amount of movement (second amount of movement **L+dL)** of a point (projection point) **F1p** projected onto the reference plane **Re.** In this example, the height of the reference plane **Re** is matched to the height of the intermediate region (interridge land) **14,** while the ridge **16** has the height **dH.**

As can be seen from FIG. **57,** the point **F1** on the ridge **16** has moved leftward by a distance (amount of movement) **L** that is equal to the traveled distance of the agricultural machine **100;** whereas the amount of movement (second amount of movement) of the point (projection point) **F1p** resulting through the perspective projection onto the reference plane **Re** is expressed as L+dL, which is longer than L. This is because the point F1 on the ridge **16** is at a position higher than the reference plane **Re** and is closer to the center of the perspective projection (origin **O** of the camera coordinate system). In correspondence with this excess length dL, the amount of movement (first amount of movement) on the image plane Im1 is increased.

From the ratio (homothetic ratio) between lengths of the sides of two homothetic triangles shown in FIG. **57,** the following equation is derived.

[eq. 6]

$$\frac{Hc}{L+dL} = \frac{(Hc - dH)}{L}$$

The above equation is transformed to give the following equation.

[eq. 7]

$$dH = Hc\left(1.0 - \frac{L}{L+dL}\right)$$

In order to estimate the size of the bump-dent difference on the ground surface **10** based on the above equation, the processing device **122** according to the present embodiment executes the operation of step **S223**. That is, the processing device **122** performs perspective projection of each of the plurality of feature points from the image plane onto the reference plane **Re** corresponding to the ground surface **10** and determines and the second amount of movement **(L+dL)** of each projection point in the reference plane **Re** based on the first amount of movement. The distance L in the above equation can be acquired by measuring the traveled distance of the agricultural machine **100**. Moreover, the height **Hc** of the origin O of the camera coordinate system from the reference plane **Re** is known. Therefore, once the second amount of movement **(L+dL)** becomes known, the height **dH** of the ridge **16** can be calculated from eq. 7. The second amount of movement **(L+dL)** can be determined from the first amount of movement.

After executing the process of step **S223**, the processing device **122** executes the process of step **S224.**

In step **S224**, the processing device **122** estimates the height **dH** of each feature point from the reference plane **Re** as the index value based on the second amount of movement **(L+dL)** of each feature point, and detects the ridge **16** on the ground surface **10**.

In the present embodiment, given the height **Hc** of the center point O of perspective projection from the reference plane **Re,** the height **dH** of the plurality of feature points from the reference plane **Re,** the second amount of movement L of a feature point (having the heigh **dH** of zero) on the reference plane **Re,** and the second amount of movement **L+dL** of a feature point having the height **dH** larger than zero, the height of each feature point can be determined as Hc·(1-L/(L+dL)).

For determining the second amount of movement based on the first amount of movement, homography transformation can be used. Specifically, the aforementioned inverse H1$^{-1}$ of the transformation matrix H1 may be used to transform the coordinates of each feature point on the image plane **Im1** into coordinates of the corresponding point on the reference plane **Re.** Therefore, first, the processing device **122** determines the first amount of movement from the coordinates of each feature point on the image plane **Im1** before and after the movement. Next, the processing device **122** transforms the coordinates of each feature point into coordinates of the corresponding point on the reference plane **Re** through homography transformation, and then can determine the second amount of movement from the coordinates on the reference plane **Re** before and after the movement.

[eq. 8]

$$\begin{pmatrix} X \\ Y \\ 1 \end{pmatrix} = H1^{-1} \begin{pmatrix} u \\ v \\ 1 \end{pmatrix}$$

As a result of the above-described process, an estimated value of the height from the reference plane **Re** can be obtained for each of the large number of feature points in the image. A two-dimensional map of such estimated values of height represents a distribution of differences in height of the bumps and dents existing on the ground surface **10**. After estimating the height of each feature point from the reference plane, the processing device **122** executes the process of step **S225** shown in FIG. **53**.

In step **S225**, the processing device **122** divides a portion of, or the entirety of, the image (time-series images or a plan view image transformed from the time-series images) into a plurality of band-shaped blocks arranged in the image vertical direction. The process of this step is substantially the same as that in step **S214** shown in FIG. **37**. Note that the division into the plurality of blocks may be performed between step **S221** and step **S222**. In this case, the processes in steps **S222** through **S224** may be performed only on the region of interest defined by the plurality of blocks.

In step **S226,** the processing device **122** executes the following processes for each of the plurality of blocks.

(i) While changing the direction of the plurality of scanning lines to a plurality of directions, executes a process of calculating an average value of the index values along each of the plurality of scanning lines parallel, the process being executed for each of the plurality of directions.

(ii) Based on the relationship between the positions of the scanning lines and the average value, determines one direction corresponding to the direction of the ridge among the plurality of directions.

(iii) Based on the relationship between the positions of the scanning lines and the average value in the determined direction, determines the positions of the edge lines of the ridge.

As described above regarding embodiment 1, in the present embodiment also, a plurality of scanning lines are set in each block. Note that in the present embodiment, the average value of the height of the feature points is calculated along each scanning line. Moreover, the direction (angle) of the scanning lines is changed, so that the direction in which the ridge extends can be determined from the distribution of the average values of the height of the feature points. Once the direction in which the ridge **16** extends is determined, the edge lines of the ridge **16** can be determined by a method substantially the same as the method for determining the edge lines of the crop row **12**.

FIG. **58** shows the relationship between the average value of the height of the feature points on each of the scanning lines parallel to the direction in which the ridges extend and the positions of the scanning lines. In the graph of FIG. **58,** the horizontal axis represents the positions of the scanning lines, whereas the vertical axis represents the average value of the height of the feature points on each scanning line. As shown in the graph, the average value of the height repetitively increases and decreases as the position of the scanning line moves from left to right. A position at which the average value of the height exhibits a peak corresponds to the center of each ridge. Note that the curve indicating the average value of the height forms a trough between two adjacent peaks. This trough corresponds to the center or the vicinity thereof of the intermediate region (interridge land or work path) **14**.

The graph showing the distribution of the average values of the height as shown in FIG. **58** changes in accordance with the direction of the scanning lines. The processing device **122** determines, as the direction in which the ridges extend, the direction of the scanning lines at which the peak and the trough of the average values of the height are distinguished from each other most clearly, for each of the blocks. The processing device **122** determines the positions of the edge lines of the ridges based on the distribution of the average values of the height in the determined direction. For example, the processing device **122** determines, as the edge lines of the ridge, the positions that are on opposite sides of the peak of the average values of the height and have a height of a predetermined ratio with respect to the peak (e.g., 0.8 times the height of the peak). FIG. **35** shows, above the graph, white arrows representing the positions of the edge lines of the two ridges in the image.

After determining the positions of the edge lines of the ridges, the processing device **122** executes the process of step **S227** shown in FIG. **53**. The process of step **S227** is substantially the same as the process of step **S216** shown in FIG. **37**.

According to the present embodiment, the row detection does not depend on the "color of the crop row", and therefore, has an advantage of not being susceptible to the type of crops or the daylighting conditions. Not only tall ridges, e.g., "high ridges" that are often made for growing vegetables, but also relatively low ridges having a height in the range of 5 to 10 centimeters can be detected.

The processing device **122** may perform the detection of the crop rows in example 1 and the detection of the ridges in example 2 simultaneously or selectively. In the case where crops are planted on the ridges, the processing device **122** may function as the crop row detection system in example 1 and the ridge detection system in example 2. In this case, the edge lines of the crop row and the edge lines of the ridge are determined. The target path of the agricultural machine **100** can be determined based on the edge lines of both of, or either one of, the crop row and the ridge.

The processing device **122** may calculate a detection reliability for each of the crop row detection and the ridge detection. The reliability of the crop row detection may be determined based on, for example, the distribution of the total values of the index values shown in FIG. **48,** the magnitude of the peak values or the like. The reliability of the ridge detection may be determined based on, for example, the magnitude of the difference between the maximum value and the minimum value in the height distribution shown in FIG. 58, etc. For instance, in the case where a target path is generated based on the edge lines of the detected crop row and the agricultural machine is traveling along the target path, it may possibly occur that the crop row detection is made impossible or that the reliability thereof has decreased to a level below a predetermined level. At a site where such an incident has occurred, the ridge detection may be executed in the background so that the target path is generated based on the edge lines of the ridge.

In the case where the processing device **122** may perform both of the crop row detection and the ridge detection, one of, or both of, the crop row detection and the ridge detection may be performed while being selected by the operator.

In the present embodiment also, the method for detecting the crop rows or the ridges formed in a field is not limited to the one described in the above example, and the crop row detection and the ridge detection can be performed by use of any of a wide variety of known algorithms. For example, a method of linearly approximating a crop row described in Japanese Patent No. 2624390 granted to the present Applicant is usable. A method of detecting a line formed by steps or trenches of a ridge described in Japanese Laid-Open Patent Publication No. 2016-146061 is usable.

(2-4. Example configuration of the agricultural machine)

Now, an example configuration of the agricultural machine including the row detection system according to the present embodiment will be described.

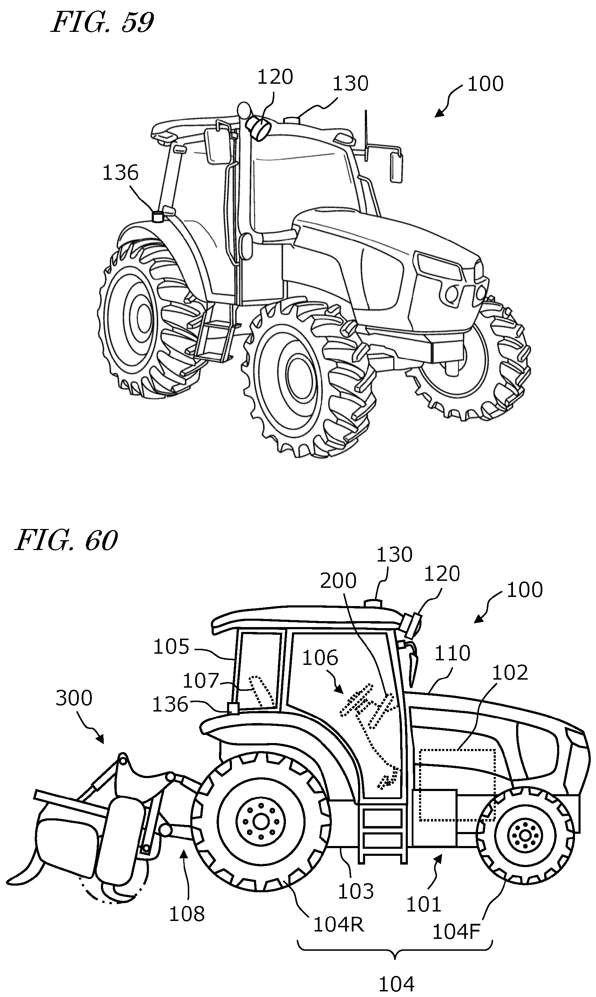

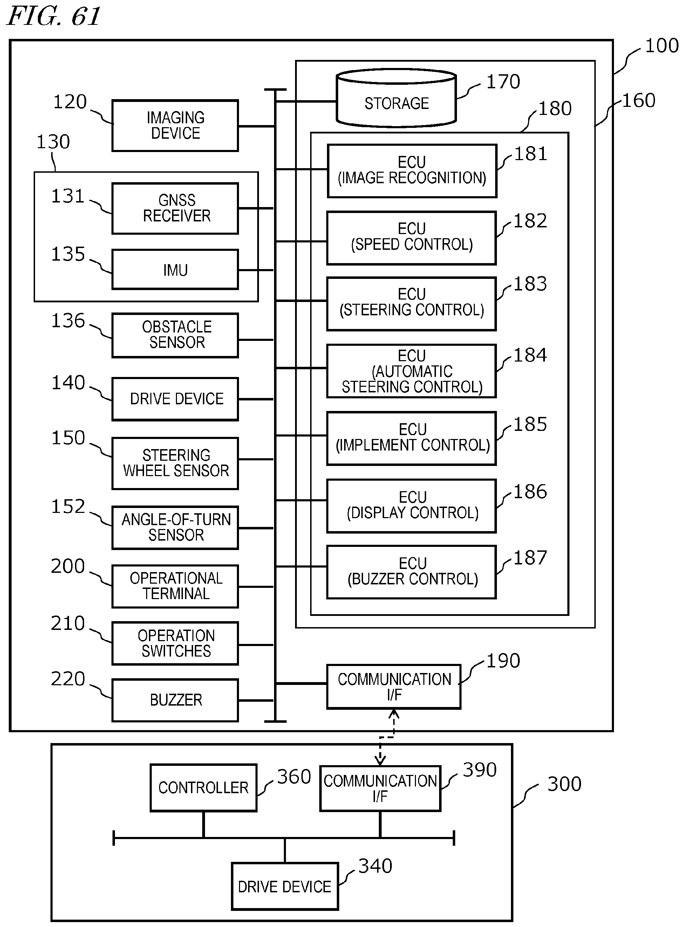

FIG. **59** is a perspective view showing an example of external appearance of an agricultural machine **100** according to the present embodiment. FIG. **60** is a side view of an example of the agricultural machine **100** in a state where the implement **300** is attached thereto. FIG. **61** is a block diagram showing an example of general configuration of the agricultural machine **100** and the implement 300. Unlike the agricultural machine **100** shown in FIG. **27** through FIG. **29,** the agricultural machine **100** shown in FIG. **59** through FIG. **61** includes one imaging device **120** instead of the two imaging devices **120** and **121.** Except for this, the agricultural machine **100** shown in FIG. **59** through FIG. **61** includes substantially the same component elements as those of the agricultural machine **100** shown in FIG. **27** through FIG. **29.**

Through the action of the plurality of ECUs shown in FIG. **61,** the controller **180** realizes driving via manual steering or automatic steering. During usual automatic steering driving, the controller **180** controls the drive device **140** based on the position of the agricultural machine **100** as measured or estimated by the positioning device **130** and the target path stored on the storage **170.** As a result, the controller **180** causes the agricultural machine **100** to travel along the target path. By contrast, in the row-following travel control mode where the travel is done along the rows, the ECU **181** for image recognition determines the edge lines of the crop row or the ridge from the crop row or the ridge detected by the above-described process based on the image acquired by the imaging device **120,** and generates a target path based on the edge lines. The controller **180** performs an operation in accordance with this target path.

In the above-described embodiments, the agricultural machine **100** may be an unmanned work vehicle which performs self-driving. In that case, component elements which are only required for human driving, e.g., the cabin, the driver's seat, the steering wheel, and the operational terminal, do not need to be provided in the agricultural machine **100.** The unmanned work vehicle may perform operations substantially the same as the operations in each of the above-described embodiments via autonomous driving, or by remote manipulations by an operator.

A system that provides the various functions according to each of the embodiments can be mounted on an agricultural machine lacking such functions as an add-on. Such a system may be manufactured and sold independently from the agricultural machine. A computer program for use in such a system may also be manufactured and sold independently from the agricultural machine. The computer program may be provided while being stored on a computer-readable, non-transitory storage medium, for example. The computer program may also be provided through downloading via telecommunication lines (e.g., the Internet).

In the above-described embodiments, the agricultural machine **100** is a work vehicle for agriculture, but the agricultural machine **100** is not limited to the work vehicle, The agricultural machine **100** may be, for example, an unmanned flying object (e.g., drone) for agriculture. The row detection system according to the present disclosure can be mounted on such an unmanned flying object to detect a row region such as a crop row or a ridge on the ground surface. Such an unmanned flying object can perform agricultural work of, for example, spraying drugs or fertilizers while flying along the detected row region.

As described above, the present disclosure includes a row detection system, an agricultural machine, and a row detection method described in the following items.

[Item 1]

A row detection system, comprising:

a first imaging device attached to an agricultural machine to capture an image of a ground surface to generate a first image of a first region of the ground surface;
a second imaging device attached to the agricultural machine to capture an image of the ground surface to generate a second image of a second region of the ground surface partially overlapping the first region; and
a processing device to execute image processing on the first image and the second image,
wherein the processing device:

executes a process including planar panorama image synthesis based on the first image and the second image to generate a synthesized image, and
detects a crop row or a ridge on the ground surface based on the synthesized image.

[Item 2]

The row detection system of item 1,

wherein the first imaging device is attached to a first position on the agricultural machine,
wherein the second imaging device is attached to a second position on the agricultural machine rearward of the first position, and
wherein the second region is shifted rearward with respect to the first region.

[Item 3]

The row detection system of item 2,

wherein the first imaging device is attached so as to face in an obliquely forward and downward direction, and
wherein the second imaging device is attached so as to face in a downward direction.

[Item 4]

The row detection system of any one of items 1 to 3,

wherein the agricultural machine is a work vehicle, and
wherein an image capturing area of each the first imaging device and the second imaging device includes a portion, of the ground surface located below the work vehicle.

[Item 5]

The row detection system of item 4, wherein the image capturing area of each of the first imaging device and the second imaging device includes at least a portion of wheels of the work vehicle.

[Item 6]

The row detection system of item 4 or 5, wherein the image capturing area of each of the first imaging device and the second imaging device has a size longer in a front-rear direction than in a left-right direction of the work vehicle.

[Item 7]

The row detection system of any one of items 1 to 6, wherein the processing device:

transforms the first image into a first plan view image as seen from above the ground,
transforms the second image into a second plan view image as seen from above the ground, and
synthesizes the first plan view image and the second plan view image to generate the synthesized image.

[Item 8]

The row detection system of any one of items 1 to 7,

wherein the first image, the second image and the synthesized image are color images, and
the processing device:

generates, from the synthesized image, a synthesized enhanced image in which a color of the crop row is enhanced, and
detects the crop row on the ground surface based on the synthesized enhanced image.

[Item 9]

The row detection system of any one of items 1 to 6,

wherein the first image and the second image are color images, and
the processing device:

generates, from the first image, a first enhanced image in which a color of the crop row is enhanced,
generates, from the second image, a second enhanced image in which the color of the crop row is enhanced,

generates, from the first enhanced image, a first plan view image, as seen from above the ground, in which pixels are classified into pixels each having a color index value of the crop row that is equal to, or higher than, a threshold value and pixels each having a color index value of the crop row that is lower than the threshold value, generates, from the second enhanced image, a second plan view image, as seen from above the ground, in which pixels are classified into pixels each having a color index value of the crop row that is equal to, or higher than, the threshold value and pixels each having a color index value of the crop row that is lower than the threshold value, synthesizes the first plan view image and the second plan view image to generate the synthesized image, and detects the crop row on the ground surface based on the synthesized image.

[Item 10]

The row detection system of any one of items 1 to 6,

wherein the first image and the second image each include time-series images,
wherein the processing device:

repeats, at a predetermined frame rate, a process of generating the synthesized image based on the first image and the second image,
determines a first amount of movement, in an image plane, of each of a plurality of feature points by feature point matching, from a plurality of the synthesized images generated at different times,
performs perspective projection of each of the plurality of feature points from the image plane onto a reference plane corresponding to the ground surface, and determines a second amount of movement, in the reference plane, of each of projection points based on the first amount of movement, and
estimates a height of each of the plurality of feature points from the reference plane based on the second amount of movement to detect the ridge on the ground surface.

[Item 11]

The row detection system of item 7 or 9, wherein the processing device generates the synthesized image by a synthesis process including a process of determining a weighted average of a pixel value of each of pixels in a first overlapping region and a pixel value of each of pixels in a second overlapping region respectively corresponding to the each of the pixels in the first overlapping region, the weighted average being determined in accordance with the position of each of the pixels, the first overlapping region being a region of the first plan view image that overlaps the second plan view image, and the second overlapping region being a region of the second plan view image that overlaps the first plan view image.

[Item 12]

The row detection system of any of items 1 to 11, wherein the processing device:

acquires a first reference image generated by the first imaging device to capture an image of a specific subject located on the ground surface a second reference image generated by the second imaging device to capture an image of the subject,
extracts a plurality of feature points of the subject from each of the first reference image and the second reference image, and
generates or updates a transformation matrix usable for the planar panorama image synthesis based on the relationship between positions of the plurality of feature points in the first reference image and positions of the plurality of feature points in the second reference image.

[Item 13]

The row detection system of any of items 1 to 12, wherein the processing device determines a target path of the agricultural machine based on a position of the detected crop row or the detected ridge, and outputs information representing the target path.

[Item 14]

An agricultural machine, comprising:

EP 4 599 655 A1

the row detection system of any one of items 1 to 12; and
an automatic steering device controlling a traveling direction of the agricultural machine based on the position of the crop row or the ridge detected by the row detection system.

[Item 15]

The agricultural machine of item 14, further comprising a traveling device including a wheel responsible for steering,
wherein the automatic steering device controls a steering angle of the wheel responsible for steering, based on the position of the crop row or the ridge detected by the row detection system.

[Item 16]

A row detection method to be implemented by a computer, the row detection method causing the computer to execute:

acquiring a first image from a first imaging device attached to an agricultural machine to capture an image of a ground surface to generate the first image of a first region of the ground surface;
acquiring a second image from a second imaging device attached to the agricultural machine to capture an image of the ground surface to generate the second image of a second region of the ground surface partially overlapping the first region;
executes a process including planar panorama image synthesis based on the first image and the second image to generate a synthesized image; and
detecting a crop row or a ridge on the ground surface based on the synthesized image.

[Item 17]

A row detection system, comprising:

an imaging device attached to an agricultural machine to capture an image of a ground surface to generate time-series images including at least a portion of the ground surface; and
a processing device to execute image processing on the time-series images,
wherein the processing device:

determines an index value of at least a portion of pixels of the time-series images, the index value being to distinguish a crop row or a ridge as a target of detection from the remaining region,
divides a portion of, or the entirety of, the time-series images or a plan view image obtained as a result of transformation of the time-series images into a plurality of band-shaped blocks arranged in an image vertical direction, and
for each of the plurality of blocks,

while changing the direction of the plurality of scanning lines to a plurality of directions, executes a process of determining a total value or an average value of the index values along each of a plurality of scanning lines parallel to each other, the process being executed for each of the plurality of directions,
determines one direction corresponding to the direction of the crop row or the ridge among the plurality of directions based on the relationship between positions of the scanning lines and the total value or the average value,
determines positions of edge lines of the crop row or the ridge based on the relationship between the positions of the scanning lines and the total value or the average value in the determined direction, and
determines an approximation line of the crop row or the ridge based on the direction and the positions of the edge lines determined for each of the plurality of blocks.

[Item 18]

The row detection system of item 17, wherein the processing device:

determines, from the time-series images or the plan view image, a region of interest from which at least one of the crop row and the ridge is detected, and

38

divides the region of interest into the plurality of blocks.

[Item 19]

The row detection system of item 17 or 18, wherein where a division number of the plurality of blocks is N, N being an integer of 3 or larger, and the plurality of blocks are labeled a first block, a second block, ... an N'th block from a lowermost block, the processing device changes the direction of the plurality of scanning lines in the (i+1)th block within a predetermined angle range centered around the one direction determined for the i'th block (i is an integer of 1 or larger and N-1 or smaller).

[Item 20]

The row detection system of item 19, wherein the processing device:

for the i'th block, determines a row region corresponding to the crop row or the ridge based on the positions of the edge lines, and
sets a start point of the plurality of scanning lines in the (i+1)th block at a point in a range of a top end of the row region determined for the i'th block.

[Item 21]

The row detection system of any one of items 17 to 20,

wherein the time-series images are color images, and
wherein the processing device:

for at least a portion of pixels in the color images, determines a color index value of the crop row as a target of detection, as the index value, to generate an enhanced image in which a color of the crop row is enhanced,
generates, from the enhanced image, a plan view image in which pixels are classified into first pixels each having a color index value of the crop row that is equal to, or higher than, a threshold value and second pixels each having a color index value of the crop row that is lower than the threshold value,
divides a portion of, or the entirety of, the plan view image into the plurality of blocks, and
for each of the plurality of blocks,

while changing the direction of the plurality of scanning lines to a plurality of directions, executes a process of totaling the index values of the first pixels along each of the plurality of scanning lines to determine a total number, the process being executed for each of the plurality of directions,
determines one direction corresponding to the direction of the crop row among the plurality of directions based on the relationship between the positions of the scanning lines and the total value,
determines positions of edge lines of the crop row based on the relationship between the positions of the scanning lines and the total value in the determined direction, and
determines the approximation line of the crop row based on the direction and the positions of the edge lines determined for each of the plurality of blocks.

[Item 22]

The row detection system of any one of items 17 to 20, wherein the processing device:

determines a first amount of movement, in an image plane, of each of a plurality of feature points by feature point matching, based on a plurality of images, among the time-series images, generated at different times,
performs perspective projection of each of the plurality of feature points from the image plane onto a reference plane corresponding to the ground surface, and determines a second amount of movement, in the reference plane, of each of projection points based on the first amount of movement,
estimates a height of each of the plurality of feature points from the reference plane as the index value based on the second amount of movement, and
for each of the plurality of blocks,

while changing the direction of the plurality of scanning lines to a plurality of directions, executes a process of calculating an average value of the index values along each of a plurality of scanning lines, the process being executed for each of the plurality of directions,.

determines one direction corresponding to the direction of the ridge among the plurality of directions based on the relationship between the positions of the scanning lines and the average value,

determines positions of edge lines of the ridge based on the relationship between the positions of the scanning lines and the average value in the determined direction, and

determines the approximation line based on the direction and the positions of the edge lines determined for each of the plurality of blocks.

[Item 23]

The row detection system of any one of items 17 to 22, wherein the processing device changes the division number of the plurality of blocks in response to a manipulation of a user or a command from an external device.

[Item 24]

The row detection system of any one of items 17 to 23, wherein the division number of the plurality of blocks is 5 or larger and 30 or smaller.

[Item 25]

The row detection system of any one of items 17 to 24, wherein processing device determines a target path of the agricultural machine based on the determined approximation line of the crop row or the ridge, and outputs information representing the target path.

[Item 26]

An agricultural machine, comprising:

the row detection system of any one of items 17 to 25; and

an automatic steering device controlling a traveling direction of the agricultural machine based on the approximation line of the crop row or the ridge determined by the row detection system.

[Item 27]

The agricultural machine of item 26, further comprising a traveling device including a wheel responsible for steering,

wherein the automatic steering device controls a steering angle of the wheel responsible for steering, based on the position of the crop row or the ridge detected by the row detection system.

[Item 28]

A row detection method to be implemented by a computer, the row detection method causing the computer to execute:

acquiring time-series images from an imaging device attached to an agricultural machine to capture an image of a ground surface to generate the time-series images including at least a portion of the ground surface,

determining a distribution of index values of at least a portion of pixels of the time-series images, the index values being to distinguish a crop row or a ridge as a target of detection from the remaining region,

dividing a portion of, or the entirety of, the time-series images or a plan view image obtained as a result of transformation of the time-series images into a plurality of band-shaped blocks arranged in an image vertical direction, and

for each of the plurality of blocks,

while changing the direction of the plurality of scanning lines to a plurality of directions, executing a process of determining a total value or an average value of the index values along each of a plurality of scanning lines parallel to each other, the process being executed for each of the plurality of directions,

determining one direction corresponding to the direction of the crop row or the ridge among the plurality of directions based on the relationship between the positions of the scanning lines and the total value or the average value,

determining positions of edge lines of the crop row or the ridge based on the relationship between the positions of the scanning lines and the total value or the average value in the determined direction, and

determining an approximation line of the crop row or the ridge based on the direction and the positions of the edge lines determined for each of the plurality of blocks.

## INDUSTRIAL APPLICABILITY

The technique according to the present disclosure can be applied to agricultural machines, such as, for example, vehicles for crop management, vegetable transplanters, tractors, or agricultural drones.

## REFERENCE SIGNS LIST

**10:** ground surface, **12:** crop row, **14:** intermediate region (work path), **16:** ridge, **40:** image, **42:** enhanced image, **44:** plan view image, **100:** agricultural machine, **110:** vehicle body, **120, 121:** imaging device, **122:** processing device, **124:** automatic steering device, **1000:** row detection system

## Claims

1. A row detection system, comprising:

    a first imaging device attached to an agricultural machine to capture an image of a ground surface to generate a first image of a first region of the ground surface;
    a second imaging device attached to the agricultural machine to capture an image of the ground surface to generate a second image of a second region of the ground surface partially overlapping the first region; and
    a processing device to execute image processing on the first image and the second image,
    wherein the processing device:

        executes a process including planar panorama image synthesis based on the first image and the second image to generate a synthesized image, and
        detects a crop row or a ridge on the ground surface based on the synthesized image.

2. The row detection system of claim 1,

    wherein the first imaging device is attached to a first position on the agricultural machine,
    wherein the second imaging device is attached to a second position on the agricultural machine rearward of the first position, and
    wherein the second region is shifted rearward with respect to the first region.

3. The row detection system of claim 2,

    wherein the first imaging device is attached so as to face in an obliquely forward and downward direction, and
    wherein the second imaging device is attached so as to face in a downward direction.

4. The row detection system of any one of claims 1 to 3,

    wherein the agricultural machine is a work vehicle, and
    wherein an image capturing area of each the first imaging device and the second imaging device includes a portion, of the ground surface located below the work vehicle.

5. The row detection system of claim 4, wherein the image capturing area of each of the first imaging device and the second imaging device includes at least a portion of wheels of the work vehicle.

6. The row detection system of claim 4, wherein the image capturing area of each of the first imaging device and the second imaging device has a size longer in a front-rear direction than in a left-right direction of the work vehicle.

7.  The row detection system of any one of claims 1 to 3, wherein the processing device:

    transforms the first image into a first plan view image as seen from above the ground,
    transforms the second image into a second plan view image as seen from above the ground, and
    synthesizes the first plan view image and the second plan view image to generate the synthesized image.

8.  The row detection system of any one of claims 1 to 3,

    wherein the first image, the second image and the synthesized image are color images, and
    the processing device:

      generates, from the synthesized image, a synthesized enhanced image in which a color of the crop row is enhanced, and
      detects the crop row on the ground surface based on the synthesized enhanced image.

9.  The row detection system of any one of claims 1 to 3,

    wherein the first image and the second image are color images, and
    the processing device:

      generates, from the first image, a first enhanced image in which a color of the crop row is enhanced,
      generates, from the second image, a second enhanced image in which the color of the crop row is enhanced,
      generates, from the first enhanced image, a first plan view image, as seen from above the ground, in which pixels are classified into pixels each having a color index value of the crop row that is equal to, or higher than, a threshold value and pixels each having a color index value of the crop row that is lower than the threshold value,
      generates, from the second enhanced image, a second plan view image, as seen from above the ground, in which pixels are classified into pixels each having a color index value of the crop row that is equal to, or higher than, the threshold value and pixels each having a color index value of the crop row that is lower than the threshold value,
      synthesizes the first plan view image and the second plan view image to generate the synthesized image, and
      detects the crop row on the ground surface based on the synthesized image.

10. The row detection system of any one of claims 1 to 3,

    wherein the first image and the second image each include time-series images,
    wherein the processing device:

      repeats, at a predetermined frame rate, a process of generating the synthesized image based on the first image and the second image,
      determines a first amount of movement, in an image plane, of each of a plurality of feature points by feature point matching, from a plurality of the synthesized images generated at different times,
      performs perspective projection of each of the plurality of feature points from the image plane onto a reference plane corresponding to the ground surface, and determines a second amount of movement, in the reference plane, of each of projection points based on the first amount of movement, and
      estimates a height of each of the plurality of feature points from the reference plane based on the second amount of movement to detect the ridge on the ground surface.

11. The row detection system of claim 7, wherein the processing device generates the synthesized image by a synthesis process including a process of determining a weighted average of a pixel value of each of pixels in a first overlapping region and a pixel value of each of pixels in a second overlapping region respectively corresponding to the each of the pixels in the first overlapping region, the weighted average being determined in accordance with the position of each of the pixels, the first overlapping region being a region of the first plan view image that overlaps the second plan view image, and the second overlapping region being a region of the second plan view image that overlaps the first plan view image.

12. The row detection system of any of claims 1 to 3, wherein the processing device:

acquires a first reference image generated by the first imaging device to capture an image of a specific subject located on the ground surface a second reference image generated by the second imaging device to capture an image of the subject,

extracts a plurality of feature points of the subject from each of the first reference image and the second reference image, and

generates or updates a transformation matrix usable for the planar panorama image synthesis based on the relationship between positions of the plurality of feature points in the first reference image and positions of the plurality of feature points in the second reference image.

13. The row detection system of any of claims 1 to 3, wherein the processing device determines a target path of the agricultural machine based on a position of the detected crop row or the detected ridge, and outputs information representing the target path.

14. An agricultural machine, comprising:

the row detection system of any one of claims 1 to 3; and

an automatic steering device controlling a traveling direction of the agricultural machine based on the position of the crop row or the ridge detected by the row detection system.

15. The agricultural machine of claim 14, further comprising a traveling device including a wheel responsible for steering, wherein the automatic steering device controls a steering angle of the wheel responsible for steering, based on the position of the crop row or the ridge detected by the row detection system.

16. A row detection method to be implemented by a computer, the row detection method causing the computer to execute:

acquiring a first image from a first imaging device attached to an agricultural machine to capture an image of a ground surface to generate the first image of a first region of the ground surface;

acquiring a second image from a second imaging device attached to the agricultural machine to capture an image of the ground surface to generate the second image of a second region of the ground surface partially overlapping the first region;

executing a process including planar panorama image synthesis based on the first image and the second image to generate a synthesized image; and

detecting a crop row or a ridge on the ground surface based on the synthesized image.

17. A row detection system, comprising:

an imaging device attached to an agricultural machine to capture an image of a ground surface to generate time-series images including at least a portion of the ground surface; and

a processing device to execute image processing on the time-series images,

wherein the processing device:

determines an index value of at least a portion of pixels of the time-series images, the index value being to distinguish a crop row or a ridge as a target of detection from the remaining region,

divides a portion of, or the entirety of, the time-series images or a plan view image obtained as a result of transformation of the time-series images into a plurality of band-shaped blocks arranged in an image vertical direction, and

for each of the plurality of blocks,

while changing the direction of the plurality of scanning lines to a plurality of directions, executes a process of determining a total value or an average value of the index values along each of a plurality of scanning lines parallel to each other, the process being executed for each of the plurality of directions,

determines one direction corresponding to the direction of the crop row or the ridge among the plurality of directions based on the relationship between the positions of the scanning lines and the total value or the average value,

determines positions of edge lines of the crop row or the ridge based on the relationship between the positions of the scanning lines and the total value or the average value in the determined direction, and

determines an approximation line of the crop row or the ridge based on the direction and the positions of the edge lines determined for each of the plurality of blocks.

**18.** The row detection system of claim 17, wherein the processing device:

determines, from the time-series images or the plan view image, a region of interest from which at least one of the crop row and the ridge is detected, and
divides the region of interest into the plurality of blocks.

**19.** The row detection system of claim 17 or 18, wherein where a division number of the plurality of blocks is N, N being an integer of 3 or larger, and the plurality of blocks are labeled a first block, a second block, ... an N'th block from a lowermost block, the processing device changes the direction of the plurality of scanning lines in the (i+1)th block within a predetermined angle range centered around the one direction determined for the i'th block (i is an integer of 1 or larger and N-1 or smaller).

**20.** The row detection system of claim 19, wherein the processing device:

for the i'th block, determines a row region corresponding to the crop row or the ridge based on the positions of the edge lines, and
sets a start point of the plurality of scanning lines in the (i+1)th block at a point in a range of a top end of the row region determined for the i'th block.

**21.** The row detection system of claim 17 or 18,

wherein the time-series images are color images, and
wherein the processing device:

for at least a portion of pixels in the color images, determines a color index value of the crop row as a target of detection, as the index value, to generate an enhanced image in which a color of the crop row is enhanced, generates, from the enhanced image, a plan view image in which pixels are classified into first pixels each having a color index value of the crop row that is equal to, or higher than, a threshold value and second pixels each having a color index value of the crop row that is lower than the threshold value,
divides a portion of, or the entirety of, the plan view image into the plurality of blocks, and
for each of the plurality of blocks,

while changing the direction of the plurality of scanning lines to a plurality of directions, executes a process of totaling the index values of the first pixels along each of the plurality of scanning lines to determine a total number, the process being executed for each of the plurality of directions,
determines one direction corresponding to the direction of the crop row among the plurality of directions based on the relationship between the positions of the scanning lines and the total value,
determines positions of edge lines of the crop row based on the relationship between the positions of the scanning lines and the total value in the determined direction, and
determines the approximation line of the crop row based on the direction and the positions of the edge lines determined for each of the plurality of blocks.

**22.** The row detection system of claim 17 or 18, wherein the processing device:

determines a first amount of movement, in an image plane, of each of a plurality of feature points by feature point matching, based on a plurality of images, among of the time-series images, generated at different times,
performs perspective projection of each of the plurality of feature points from the image plane onto a reference plane corresponding to the ground surface, and determines a second amount of movement, in the reference plane, of each of projection points based on the first amount of movement,
estimates a height of each of the plurality of feature points from the reference plane as the index value based on the second amount of movement, and
for each of the plurality of blocks,

while changing the direction of the plurality of scanning lines to a plurality of directions, executes a process of calculating an average value of the index values along each of a plurality of scanning lines, the process being executed for each of the plurality of directions,.
determines one direction corresponding to the direction of the ridge among the plurality of directions based on the relationship between the positions of the scanning lines and the average value,

determines positions of edge lines of the ridge based on the relationship between the positions of the scanning lines and the average value in the determined direction, and
determines the approximation line based on the direction and the positions of the edge lines determined for each of the plurality of blocks.

23. The row detection system of claim 17 or 18, wherein the processing device changes the division number of the plurality of blocks in response to a manipulation of a user or a command from an external device.

24. The row detection system of claim 17 or 18, wherein the division number of the plurality of blocks is 5 or larger and 30 or smaller .

25. The row detection system of claim 17 or 18, wherein processing device determines a target path of the agricultural machine based on the determined approximation line of the crop row or the ridge, and outputs information representing the target path.

26. An agricultural machine, comprising:

the row detection system of claim 17 or 18; and
an automatic steering device controlling a traveling direction of the agricultural machine based on the approximation line of the crop row or the ridge determined by the row detection system.

27. The agricultural machine of claim 26, further comprising a traveling device including a wheel responsible for steering, wherein the automatic steering device controls a steering angle of the wheel responsible for steering, based on the position of the crop row or the ridge detected by the row detection system.

28. A row detection method to be implemented by a computer, the row detection method causing the computer to execute:

acquiring time-series images from an imaging device attached to an agricultural machine to capture an image of a ground surface to generate the time-series images including at least a portion of the ground surface,
determining a distribution of index values of at least a portion of pixels of the time-series images, the index values being to distinguish a crop row or a ridge as a target of detection from the remaining region,
dividing a portion of, or the entirety of, the time-series images or a plan view image obtained as a result of transformation of the time-series images into a plurality of band-shaped blocks arranged in an image vertical direction, and
for each of the plurality of blocks,

while changing the direction of the plurality of scanning lines to a plurality of directions, executing a process of determining a total value or an average value of the index values along each of a plurality of scanning lines parallel to each other, the process being executed for each of the plurality of directions,
determining one direction corresponding to the direction of the crop row or the ridge among the plurality of directions based on the relationship between the positions of the scanning lines and the total value or the average value,
determining positions of edge lines of the crop row or the ridge based on the relationship between the positions of the scanning lines and the total value or the average value in the determined direction, and
determining an approximation line of the crop row or the ridge based on the direction and the positions of the edge lines determined for each of the plurality of blocks.

*FIG.1*

1000

120    122

124

```
┌─────────────────────────────────────────────┐
│  ┌──────────────────┐    ┌──────────────┐    │       ┌──────────────┐
│  │  FIRST IMAGING   │───▶│              │    │       │  AUTOMATIC   │
│  │     DEVICE       │    │ PROCESSING   │────┼──────▶│   STEERING   │
│  └──────────────────┘    │   DEVICE     │    │       │    DEVICE    │
│  ┌──────────────────┐    │              │    │       └──────────────┘
│  │     SECOND       │───▶│              │    │
│  │ IMAGING DEVICE   │    └──────────────┘    │
│  └──────────────────┘                        │
└─────────────────────────────────────────────┘
```

121

*FIG.2*

```
              ┌─────────────┐
              │    START    │
              └─────────────┘
                     │
                     ▼
┌──────────────────────────────────────────────┐
│ ACQUIRE A FIRST IMAGE FROM THE FIRST IMAGING  │── S10
│ DEVICE, AND ACQUIRE A SECOND IMAGE FROM THE   │
│        SECOND IMAGING DEVICE                   │
└──────────────────────────────────────────────┘
                     │
                     ▼
┌──────────────────────────────────────────────┐
│ PERFORM A PROCESS INCLUDING PLANAR PANORAMA   │── S20
│ IMAGE SYNTHESIS BASED ON THE FIRST AND SECOND │
│     IMAGES TO GENERATE A SYNTHESIZED IMAGE    │
└──────────────────────────────────────────────┘
                     │
                     ▼
┌──────────────────────────────────────────────┐
│ DETECT A CROP ROW OR A RIDGE ON THE GROUND    │── S30
│  SURFACE BASED ON THE SYNTHESIZED IMAGE       │
└──────────────────────────────────────────────┘
                     │
                     ▼
              ┌─────────────┐
              │     END     │
              └─────────────┘
```

*FIG.3A*

*FIG.3B*

*FIG.4*

*FIG.5*

*FIG.6*

*FIG.7*

*FIG.8*

*FIG.9*

FIG.10

*FIG.11*

122

26 COMMUNI-CATOR

28 STORAGE

30

20 PROCESSOR

22 ROM

24 RAM

*FIG.12*

```
                    ┌──────────────┐
                    │    START     │
                    └──────┬───────┘
                           │
                           ▼
    ┌──────────────────────────────────────────────┐       S110
    │  ACQUIRE A FIRST IMAGE FROM THE FIRST IMAGING │
    │  DEVICE, AND ACQUIRE A SECOND IMAGE FROM THE  │
    │            SECOND IMAGING DEVICE              │
    └──────────────────────┬───────────────────────┘
                           │
                           ▼
    ┌──────────────────────────────────────────────┐       S120
    │  PERFORM A PROCESS INCLUDING PLANAR PANORAMA  │
    │ IMAGE SYNTHESIS BASED ON THE FIRST IMAGE AND THE│
    │ SECOND IMAGE TO GENERATE A SYNTHESIZED IMAGE  │
    └──────────────────────┬───────────────────────┘
                           │
                           ▼
    ┌──────────────────────────────────────────────┐       S130
    │   DETECT A CROP ROW ON THE GROUND SURFACE     │
    │        BASED ON THE SYNTHESIZED IMAGE         │
    └──────────────────────┬───────────────────────┘
                           │
                           ▼
    ┌──────────────────────────────────────────────┐       S140
    │        DETERMINE AN APPROXIMATION LINE        │
    │          OF THE DETECTED CROP ROW             │
    └──────────────────────┬───────────────────────┘
                           │
                           ▼
    ┌──────────────────────────────────────────────┐       S150
    │         DETERMINE A TARGET PATH OF            │
    │           THE AGRICULTURAL MACHINE            │
    └──────────────────────┬───────────────────────┘
                           │
                           ▼
                    ┌──────────────┐
                    │     END      │
                    └──────────────┘
```

*FIG.13*

## FIG.14

WEIGHT OF THE
FIRST IMAGE

WEIGHT OF THE
SECOND IMAGE

*FIG.15*

| | ORIGINAL IMAGE | OVERHEAD-VIEW IMAGE (PLAN-VIEW IMAGE) |
|---|---|---|
| FRONT | | |
| REAR | | |

*FIG.16*

## FIG.17

## FIG.18

| | ORIGINAL IMAGE | OVERHEAD-VIEW IMAGE (PLAN-VIEW IMAGE) |
|---|---|---|
| FRONT | | |
| REAR | | |

FIG.19

FIG.20

*FIG.21*

*FIG.22*

*FIG.23*

POSITION OF SCANNING LINES

*FIG.24*

*FIG.25*

TOTAL VALUE OF INDEX VALUES

POSITION OF SCANNING LINES

*FIG.26*

```
                          ┌─────────────┐
                          │    START    │
                          └──────┬──────┘
                                 │
                                 ▼
          ┌──────────────────────────────────────────┐
          │        SET THE DIRECTION (ANGLE) OF       │   S131
          │           THE SCANNING LINES              │
          └──────────────────────┬───────────────────┘
                                 │
                                 ▼
          ┌──────────────────────────────────────────┐
          │      TOTAL THE COLOR INDEX VALUES ON      │   S132
          │            EACH SCANNING LINE             │
          └──────────────────────┬───────────────────┘
                                 │
                                 ▼
          ┌──────────────────────────────────────────┐
          │   DETERMINE THE DIRECTION OF THE SCANNING │   S133
          │   LINES PARALLEL TO THE CROP ROWS BASED ON│
          │   THE RELATIONSHIP BETWEEN THE TOTAL VALUE│
          │   AND THE POSITION OF THE SCANNING LINES  │
          └──────────────────────┬───────────────────┘
                                 │
                                 ▼
          ┌──────────────────────────────────────────┐
          │  DETERMINE THE POSITIONS OF THE EDGE LINES│   S134
          │  OF THE CROP ROW FROM THE PEAK VALUE OF   │
          │  THE TOTAL VALUES BASED ON THE SCANNING   │
          │  LINES PARALLEL TO THE CROP ROWS          │
          └──────────────────────┬───────────────────┘
                                 │
                                 ▼
                          ┌─────────────┐
                          │     END     │
                          └─────────────┘
```

FIG.27

FIG.28

**FIG.29**

## FIG.30

```
      1000      120          122                    124
        ┌──────────┐    ┌──────────┐         ┌──────────────┐
        │ IMAGING  │───▶│PROCESSING│────────▶│  AUTOMATIC   │
        │ DEVICE   │    │ DEVICE   │         │  STEERING    │
        │          │    │          │         │   DEVICE     │
        └──────────┘    └──────────┘         └──────────────┘
```

## FIG.31

```
                        ┌───────────┐
                        │   START   │
                        └───────────┘
                              │
                              ▼
```

ACQUIRE TIME-SERIES IMAGES GENERATED BY THE IMAGING DEVICE — S201

DETERMINE AN INDEX VALUE OF AT LEAST A PORTION OF PIXELS IN THE TIME-SERIES IMAGES, THE INDEX VALUE BEING FOR DISTINGUISHING THE TARGET OF DETECTION (CROP ROW OR RIDGE) FROM THE REMAINING REGION — S202

DIVIDE A PORTION OF, OR THE ENTIRETY OF, THE TIME-SERIES IMAGES OR A PLAN-VIEW IMAGE OBTAINED AS A RESULT OF TRANSFORMATION OF THE TIME-SERIES IMAGES, INTO A PLURALITY OF BAND-LIKE BLOCKS ARRANGED IN THE IMAGE VERTICAL DIRECTION — S203

FOR EACH OF THE PLURALITY OF BLOCKS,
(i) WHILE CHANGING THE DIRECTION OF THE PLURALITY OF SCANNING LINES TO A PLURALITY OF DIRECTIONS, EXECUTE A PROCESS OF DETERMINING A TOTAL VALUE OR AN AVERAGE VALUE OF THE INDEX VALUES ALONG EACH OF THE PLURALITY OF SCANNING LINES PARALLEL TO EACH OTHER, THE PROCESS BEING EXECUTED FOR EACH OF THE PLURALITY OF DIRECTIONS
(ii) BASED ON THE RELATIONSHIP BETWEEN THE POSITION OF THE SCANNING LINES AND THE TOTAL VALUE OR THE AVERAGE VALUE OF THE INDEX VALUES, DETERMINE ONE DIRECTION CORRESPONDING TO THE DIRECTION OF THE CROP ROW OR THE RIDGE AMONG THE PLURALITY OF DIRECTIONS
(iii) BASED ON THE RELATIONSHIP BETWEEN THE POSITION OF THE SCANNING LINES AND THE TOTAL VALUE OR THE AVERAGE VALUE OF THE INDEX VALUES IN THE DETERMINED DIRECTION, DETERMINE THE POSITIONS OF THE EDGE LINES OF THE CROP ROW OR THE RIDGE — S204

DETERMINE AN APPROXIMATION LINE OF THE CROP ROW OR THE RIDGE BASED ON THE DIRECTION AND THE POSITIONS OF THE EDGE LINES DETERMINED FOR EACH OF THE PLURALITY OF BLOCKS — S205

```
                        ┌───────────┐
                        │    END    │
                        └───────────┘
```

*FIG.32*

*FIG.33*

FIG.34

*FIG.35*

*FIG.36*

## FIG.37

```
START
```

ACQUIRE TIME-SERIES COLOR IMAGES GENERATED BY THE IMAGING DEVICE — S211

DETERMINE A COLOR INDEX VALUE OF THE CROP ROW AS A TARGET OF DETECTION FOR AT LEAST A PORTION OF PIXELS OF THE TIME-SERIES COLOR IMAGES TO GENERATE AN ENHANCED IMAGE IN WHICH THE COLOR OF THE CROP ROW IS ENHANCED — S212

GENERATE, FROM THE ENHANCED IMAGE, A PLAN-VIEW IMAGE, AS SEEN FROM ABOVE THE GROUND, IN WHICH THE PIXELS ARE CLASSIFIED INTO FIRST PIXELS EACH HAVING A COLOR INDEX VALUE OF THE CROP ROW THAT IS EQUAL TO, OR HIGHER THAN, A THRESHOLD VALUE, AND SECOND PIXELS EACH HAVING A COLOR INDEX VALUE OF THE CROP ROW THAT IS LOWER THAN THE THRESHOLD VALUE — S213

DIVIDE A PORTION OF, OR THE ENTIRETY OF, THE PLAN-VIEW IMAGE INTO A PLURALITY OF BAND-LIKE BLOCKS ARRANGED IN THE IMAGE VERTICAL DIRECTION — S214

FOR EACH OF THE PLURALITY OF BLOCKS,
(i) WHILE CHANGING THE DIRECTION OF THE PLURALITY OF SCANNING LINES TO A PLURALITY OF DIRECTIONS, EXECUTE A PROCESS OF TOTALING THE INDEX VALUES OF THE FIRST PIXELS ALONG EACH OF THE PLURALITY OF SCANNING LINES TO DETERMINE A TOTAL VALUE, THE PROCESS BEING EXECUTED FOR EACH OF THE PLURALITY OF DIRECTIONS
(ii) BASED ON THE RELATIONSHIP BETWEEN THE POSITION OF THE SCANNING LINES AND THE TOTAL VALUE, DETERMINE ONE DIRECTION CORRESPONDING TO THE DIRECTION OF THE CROP ROW AMONG THE PLURALITY OF DIRECTIONS
(iii) BASED ON THE RELATIONSHIP BETWEEN THE POSITION OF THE SCANNING LINES AND THE TOTAL VALUE IN THE DETERMINED DIRECTION, DETERMINE THE POSITIONS OF THE EDGE LINES OF THE CROP ROW — S215

DETERMINE AN APPROXIMATION LINE OF THE CROP ROW BASED ON THE DIRECTION AND THE POSITIONS OF THE EDGE LINES DETERMINED FOR EACH OF THE PLURALITY OF BLOCKS — S216

```
END
```

*FIG.38*

40

*FIG.39*

42

FIG.40

44

FIG.41

44

49

EP 4 599 655 A1

# FIG.42

# FIG.43

POSITION OF SCANNING LINES

TOTAL VALUE OF INDEX VALUES

73

*FIG.44*

*FIG.45*

TOTAL VALUE OF INDEX VALUES

POSITION OF SCANNING LINES

*FIG.46*

*FIG.47*

TOTAL VALUE OF INDEX VALUES

POSITION OF SCANNING LINES

*FIG.48*

POSITION OF SCANNING LINES

*FIG.49*

FIG.50

*FIG.51*

*FIG.52*

## FIG.53

```
START
```

⬇

S221

ACQUIRE TIME-SERIES IMAGES GENERATED BY THE IMAGING DEVICE

⬇

S222

FROM A PLURALITY OF IMAGES, AMONG THE TIME-SERIES IMAGES, GENERATED AT DIFFERENT TIMES, DETERMINE A FIRST AMOUNT OF MOVEMENT, IN THE IMAGE PLANE, OF EACH OF A PLURALITY OF FEATURE POINTS BY FEATURE POINT MATCHING

⬇

S223

PERFORM PERSPECTIVE PROJECTION OF EACH OF THE PLURALITY OF FEATURE POINTS FROM THE IMAGE PLANE ONTO A REFERENCE PLANE CORRESPONDING TO THE GROUND SURFACE, AND DETERMINE A SECOND AMOUNT OF MOVEMENT OF EACH OF THE PROJECTION POINTS IN THE REFERENCE PLANE, BASED ON THE FIRST AMOUNT OF MOVEMENT

⬇

S224

ESTIMATE, AS THE INDEX VALUE, THE HEIGHT OF EACH OF THE PLURALITY OF FEATURE POINTS FROM THE REFERENCE PLANE BASED ON THE SECOND AMOUNT OF MOVEMENT

⬇

S225

DIVIDE A PORTION OF, OR THE ENTIRETY OF, THE IMAGE INTO A PLURALITY OF BAND-LIKE BLOCKS ARRANGED IN THE IMAGE VERTICAL DIRECTION

⬇

S226

FOR EACH OF THE PLURALITY OF BLOCKS,
(i) WHILE CHANGING THE DIRECTION OF THE PLURALITY OF SCANNING LINES TO A PLURALITY OF DIRECTIONS, EXECUTE A PROCESS OF CALCULATING AN AVERAGE VALUE OF THE INDEX VALUES ALONG EACH OF THE PLURALITY OF SCANNING LINES, THE PROCESS BEING EXECUTED FOR EACH OF THE PLURALITY OF DIRECTIONS
(ii) BASED ON THE RELATIONSHIP BETWEEN THE POSITION OF THE SCANNING LINES AND THE AVERAGE VALUE, DETERMINE ONE DIRECTION CORRESPONDING TO THE DIRECTION OF THE RIDGE AMONG THE PLURALITY OF DIRECTIONS
(iii) BASED ON THE RELATIONSHIP BETWEEN THE POSITION OF THE SCANNING LINES AND THE AVERAGE VALUE IN THE DETERMINED DIRECTION, DETERMINE THE POSITIONS OF THE EDGE LINES OF THE RIDGE

⬇

S227

DETERMINE AN APPROXIMATION LINE OF THE RIDGE BASED ON THE DIRECTION AND THE POSITIONS OF THE EDGE LINES DETERMINED FOR EACH OF THE PLURALITY OF BLOCKS

⬇

```
END
```

FIG.54

*FIG.55*

40(t)

40(t+1)

*FIG.56*

40(t)

40(t+1)

*FIG.57*

*FIG.58*

POSITION OF SCANNING LINES

FIG. 59

FIG. 60

## FIG. 61

## INTERNATIONAL SEARCH REPORT

International application No.

**PCT/JP2023/039198**

| A. | CLASSIFICATION OF SUBJECT MATTER |
|---|---|

*A01B 69/00*(2006.01)i; *G06T 7/00*(2017.01)i
FI:  A01B69/00 303D; A01B69/00 303P; G06T7/00 650Z

According to International Patent Classification (IPC) or to both national classification and IPC

| B. | FIELDS SEARCHED |
|---|---|

Minimum documentation searched (classification system followed by classification symbols)

A01B69/00; G06T7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| Y | JP 2013-201958 A (NATIONAL AGRICULTURE & FOOD RESEARCH ORGANIZATION) 07 October 2013 (2013-10-07)<br>    paragraphs [0016]-[0078] | 1-2, 5-7, 13-16 |
| A | | 3-4, 8-12 |
| Y | JP 2021-7310 A (KUBOTA KK) 28 January 2021 (2021-01-28)<br>    paragraphs [0030]-[0072], fig. 1-8 | 1-2, 5-7, 13-16 |
| A | | 3-4, 8-12 |
| A | JP 2021-175082 A (NTT DOCOMO INC) 01 November 2021 (2021-11-01)<br>    entire text, all drawings | 1-16 |
| A | JP 2016-146061 A (NAT AGRICULTURE & FOOD RES ORGANIZATION) 12 August 2016 (2016-08-12)<br>    entire text, all drawings | 1-16 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| | International application No. |
|---|---|
| | PCT/JP2023/039198 |

**C.    DOCUMENTS CONSIDERED TO BE RELEVANT**

| Category* | Citation of document, with indication, where appropriate, of the relevant passages | Relevant to claim No. |
|---|---|---|
| A | US 2007/0001096 A1 (WEI, Jiantao) 04 January 2007 (2007-01-04)<br>entire text, all drawings | 1-16 |
| A | 岡本博史、端俊一、高井宗宏, 畑作管理ロボットのための作物列センサ, 農業機械学会第58回大会講演要旨, 01 April 1999, vol. 61, no. Supplement, pp. 231-232, internet:<URL: https://www.jstage.jst.go.jp/article/jsam1937/61/Supplement/61_Supplement_231/, (OKAMOTO, Hiroshi. HATA, Shunichi. TAKAI, Munehiro. Visual Sensor for Crop-Row Following Robot.), non-official tranlsation (Lecture abstracts of the 58th conference of JAPANESE SOCIETY of AGRICULTURAL MACHINERY)<br>entire text, all drawings | 1-16 |
| A | 塙圭二、濱田安之、松尾陽介, 農用車両の運転支援用のステレオ画像処理手法の研究, 電気学会論文誌C, 01 April 2007, vol. 127, no. 4, pp. 513-520, internet<URL: https://www.jstage.jst.go.jp/article/ieejeiss/127/4/127_4_513/_article/-char/ja, (HANAWA, Keiji. HAMADA, Yasuyuki. MATSUO, Yosuke. Study of Stereo Vision Processing Methods for Operating Assist of Agricultural Vehicles. IEEJ Transactions on Electronics, Information and Systems.)<br>entire text, all drawings | 1-16 |
| A | 岡本博史、端俊一、高井宗宏, 自動うね合わせのための作物列センサ（第1報）－処理システムの比較と性能評価－, 農業機械学会誌, 01 November 1999, vol. 61, no. 6, pp. 159-167, internet:<URL: https://www.jstage.jst.go.jp/article/jsam1937/61/6/61_6_159/_article/-char/ja, (OKAMOTO, Hiroshi. HATA, Shunichi. TAKAI, Munehiro. Crop-Row Detector for Row-following Control Systems (Part 1) Comparison and Evaluation of Detecting Systems. JOURNAL of the JAPANESE SOCIETY of AGRICULTURAL MACHINERY.)<br>entire text, all drawings | 1-16 |

Form PCT/ISA/210 (second sheet) (July 2022)

**INTERNATIONAL SEARCH REPORT**

| International application No. |
|---|
| **PCT/JP2023/039198** |

**Box No. III    Observations where unity of invention is lacking (Continuation of item 3 of first sheet)**

This International Searching Authority found multiple inventions in this international application, as follows:

Document 1: JP 2013-201958 A (NATIONAL AGRICULTURE & FOOD RESEARCH ORGANIZATION) 07 October 2013 (2013-10-07) paragraphs [0016]-[0078] (Family: none)

(Invention 1) Claims 1-16
Claim 1 has the special technical feature of "comprising: a second image capturing device which is attached to the agricultural machine, captures an image of the ground, and generates a second image of a second region of the ground that partially overlaps with the first region; and a processing device which performs image processing on the first image and the second image, wherein the processing device generates a composite image by means of processing that includes composition of plane panoramic images based on the first image and the second image, and detects crop rows or ridges on the ground on the basis of the composite image."
Claims 2-15 are dependent on claim 1 and inventively related to claim 1, and are thus classified as invention 1.
Also, claim 16 is an invention having a special technical feature identical to the above-described special technical feature and thus classified as invention 1.

(Invention 2) Claims 17-28
Claim 17 shares, with claim 1 classified as invention 1, the common technical feature of a "row detection system provided with: an image capturing device that is attached to an agricultural machine, captures an image of the ground, and generates time-series images that include at least a portion of the ground; and a processing device that performs image processing on the time-series images."
However, said technical feature does not make a contribution over the prior art in light of document 1 and thus cannot be considered a special technical feature.
Also, claim 17 is not dependent on claim 1.
Therefore, claim 17 cannot be classified as invention 1.
Also, claim 17 has the special technical feature in which "the processing device is configured to: calculates an index value for at least some pixels of the time-series images to distinguish between crop row or ridge regions to be detected and other regions, and divides a part or all of the time-series images or a top-view image converted from the time-series images into a plurality of strip-shaped blocks arranged in the vertical direction of the image; perform a process of calculating an integrated value or an average value of the index values along each of the plurality of parallel scanning lines for each of the plurality of blocks, wherein this process is performed in each direction of the plurality of scanning lines while changing the directions; determine one direction corresponding to the direction of the crop row or ridge from among the plurality of directions on the basis of the relationship between the position of the scanning line and the integrated value or average value; determine the position of the edge line of the crop row or ridge on the basis of the relationship between the position of the scanning line in the determined direction and the integrated value or average value; and determine an approximate line of the crop row or ridge on the basis of the direction and the position of the edge line determined for each of the plurality of blocks" and are thus classified as invention 2.
Claims 18-27 are dependent on claim 17 and inventively related to claim 17, and are thus classified as invention 2.
Also, claim 28 is an invention having a special technical feature identical to the above-described special technical feature and thus classified as invention 2.

Form PCT/ISA/210 (continuation of first sheet) (July 2022)

## INTERNATIONAL SEARCH REPORT

| International application No. |
| --- |
| **PCT/JP2023/039198** |

**Box No. III**     **Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-16**

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

INTERNATIONAL SEARCH REPORT
Information on patent family members

International application No.

**PCT/JP2023/039198**

| Patent document cited in search report | | | Publication date (day/month/year) | Patent family member(s) | | | Publication date (day/month/year) |
|---|---|---|---|---|---|---|---|
| JP | 2013-201958 | A | 07 October 2013 | (Family: none) | | | |
| JP | 2021-7310 | A | 28 January 2021 | US<br>paragraphs [0150]-[0206], fig.<br>1-8<br>WO<br>EP<br>CN | 2022/0212602<br><br><br>2020/262508<br>3991542<br>113811179 | A1<br><br><br>A1<br>A1<br>A | |
| JP | 2021-175082 | A | 01 November 2021 | (Family: none) | | | |
| JP | 2016-146061 | A | 12 August 2016 | (Family: none) | | | |
| US | 2007/0001096 | A1 | 04 January 2007 | US<br>entire text, all drawings<br>US<br>US<br>US<br>US<br>EP<br>EP | 2007/0001097<br><br>2007/0003107<br>2007/0005208<br>2007/0014434<br>2012/0101695<br>1738630<br>1738631 | A1<br><br>A1<br>A1<br>A1<br>A1<br>A1<br>A1 | |

Form PCT/ISA/210 (patent family annex) (July 2022)

**EP 4 599 655 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016208871 A
- WO 2023276227 A
- JP 2624390 B
- JP 2016146061 A